# EUROPEAN PATENT APPLICATION

(11) **EP 1 508 866 A1**
(43) Date of publication of application: **23.02.2005**
(21) Application number: 03733141.0
(22) Date of filing: 29.05.2003
(51) Int. Cl.: G06F 17/60

(54) **INFORMATION PROCESSING SYSTEM**

(30) Priority: 29.05.2002 JP 2002156052
(71) Applicant: Sony Corporation, Tokyo 141-0001 (JP)
(72) Inventor: ASAMI, Akiko c/o SONY CORPORATION, Shinagawa-ku, Tokyo 141-0001 (JP); TAKEDA, Takashi c/o SONY CORPORATION, Shinagawa-ku, Tokyo 141-0001 (JP); SUZUKI, Takashi c/o SONY CORPORATION, Shinagawa-ku, Tokyo 141-0001 (JP)
(74) Representative: Melzer, Wolfgang, Dipl.-Ing.
(86) International application number: PCT/JP2003/006726
(87) International publication number: WO 2003/100683

(57) **Abstract**

The present invention relates to an information processing system and method, an information processing device and method, a program storage medium, a program, and an object which are adapted to allow the use of content at any devices while protecting its copyright. A Pochara service server 9 receives, from a personal computer 22, a user ID read from a friend Pochara figure mounted on a platform 23 and then receives a content ID. The Pochara service server 9 determines whether the content ID is registered on a Pochara database 10 in correspondence with the user ID. If the ID is found registered, the Pochara service server 9 reads encrypted content data from the personal computer 22, decodes the content data by a crypto key stored in the Pochara database 10, and supplies the decoded content data to the personal computer 22. The present invention is applicable to personal computers.

## Description

### Technical Field

The present invention relates generally to an information processing system and method, an information processing device and method, a program storage medium, a program, and an object and, more particularly, to an information processing system and method, an information processing device and method, a program storage medium, a program, and an object which are adapted to allow the use of content at any devices while protecting its copyright.

### Background Art

Recently, networks typified by the Internet have been more and more widespread, allowing the distribution of various kinds of content data such as audio data and video data. Each user can record distributed content data to the hard disk of his personal computer and reproduce and output the stored content as required.

Above-mentioned content data is generally encrypted; therefore, the user must get an crypto key for decoding the encrypted content before using it. By use of a crypto key, the user decodes the encrypted content before viewing it.

The above-mentioned crypto key is conventionally stored in a secure device owned by the user (namely, a device that it is difficult for the user to tamper), thereby preventing the crypt key from being used in an unauthorized manner.

Consequently, the user can use content only with devices having secure constructions. This can surely protect the copyright of content.

However, the above-mentioned advantage is obtained at the cost of restricting the device on which the user can use content only to a secure device having a crypto key.

For this reason, the crypto key is designed that it can be moved to another device having a secure construction. This, however, involves a problem that, if the user wants to use content on any desired devices of his own, all his devices must be configured in a secure manner, thereby pushing up their costs.

### Disclosure of Invention

It is therefore an object of the present invention to provide a system in which content can be used on any desired devices while protecting its copyright.

A first information processing system according to the invention allows a first information processing device to use content if an object is mounted on a reading device.

The above-mentioned information processing system further includes: a second information processing device which, connected with the first information processing device via a network, manages the use of the content in correspondence with the identification information; wherein the first information processing device transmits the identification information of the object read by the reading device to the second information processing device via the network, and the second information processing device determines on the basis of the identification information transmitted from the first information processing device whether the use of the content is permitted in correspondence with the identification information and, if the use of the content is found permitted, transmits information for permitting the use of the content to the first information processing device via the network.

The above-mentioned object is a figure.

An information processing method for the first information processing system according to the invention allows the use of content on a first information processing device if an object is mounted on a reading device.

A first information processing device according to the invention, includes: management means for managing the use of content in correspondence with user identification information for identifying a user; reception means for receiving, from another information processing device, user identification information read from an object and content identification information for identifying content; determination means for determining, on the basis of the user identification information and the content identification information received by the reception means whether the use of the content is permitted in correspondence with the user identification information; and transmission means for transmitting information for permitting the use of the content to the information processing device via the network if the use of the content is found permitted by the determination means.

The above-mentioned object is a figure.

The above-mentioned management means further includes an acquisition means for acquiring access information of accessing the content and, on the basis of the access information, accesses the content to acquire the content. The transmission means transmits the content acquired by the acquisition means to another information processing device as information for permitting the use of the content.

A first information processing method according to the invention, includes the steps of: managing the use of content in correspondence with user identification information for identifying a user; receiving, from another information processing device, user identification information for identifying a user read from an object and content identification information for identifying content; determining, on the basis of the user identification information and the content identification information received by the reception step, whether the use of the content is permitted in correspondence with the user identification information; and transmitting information for permitting the use of the content to the other information processing device via the network if the use of the content is found permitted by the determination step.

A first program storage medium stores a computer-readable program according to the invention. The computer-readable program includes the steps of: managing the use of content in correspondence with user identification information for identifying a user; receiving, from another information processing device, user identification information for identifying a user read from an object and content identification information for identifying content; determining, on the basis of the user identification information and the content identification information received by the reception step whether the use of the content is permitted in correspondence with the user identification information; and transmitting information for permitting the use of the content to the information processing device via the network if the use of the content is found permitted by the determination step.

A first program according to the invention makes a computer execute the steps of: managing the use of content in correspondence with user identification information for identifying a user; receiving, from another information processing device, user identification information for identifying a user read from an object and content identification information for identifying content; determining, on the basis of the user identification information and the content identification information received by the reception step whether the use of the content is permitted in correspondence with the user identification information; and transmitting information for permitting the use of the content to the information processing device via the network if the use of the content is found permitted by the determination step.

A second information processing device according to the invention, includes: acquisition means for acquiring, from an object, user identification information for identifying a user; transmission means for transmitting the user identification information acquired by the acquisition means to another information processing device via the network to make another information processing device authenticate the user; request means for making a request to another information processing device for the use of content via the network by attaching content identification information for identifying the content; and reception means for receiving the content from another information processing device via the network if the user is authenticated by another information processing device on the basis of the user identification information transmitted by the transmission means and if the user is found, by another information processing device, having a license for the use of the content on the basis of the content identification information included in the request made by the request means.

The above-mentioned license is stored in the object.

The above-mentioned license is stored in another information processing device.

The above-mentioned second information processing further includes display means for displaying an image corresponding to the user identification information.

The above-mentioned image corresponding to the user identification information is an image corresponding to a shape of the object.

The above-mentioned object is a figure.

The above-mentioned object is a figure corresponding to the content.

The above-mentioned object stores information about content which is usable by the user.

The above-mentioned second information processing device further includes read means for reading the user identification information from the object when the object is mounted on the read means. The acquisition means acquires the user identification information read by the read means.

The above-mentioned read means is arranged independently of the information processing device.

The above-mentioned second information processing device further includes detection means for detecting the removal of the object from the read means. When the removal of the object from the read means is detected by the detection means, the transmission means transmits a signal indicative of the removal to another information processing device via the network.

A second information processing method according to the invention, includes the steps of: acquiring, from an object, user identification information for identifying a user; transmitting the user identification information acquired by the acquisition step to another information processing device via the network to make another information processing device authenticate the user; making a request to another information processing device for the use of content via the network by attaching content identification information for identifying the content; and receiving the content from another information processing device via the network if the user is authenticated by another information processing device on the basis of the user identification information transmitted by the transmission step and if the user is found, by another information processing device, having a license for the use of the content on the basis of the content identification information included in the request made by the request step.

A second program storage medium stores a computer-readable program according to the invention. The computer readable program includes the steps of: acquiring, from an object, user identification information for identifying a user; transmitting the user identification information acquired by the acquisition step to another information processing device via the network to make another information processing device authenticate the user; making a request to another information processing device for the use of content via the network by attaching content identification information for identifying the content; and receiving the content from another information processing device via the network if the user is authenticated by another information processing device on the basis of the user identification information transmitted by the transmission step and if the user is found, by another information processing device, having a license for the use of the content on the basis of the content identification information included in the request made by the request step.

A second program according to the invention makes a computer execute the steps of: acquiring, from an object, user identification information for identifying a user; transmitting the user identification information acquired by the acquisition step to another information processing device via the network to make another information processing device authenticate the user; making a request to another information processing device for the use of content via the network by attaching content identification information for identifying the content; and receiving the content from another information processing device via the network if the user is authenticated by another information processing device on the basis of the user identification information transmitted by the transmission step and if the user is found, by another information processing device, having a license for the use of the content on the basis of the content identification information included in the request made by the request step.

A second information processing system according to the invention has a first information processing device including: storage means for storing agent information including information about the existence of an agent; and control means for controlling the use of the content in the second information processing device on the basis of the agent information stored in the storage means; and a second information processing device including: access means for accessing the first information processing device via the network; reception means for receiving a determination result for accessing by the access means made on the basis of the agent information; and display control means for not displaying a character representative of the agent or displaying absence of the character if the determination result received by the reception means indicates that the content cannot be used because of absence of the agent.

In an information processing method for the second information processing system according to the invention, the first information processing device stores agent information including information about the existence of an agent and the second information processing device accesses the first information processing device via the network. The first information processing device determines on the basis of the stored agent information whether the content can be used by the second information processing device and transmits a determination result to the second information processing device. The second information processing device receives from the first information processing device the determination result for the access made on the basis of the agent information. The second information processing device does not display a character representative of the agent or displays absence of the character if the determination result received by the reception means indicates that the content cannot be used because of absence of the agent.

The above-mentioned storage means further stores key information for encrypted content which is obtained by encrypting the content, wherein, if the agent information stored in the storage means indicates absence of the agent, the control means disables the transmission of the key information to another information processing device.

The above-mentioned information processing device further includes acquisition means for acquiring access information for accessing the content and accessing the content on the basis of the access information to acquire the content; wherein the control means transmits the content acquired by the acquisition means to another information processing device.

The above-mentioned storage means further stores access information for accessing the content stored in another information processing device and the control means transmits the access information to another information processing device.

The above-mentioned storage means further stores key information for encrypted content obtained by encrypting the content and the control means disables the decoding of the encrypted content on the basis of the key information if the agent information stored in the storage means indicates the absence of the agent.

The above-mentioned control means disables the transmission of the content to another information processing device if the agent information stored in the storage means indicates the absence of the agent.

The above-mentioned information processing device further includes reception means for receiving identification information for identifying a user from another information processing device; and determination means for determining on the basis of the identification information whether the use of the content in another information processing device is permitted; wherein the control means disables the use of the key information if the use of the content is found not permitted by the determination means.

A third information processing method according to the invention, includes the steps of: storing agent information including information about the existence of a agent; and controlling the use of the content in another information processing device on the basis of the stored agent information.

A third program storage medium stores a computer-readable program according to the invention. The computer-readable program includes the steps of: storing agent information including information about the existence of a agent; and controlling the use of the content in another information processing device on the basis of the agent information stored by processing of the storage step.

A third program according to the invention makes a computer execute the steps of: storing agent information including information about the existence of a agent; and controlling the use of the content in another information processing device on the basis of the agent information stored by processing of the storage step.

A fourth information processing device according to the invention, includes: access means for accessing any of the other information processing devices via a network; reception means for receiving, from any of the other information processing devices, a determination result for access by the access means on the basis of the agent information; and display control means for not displaying a character representative of the agent or displaying the absence thereof if the determination result received by the reception means indicates that the content cannot be used because of the absence of the agent.

The above-mentioned display control means displays a character representative of the agent if the determination result received by the reception means indicates that the content can be used because the agent exists. The information processing device further includes transmission means for transmitting update information to any of the other information processing devices to update information about the existence of the agent in any of the other information processing devices if the determination result received by the reception means indicates that the content can be used because the agent exists.

The above-mentioned reception means further receives key information for encrypted content obtained by encrypting the content. The information processing device further includes storage means for storing the encrypted content and decryption means for decoding the encrypted content by use of the key information.

The above-mentioned reception means receives key information for encrypted content obtained by encrypting the content from first another information processing device of the other information processing devices and receives the encrypted content from second another information processing device of the other information processing devices. The information processing device further includes decryption means for decoding the encrypted content by use of the key information.

A fourth information processing method according to the invention, includes the steps of: accessing another information processing device via the network; receiving, from another information processing device, a determination result for access by the access step on the basis of the agent information; and not displaying a character representative of the agent or displaying the absence thereof if the determination result received by the reception step indicates that the content cannot be used because of the absence of the agent.

A fourth program storage medium stores a computer-readable program according to the invention. The computer-readable program includes the steps of: accessing another information processing device via the network; receiving, from another information processing device, a determination result for access by the access step on the basis of the agent information; and not displaying a character representative of the agent or displaying the absence thereof if the determination result received by the reception step indicates that the content cannot be used because of the absence of the agent.

A fourth program makes a computer execute the steps of: accessing another information processing device via the network; receiving, from another information processing device, a determination result for access by the access step on the basis of the agent information; and not displaying a character representative of the agent or displaying the absence thereof if the determination result received by the reception step indicates that the content cannot be used because of the absence of the agent.

An object according to the invention for use in using content by an information processing device, has a memory for storing information necessary for enabling the use of the content and a shape associated with the content.

The above-mentioned object is a figure associated with the content and the memory stores the number of pieces of content which can be acquired by the object.

The above-mentioned information necessary for enabling the use of the content includes a license for reproducing the content.

If the information necessary for enabling the use of the content is read by a reading device arranged in correspondence with the information processing device, the content can be used by the information processing device.

In the first information processing system and its information processing method according to the invention, the above-mentioned content can be used in the first information processing device when the above-mentioned object is mounted on the reading device.

In the first information processing device and the first information processing method, the first program storage medium, and the first program according to the invention, when content identification information is received from another information processing device, it is determine, on the basis of the received content identification information, whether to permit the use of content and, if the use of content is found permitted, the information for enabling the use of content is transmitted to the above-mentioned another information processing device.

In the second information processing device and the second information processing method, the second program storage medium, and the second program according to the invention, user identification information stored in an object is acquired and transmitted to another information processing device. A request is transmitted to this another information processing devices along with content identification information. If this another information processing device authenticates the user and the user is found having a license for the use of content, the content transmitted this another information processing device is received over the network.

In the second information system and its information processing method according to the invention, the first information processing device controls the use of content in the second information processing device on the basis of stored agent information. The second information processing device receives, from the first information processing device, a determination result for access. If the determination result indicates that the content cannot be used because of the absence of the agent, a character representative of the agent is not displayed or the absence is displayed.

In the third information processing device and the third information processing method, the third program storage medium, and the third program according to the invention, agent information including information associated with the existence of an agent is stored. On the basis of this agent information, the use of content in another information processing device is controlled.

In the fourth information processing device and the fourth information processing method, the fourth program storage medium, and the fourth program according to the invention, a determination result for access is received from another information processing device. If the received determination result indicates that the content cannot be used because of the absence of an agent, a character representative of the agent is not displayed or the absence is displayed.

In the object according to the invention, identification information necessary for using content is stored in a memory and the shape of the object is a shape associated with the content.

### Brief Description of Drawings

FIG. 1 is a block diagram illustrating an exemplary configuration of an information processing system to which the present invention is applied;
FIG. 2 is a block diagram illustrating an exemplary configuration of a Pochara service server shown in FIG. 1;
FIG. 3 is a block diagram illustrating an exemplary configuration of a personal computer shown in FIG. 1;
FIG. 4 shows an exemplary friend Pochara figure;
FIG. 5 is a block diagram illustrating an internal configuration of the friend Pochara figure;
FIG. 6 shows the information stored in an IC chip shown in FIG. 5;
FIG. 7 is a flowchart indicative of the processing by the user for getting a friend Pochara figure;
FIG. 8 shows exemplary friend Pochara figures;
FIG. 9 is a flowchart indicative of the friend Pochara sale processing by the Pochara service server shown in FIG. 1;
FIG. 10 shows an exemplary sale Pochara figure;
FIG. 11 shows exemplary information stored in the IC chip of each sale Pochara figure;
FIG. 12 is a flowchart indicative of the Pochara processing by the personal computer shown in FIG. 1;
FIG. 13 is another flowchart indicative of the Pochara processing by the personal computer shown in FIG. 1;
FIG. 14 is still another flowchart indicative of the Pochara processing by the personal computer shown in FIG. 1;
FIG. 15 is yet another flowchart indicative of the Pochara processing by the personal computer shown in FIG. 1;
FIG. 16 is a different flowchart indicative of the Pochara processing by the personal computer shown in FIG. 1;
FIG. 17 shows the bag information of a friend Pochara;
FIG. 18 shows the bag information of a sale Pochara;
FIG. 19 shows an exemplary display of Pochara;
FIG. 20 shows an exemplary display of Pochara;
FIG. 21 shows an exemplary display of Pochara which is displayed when a mail function is selected;
FIG. 22 shows another exemplary display of Pochara which is displayed when the mail function is selected;
FIG. 23 shows an exemplary display of Pochara which is displayed when a schedule function is selected;
FIG. 24 shows another exemplary display of Pochara which is displayed when the schedule function is selected;
FIG. 25 shows an exemplary display of Pochara which is displayed when a change cloths function is selected;
FIG. 26 shows another exemplary display of Pochara;
FIG. 27 shows still another exemplary display of Pochara;
FIG. 28 is a flowchart indicative of the processing by the Pochara service server shown in FIG. 1;
FIG. 29 is another flowchart indicative of the processing by the Pochara service server shown in FIG. 1;
FIG. 30 shows exemplary user information registered with a Pochara database shown in FIG. 1;
FIG. 31 shows exemplary Pochara information of friend Pochara registered with the Pochara database shown in FIG. 1;
FIG. 32 shows exemplary Pochara information of sale Pochara registered with the Pochara database shown in FIG. 1;
FIG. 33 is a flowchart indicative of the processing by a content server shown in FIG. 1;
FIG. 34 is a flowchart indicative of the content reception processing by the personal computer shown in FIG. 1;
FIG. 35 is a flowchart indicative of the content provision processing by the content server shown in FIG. 1;
FIG. 36 is a flowchart indicative of the processing by the Pochara service server shown in FIG. 1;
FIG. 37 is a flowchart indicative of the license acquisition processing by the personal computer shown in FIG. 1;
FIG. 38 is a flowchart indicative of the processing by the Pochara service server shown in FIG. 1;
FIG. 39 is a flowchart indicative of the processing by a license server shown in FIG. 1;
FIG. 40 is a flowchart indicative of the content reproduction processing by the personal computer shown in FIG. 1;
FIG. 41 is a flowchart indicative of the content reproduction processing by the Pochara service server shown in FIG. 1;
FIG. 42 is a flowchart indicative of the prepaid amount update processing by the personal computer shown in FIG. 1;
FIG. 43 is a flowchart indicative of the prepaid amount update processing by the Pochara service server shown in FIG. 1;
FIG. 44 is a flowchart indicative of the processing of reproducing the content stored in a terminal;
FIG. 45 is a flowchart indicative of the processing by the Pochara service server when reproducing the content stored in a terminal;
FIG. 46 is a flowchart indicative of the reproduction processing by a terminal to which content is provided from another terminal;
FIG. 47 is a flowchart indicative of the content provision processing by a terminal;
FIG. 48 is a flowchart indicative of the processing by the Pochara service server when reproducing the content stored in a terminal;
FIG. 49 is a flowchart indicative of the processing of copying encrypted content;
FIG. 50 is a flowchart indicative of the processing by the copy source;
FIG. 51 is a flowchart indicative of the processing by the copy destination;
FIG. 52 is a schematic diagram illustrating a configuration of services which provide content by use of sale Pochara;
FIG. 53 is a flowchart indicative of the processing of acquiring the authentication and initial data of sale Pochara;
FIG. 54 is a flowchart indicative of authentication request processing;
FIG. 55 is a flowchart indicative of authentication processing;
FIG. 56 is a flowchart indicative of initial data acquisition processing;
FIG. 57 shows an information example which is stored in the IC chip of sale Pochara;
FIG. 58 is a flowchart indicative of initial data transmission processing;
FIG. 59 shows a display example of a screen which is displayed at initial data acquisition;
FIG. 60 is a flowchart indicative of the processing of downloading content by use of sale Pochara;
FIG. 61 is a flowchart indicative of content transmission processing;
FIG. 62 shows a database example which is stored in a content server;
FIG. 63 shows a database example which is stored in a content server;
FIG. 64 is a flowchart indicative of download processing;
FIG. 65 shows a display example of a screen which is displayed at download processing;
FIG. 66 shows a display example of a download list screen;
FIG. 67 is a flowchart indicative of content transmission processing;
FIG. 68 is a flowchart indicative of download content transmission processing;
FIG. 69 shows a data example which configures content to be stored in a content server;
FIG. 70 is a flowchart indicative of preview content transmission processing;
FIG. 71 is a flowchart indicative of the processing of content reproduction by use of sale Pochara;
FIG. 72 is a flowchart indicative of list display processing;
FIG. 73 shows a display example of a screen which is displayed at list display processing;
FIG. 74 shows a display example of a reproduction list screen;
FIG. 75 is a flowchart indicative of license request processing;
FIG. 76 is a flowchart indicative of license transmission processing;
FIG. 77 is a flowchart indicative of license reproduction processing; and
FIG. 78 shows a display screen example which is displayed in license reproduction processing.

### Best Mode for Carrying Out the Invention

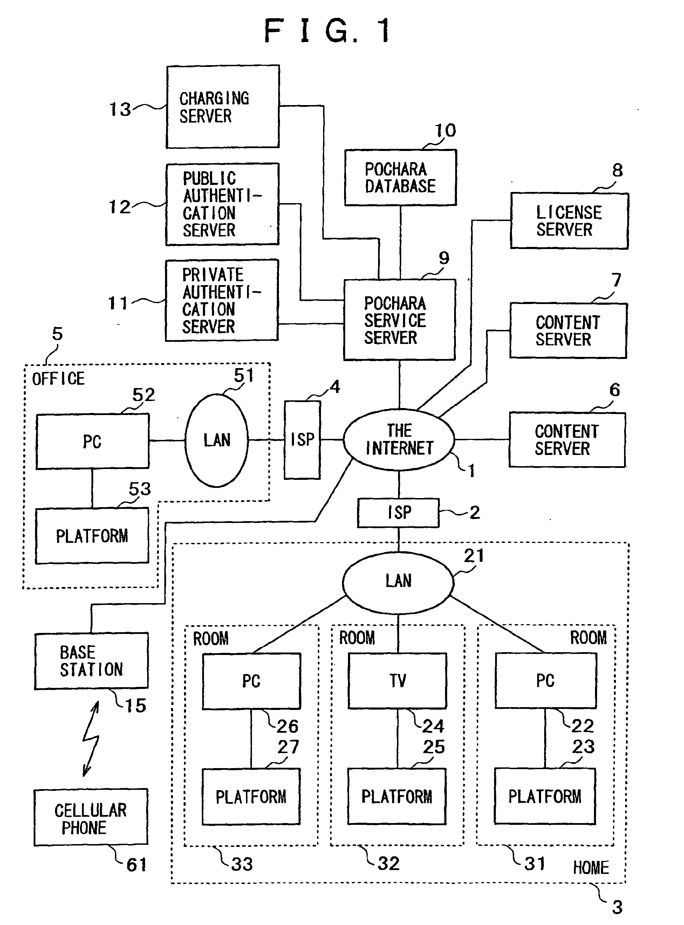

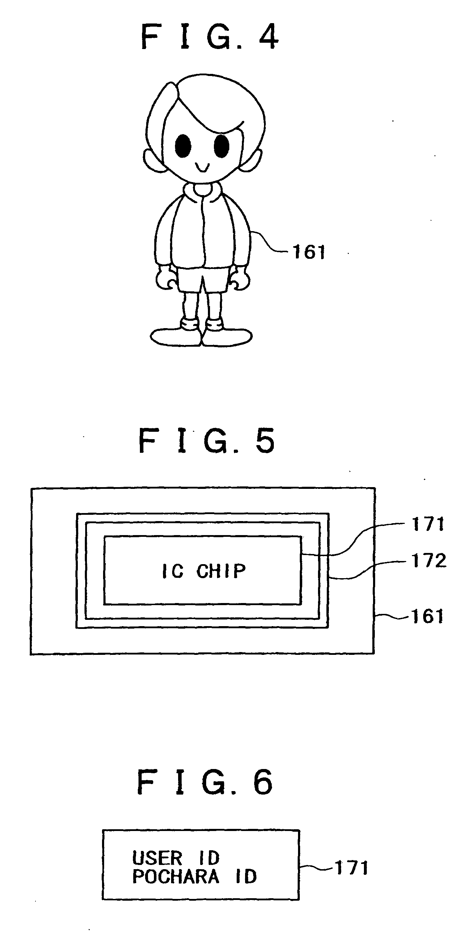

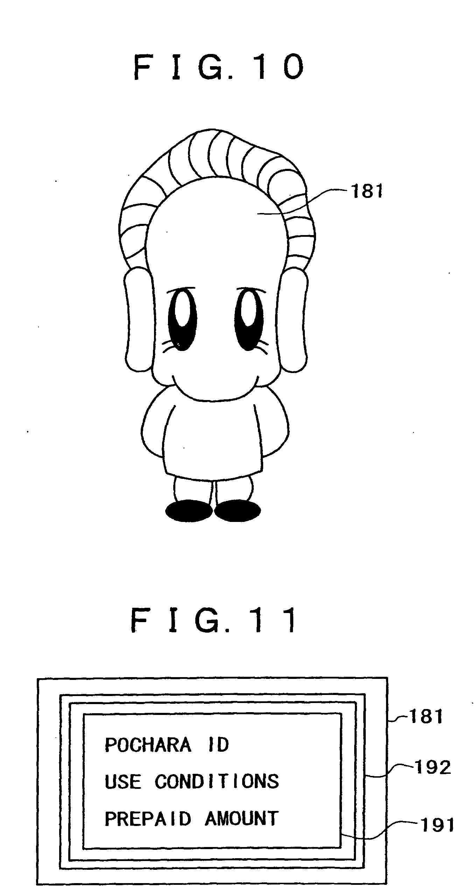

Now, referring to FIG. 1, there is shown an exemplary configuration of an information processing system practiced to which the present invention is applied. In this exemplary configuration, a LAN (Local Area Network) 21 of a home 3 is connected to the Internet 1 via an Internet service provider (ISP) 2. Devices in a room 31 through a room 33 are connected to the LAN 21. In this example, a personal computer (PC) 22 is connected to the LAN 21 in the room 31 and platform 23 on which a friend Pochara (trademark) figure 161 (FIG. 4) or a sale Pochara (trademark) figure 181 (FIG. 10) is mounted is connected to the personal computer 22.

It should be noted that the LAN 21 is configured by the user or the wireless communication. In the wireless configuration, a scheme specified by IEEE (Institute of Electrical and Electronic Engineers) 802.11a, b, or g, UWB (Ultra Wide Band), or Bluetooth, for example may be used. In the wired configuration, a scheme specified by USB (Universal Serial Bus) or other standards may be used.

In the room 32, a television receiver (TV) 24 is connected to the LAN 21 and a platform 25 is connected to the television receiver 24. In the room 33, a personal computer 26 is connected to the LAN 21 and a platform 27 is connected to the personal computer 26.

A LAN 51 of an office 5 is also connected to the Internet 1. A personal computer 52 is connected to the LAN 51 and a platform 53 is connected to the personal computer 52.

A content server 6 for providing the content data corresponding to a sale Pochara figure 181 (FIG. 10) is also connected to the Internet 1. A content server 7 connected to the Internet 1 provides the content data corresponding to a friend Pochara figure 161 (FIG. 4). A license server 8 connected to the Internet 1 provides the license corresponding to the content supplied from the content server 7.

Further, a Pochara (trademark) service server 9 is connected to the Internet 1. The Pochara service server 9 provides various services corresponding to the friend Pochara figure 161 or the sale Pochara figure 181.

A Pochara database 10 storing various kinds of information associated with Pochara is connected to the Pochara service server 9. The Pochara service server 9 is also connected with a private authentication server 11 for authenticating the friend Pochara figure 161 and a public authentication server 12 for authenticating the sale Pochara figure 181 as well as an charging server 13 for executing various kinds of charging processing. One or more of the Pochara database 10, the private authentication server 11, the public authentication server 12, and the charging server 13 may be integrated with the Pochara service server 9 on an as required basis.

Moreover, in the system shown in FIG. 1, a cellular phone 61 is connected to the Internet 1 via a nearby base station 15.

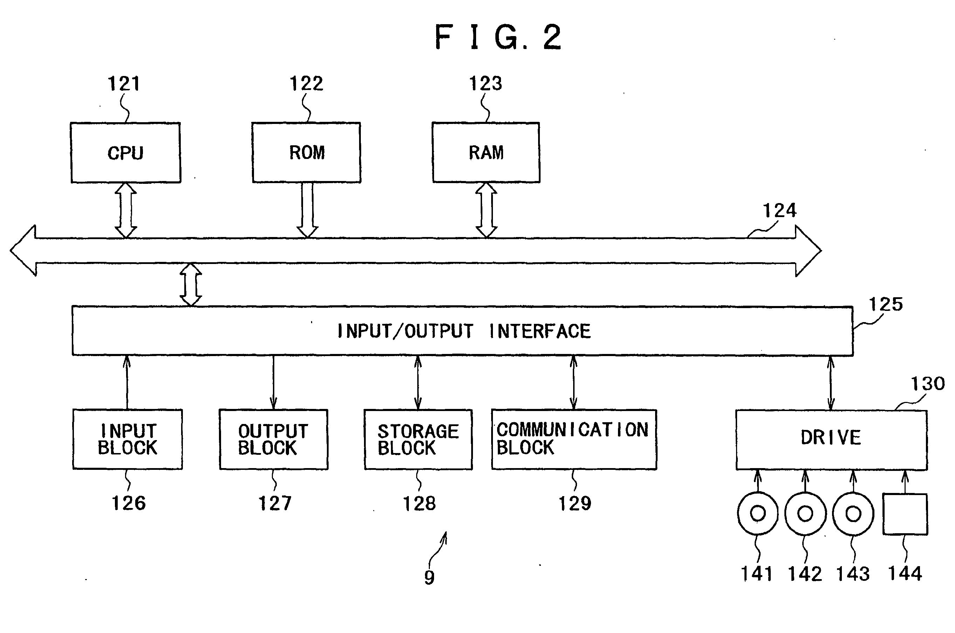

The Pochara service server 9 is configured as shown in FIG. 2, for example.

Referring to FIG. 2, a CPU (Central Processing Unit) 121 executes various kinds of processing as instructed by programs stored in a ROM (Read Only Memory) 122 or programs loaded from a storage block 128 into a RAM (Random Access Memory) 123. The RAM 123 also stores, from time to time, data which is necessary for the CPU 121 to execute various kinds of processing.

The CPU 121, the ROM 122, and the RAM 123 are interconnected via a bus 124. The bus 124 is also connected with an input/output interface 125.

The input/output interface 125 is connected with an input block 126 based on a keyboard and a mouse for example, a display (display block) based on a CRT (Cathode Ray Tube) or LCD (Liquid Crystal Display) for example, and an output block 127 based on a speaker for example, the storage block 128 based on a hard disk drive, and a communication block 129 based on a modem or a terminal adapter for example. The communication block 129 executes communication processing via networks including the Internet 1.

The input/output interface 125 is also connected with a drive 130 on which a magnetic disk 141, an optical disk 142, a magneto-optical disk 143, or a semiconductor memory 144 is loaded as required. Further computer programs read from these recording media are installed in the storage block 128 as required.

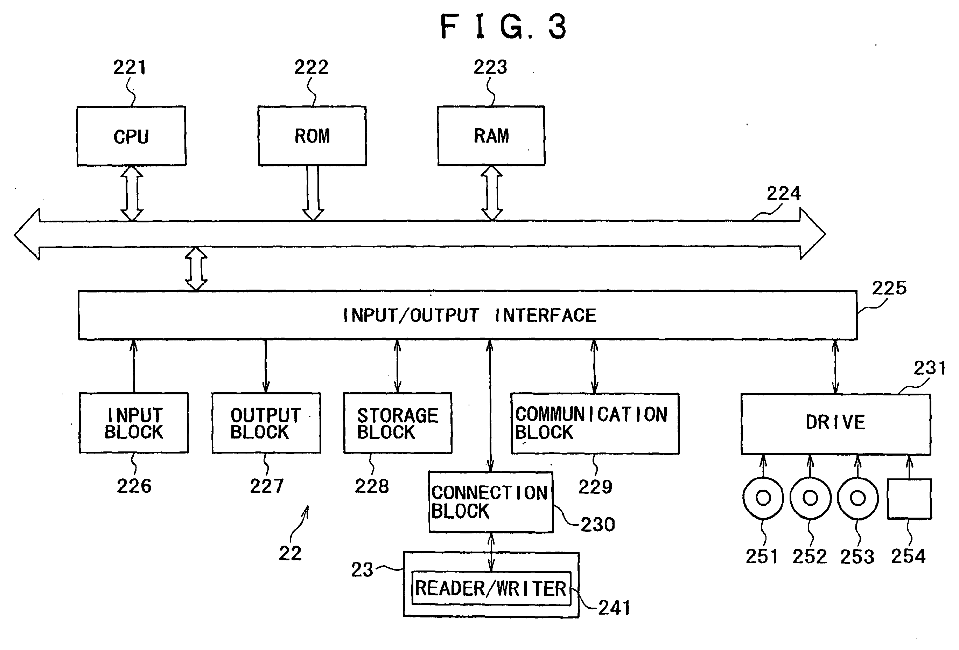

The personal computer 22 is configured as shown in FIG. 3 for example. The basic configuration is the same as that of the Pochara service server 9 shown in FIG. 2. Namely, components CPU 221 through communication block 229 of the personal computer 22 have basically the same functions as those of the components CPU 121 through communication block 129 of the Pochara service server 9 respectively.

An input/output interface 225 of the personal computer 22 shown in FIG. 3 is connected with a connection block 230 to which the platform 23 is connected. As shown in FIG. 3, the a reader/writer 41 is incorporated in the platform 23 to read information from a Pochara figure mounted on the platform 23, in an electromagnetic induction, non-contact manner.

The input/output interface 225 is connected with a drive 231 as required, on which a magnetic disk 251, an optical disk 252, a magneto-optical disk 253, or a semiconductor memory 254 is loaded as required. Computer programs read from these recording media are installed in a storage block 228 as required.

In this information processing system (the information providing system), each user purchases the friend Pochara figure 161 as shown in FIG. 4 in advance in order to authenticate himself/herself. The friend Pochara figure 161 incorporates an IC chip 171 having an antenna 172. The IC chip 171 stores a user ID which is user identification information for identifying the user owning the friend Pochara figure 161 and a Pochara ID which is Pochara figure identification information for identifying the friend Pochara figure 161.

It should be noted that the user ID may integrate the Pochara ID.

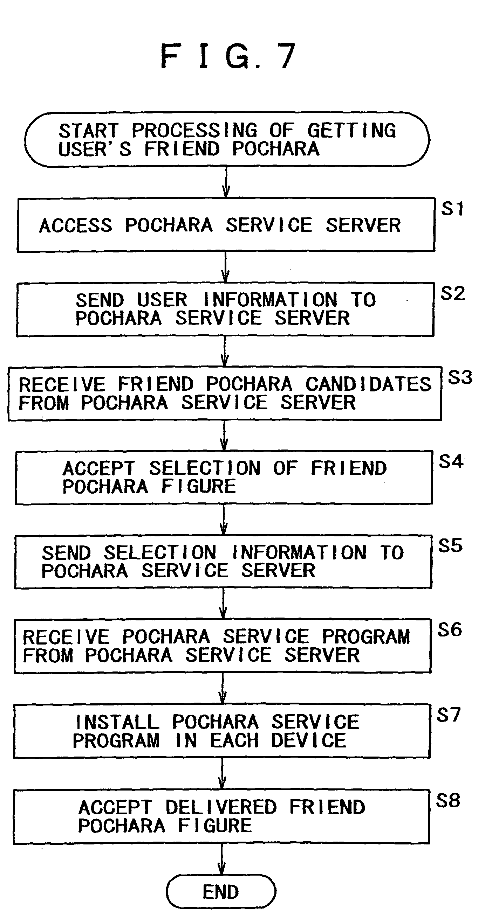

The following describes the processing by the user for getting the friend Pochara figure 161 with reference to the flowchart shown in FIG. 7.

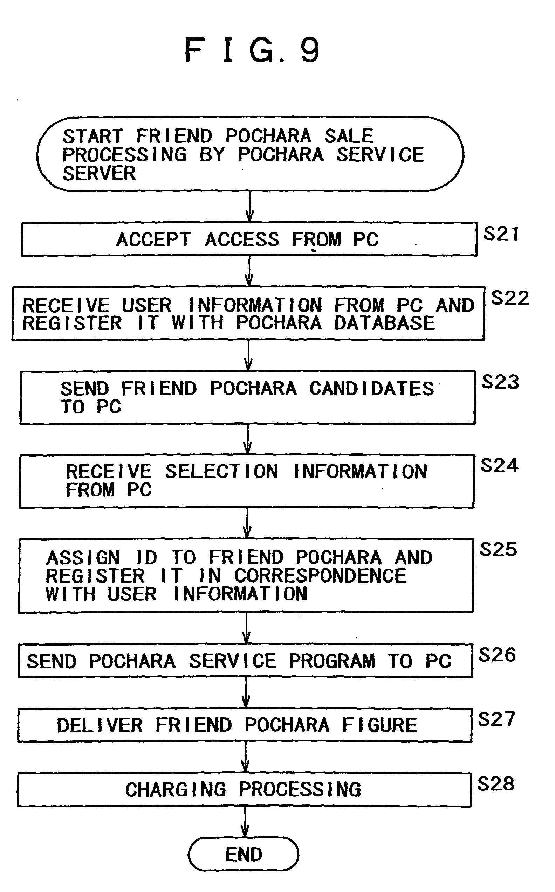

The user of the personal computer 22 operates the input block 226 to instruct the CPU 221 to access the Pochara service server 9. Upon receiving the access instruction, the CPU 221 controls the communication block 229 to access the Pochara service server 9 via the LAN 21, the ISP 2, and the Internet 1 in step S1. The Pochara service server 9 provides a GUI (Graphical User Interface) which is used to enter user information to the accessing personal computer 22 via the Internet 1 (step S21 shown in FIG. 9 to be described later). In response, the user enters user's name, address, birthday, gender, telephone number, facsimile number, mail address, credit card number, bank account number, and other personal information through the input block 226. In step S2, the CPU 221 sends the entered user information to the Pochara service server 9 from the communication block 229 via the Internet 1. It should be noted that the communication between the personal computer 22 (and other terminals) and the Pochara service server 9 is encrypted as required.

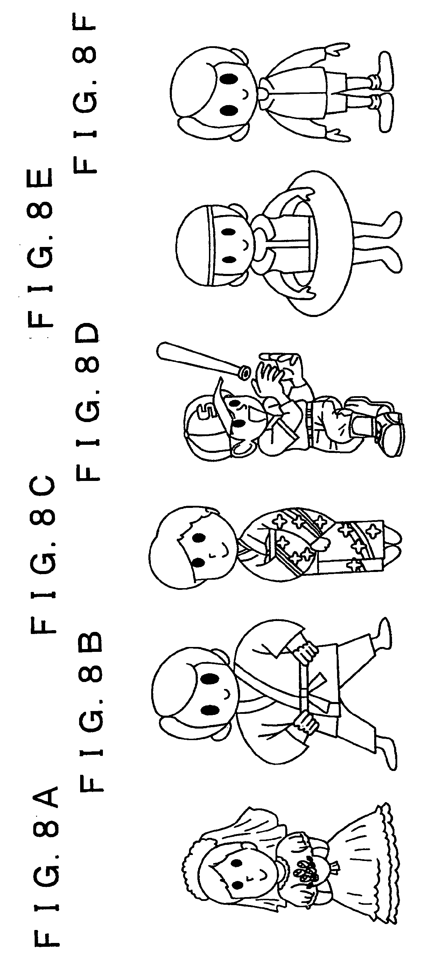

At this moment, the Pochara service server 9 sends candidates (a list) of friend Pochara figures to the personal computer 22 (step S23 shown in FIG. 9). In response, receiving the candidates of friend Pochara figures from the Pochara service server 9 via the communication block 229, the CPU 221 outputs the candidates to the display block of an output block 227 in step S3. Consequently, the candidates of friend Pochara figures as shown in FIG. 8 for example are displayed. FIG. 8 shows six kinds of friend Pochara figures A through F. The friend Pochara figure 161 shown in FIG. 4 corresponds to FIG. 8F.

The user selects through the input block 226 a desired friend Pochara figure from among those displayed. In step S4, the CPU 221 accepts the selection of the specified friend Pochara figure.

In step S5, the CPU 221 sends the selection information of the friend Pochara figure accepted in step S4 to the Pochara service server 9.

Receiving the selection information from the personal computer 22, the Pochara service server 9 a computer program for executing Pochara services including the data of the friend Pochara corresponding to the selected friend Pochara figure (step S26 shown in FIG. 9).

In step S6, the CPU 221 of the personal computer 22 receives the computer program from the Pochara service server 9 and stores the received computer program into the storage block 228. This program includes the data (the data about the friend Pochara) necessary for displaying the friend Pochara (a virtual figure displayed in animation corresponding to the real friend Pochara figure, hereafter also referred to as a character) corresponding to the selected friend Pochara figure onto the display block of the output block 227.

This friend Pochara character is represented in the same image as the corresponding friend Pochara figure. In other words, the friend Pochara figure has the same shape (including colors and other attributes) as the friend Pochara which is a virtual figure displayed on the display block of the output block 227.

For example, the friend Pochara figure 161 shown in FIG. 4 corresponds to the friend Pochara character shown in FIG. 8F.

The user installs the program received in the process of step S6 into other devices which use the services provided by the Pochara service server 9. In the example shown in FIG. 1, this program is installed in the television receiver 24 and the personal computer 26. This program is also installed in the personal computer 52 of the office 5.

The television receiver 24 has a loading block on which a semiconductor memory typified by the Memory Stick (trademark) for example is loaded. By storing the program in a Memory Stick through the personal computer 22 for example and loading this Memory Stick on the television receiver 24, the user can install the program in the television receiver 24.

Then, the Pochara service server 9 delivers the friend Pochara figure selected by the user in step S4 (step S27 shown in FIG. 9), so that the user receives the figure from the Pochara service server 9 in step S8.

In response to the above-mentioned processing by the personal computer 22 shown in FIG. 7, the Pochara service server 9 executes the processing indicated by the flowchart shown in FIG. 9.

To be more specific, in step S21, the CPU 121 of the Pochara service server 9 accepts, through the communication block 129, the access by the user of the personal computer 22 via the Internet 1 and then provides a GUI for user information entry to the accessing personal computer 22 via the Internet 1.

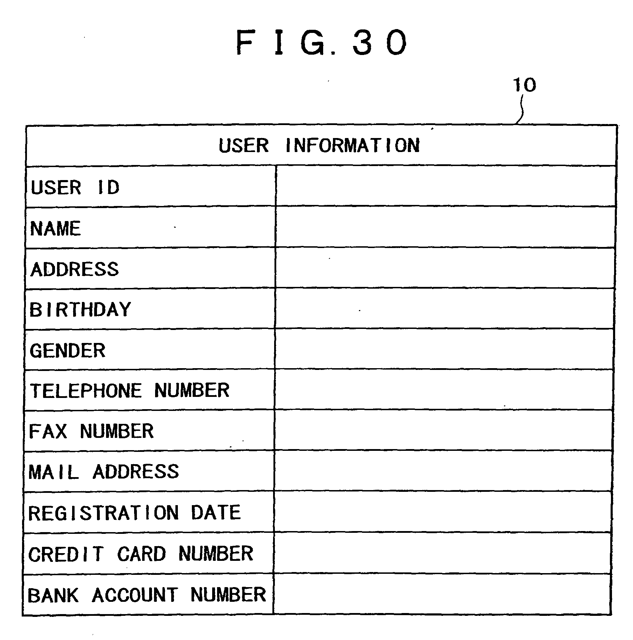

As described above, the user sends the user information on the basis of this GUI (step S2 shown in FIG. 7). In step S22, the CPU 121 of the Pochara service server 9 receives the user information from the personal computer 22 and supplies the received user information to the Pochara database 10 via the communication block 129, registering the user information thereon. Consequently, the user information is registered on the Pochara database 10 (details thereof will be described later with reference to FIG. 30).

Next, in step S23, the CPU 121 reads the candidates of the friend Pochara figure from the storage block 128 and sends them to the personal computer 22. Consequently, the friend Pochara figure candidates as shown in FIG. 8 are sent to the personal computer 22.

As described above, the user selects one of the received friend Pochara figure candidates and sends the selection information thereof (step S5 shown in FIG. 7).

In step S25, the CPU 121 allocates, to the user, a user ID which is the identification information for identifying the user. Also, the CPU 121 allocates a Pochara ID to the friend Pochara figure selected by the user and registers the allocated Pochara ID on the Pochara database 10 as the Pochara information in correspondence with the user information. In addition to the Pochara ID, this Pochara information includes a flag indicative whether this Pochara is a friend Pochara (a friend Pochara flag) or a parameter of this Pochara. This parameter represents a cloth of this Pochara or a function of this Pochara. It should be noted that the friend Pochara flag may be included in the Pochara ID to be allocated to the friend Pochara figure 161.

Next, in step S26, the CPU 121 reads the program from the storage block 128 for the user to accept the Pochara service and sends the program to the personal computer 22 via the Internet 1. At this moment, the CPU 121 sends the user ID and the Pochara information necessary for displaying the character of this friend Pochara as included in the program. In addition to the Pochara ID, this Pochara information includes the Pochara data including various parameters on which Pochara images are based. This program is received by the personal computer 22 (step S6 shown in FIG. 7).

In step S27, the CPU 121 executes the processing for delivering the friend Pochara figure corresponding to the selection information received in step S24. To be more specific, the CPU 121 outputs the information (the Pochara ID) for identifying the friend Pochara figure selected by the user and the address and name for example of that user from a printer which is a component of the output block 127. On the basis of the output of the printer, the manager of the Pochara service server 9 executes procedures for delivering a predetermined friend Pochara image to the user.

In step S28, the CPU 121 executes the charging processing for the value of the friend Pochara figure delivered to the user.

To be more specific, the CPU 121 requests the charging server 13 for the settlement of the price corresponding to the value of the friend Pochara figure on the basis of the credit card number included in the user information. Alternatively, the CPU 121 requests the charging server 13 to charge the price to the bank account, the account number included in the user information. In response to this request, the charging server 13 requests the credit card company or the bank of the user to execute the processing of charging the price of the friend Pochara figure.

The user gets the friend Pochara figure 161 as described above. It is also practicable for the user to get the friend Pochara figure 161 at a store managed by the manager of the Pochara service server 9. In this case, the user information is directly entered by the user at the store.

In the above-mentioned configuration, the user first accesses the Pochara service server 9 from the personal computer 22, sends the necessary user information, and then receives a desired friend Pochara figure; in other words, the user gets a desired friend Pochara figure after making user registration. It is also practicable for the user to make user registration via a network after purchasing a desired friend Pochara figure which stores on the Pochara ID. The friend Pochara figure thus purchased will then function as an agent for the user.

In addition to the friend Pochara figure 161, the above-mentioned store sells a sale Pochara figure 181 as shown in FIG. 10. The user can purchase the sale Pochara figure 181 at various stores as required. The sale Pochara figure 181 also incorporates an IC chip 191. The IC chip 191 stores the information about the functions of the sale Pochara figure 181.

FIG. 11 shows an example of the information stored in the IC chip 191 when the sale Pochara figure 181 has the function of providing content data. In this example, the Pochara ID and the use condition specifying the use of content are stored in the IC chip 191 having an antenna 192. This use condition includes the number of times content can be reproduced and the period in which content can be reproduced.

In addition, the IC chip 191 stores, as required, a prepaid amount corresponding to the amount (the purchase amount) paid by the user for the use of content.

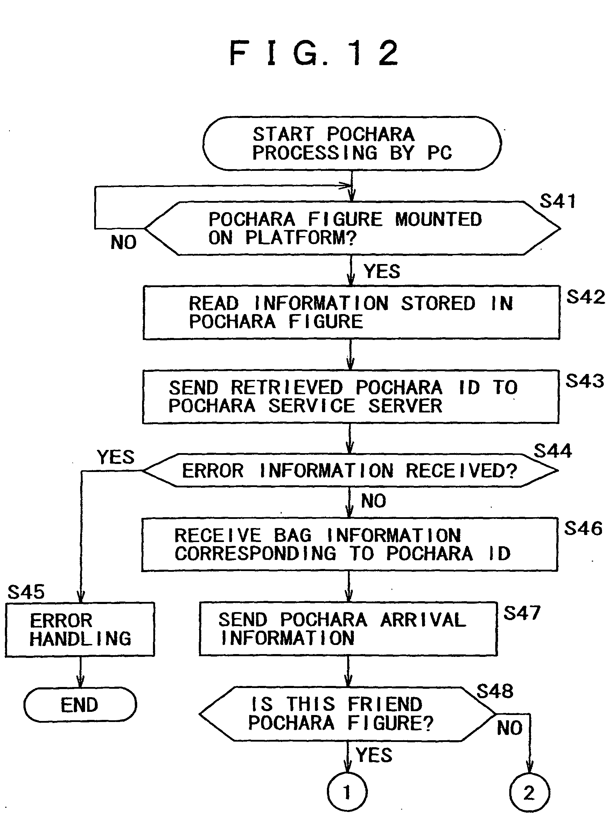

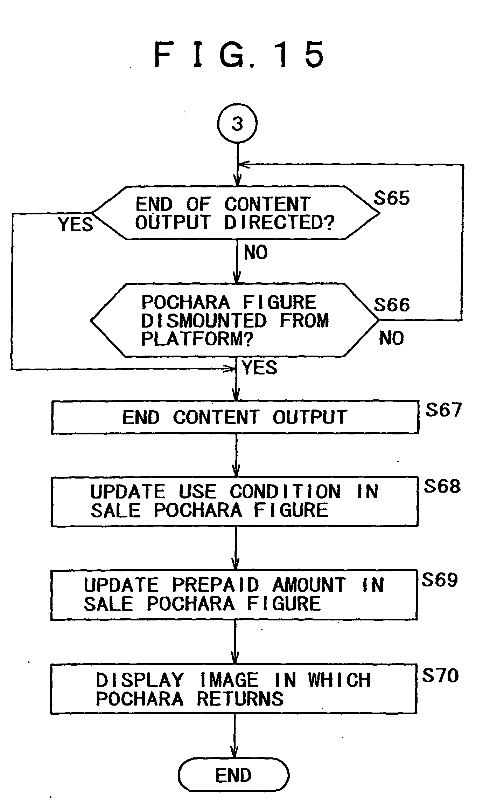

The user gets the friend Pochara figure 161 or the sale Pochara figure 181 as described above and, if user wants to get the provision of content, mounts the friend Pochara figure 161 or the sale Pochara figure 181 on the platform corresponding to a device to be used. For example, if the personal computer 22 is used, the user mounts the friend Pochara figure 161 or the sale Pochara figure 181 on the platform 23 connected to the personal computer 22. In this case, the personal computer 22 executes the processing indicated by the flowcharts shown in FIGS. 12 through 16.

In step S41, the CPU 221 of the personal computer 22 determines whether the Pochara figure has been mounted on the platform 23. If the Pochara figure is found not mounted, the CPU 221 waits until the Pochara figure is mounted.

When the Pochara figure is mounted, the information stored in the IC chip 171 (or 191) is read by a reader/writer 241 to be sent to the CPU 221 via the connection block 230. At this moment, the CPU 221 repeats the process of step s41 until this information arrives.

If the Pochara figure is found mounted on the platform 23, then the procedure goes to step S42, in which the CPU 221 reads the information from the IC chip 171 (or 191) of the mounted Pochara figure. No matter which of the friend Pochara figure 161 or the sale Pochara figure 181 has been mounted, the Pochara ID is stored in the IC chip 171 or 191 (FIG. 6 and FIG. 11). In step S43, the CPU 221 controls the communication block 229 to send the Pochara ID to the Pochara service server 9. The Pochara ID sent at this time is used for identifying the user (or the Pochara figure) in the Pochara service server 9. Namely, the Pochara ID at this moment is used for user identification, so that, if the user ID is stored, the user ID may be sent. Alternatively, both the Pochara ID and the user ID may be sent.

Namely, the read Pochara ID is sent to the Pochara service server 9 via the LAN 21, the ISP 2, and the Internet 1. In other words, if the friend Pochara figure 161 is mounted on the platform 23, the CPU 221 executes the login processing (the connection processing) on the Pochara service server 9 in step S43.

Thus, the user need not enter his ID through a keyboard for example, so that it is easy for the user to access the Pochara service server 9 and entry errors are prevented. Consequently, this novel configuration allows children, females, and elderly people who are not familiar with keyboard operation to easily access the Pochara service server 9.

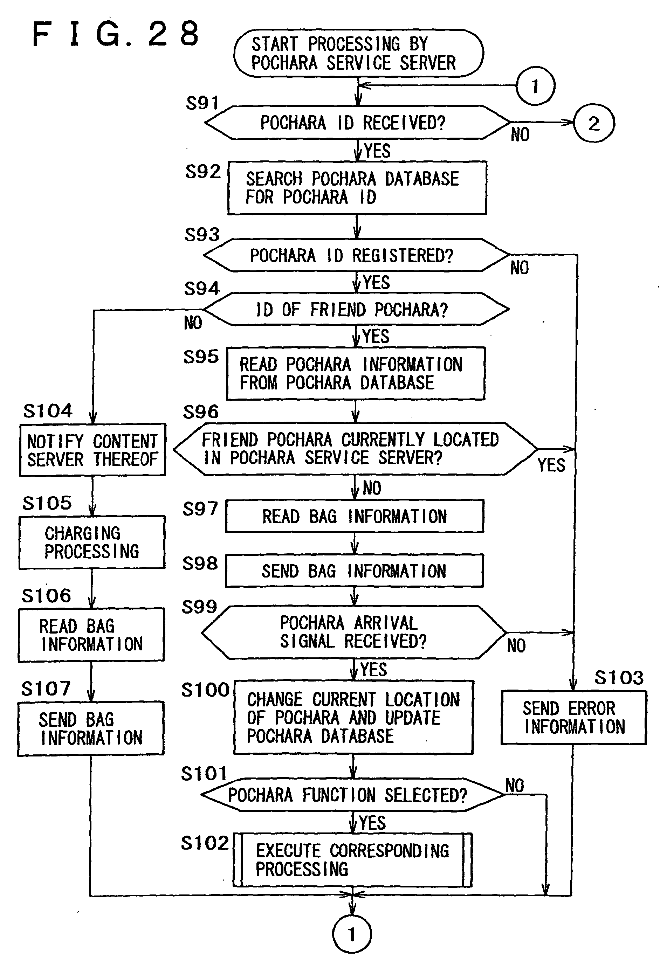

Receiving the Pochara ID, the Pochara service server 9 determines whether the received Pochara ID is registered on the Pochara database 10 (step S93 shown in FIG. 28 to be described later). It should be noted that the Pochara database 10 also registers the sale Pochara ID, in addition to the friend Pochara ID. If the Pochara ID that has been read is found registered, the Pochara service server 9 reads bag information from the Pochara database 10 and sends it (steps S98 and S107 shown in FIG. 28) .

If the Pochara ID is found not registered on the Pochara database 10, then the Pochara service server 9 sends error information (step S103 shown in FIG. 28).

In step S44, the CPU 221 of the personal computer 22 determines whether the error information has been received from the Pochara service server 9. If the error information (the information sent in the process of step S103 shown in FIG. 28) is found received in step S44, then the procedure goes to step S45, in which the CPU 221 executes error handling. Namely, in this case, because the Pochara ID is not registered on the Pochara database 10, the user cannot use the services based on Pochara.

On the other hand, if the error information is found not received in step S44 (if the received information is found to be the bag information send in the processes of steps S98 and S107 shown in FIG. 28), then the procedure goes to step S46, in which the CPU 221 receives the bag information supplied from the Pochara service server 9. In step S47, the CPU 221 sends Pochara arrival information to the Pochara service server 9. This Pochara arrival information is received by the Pochara service server 9 in step S99 shown in FIG. 28 to be described later.

In step S48, the CPU 221 determines whether the Pochara figure mounted on the platform 23 is the friend Pochara figure 161. Namely, the bag information supplied from the Pochara service server 9 includes the friend Pochara flag indicative of whether the Pochara ID sent to the Pochara service server 9 is the ID of the friend Pochara. On the basis of this friend Pochara flag, the CPU 221 executes the determination processing of step S48.

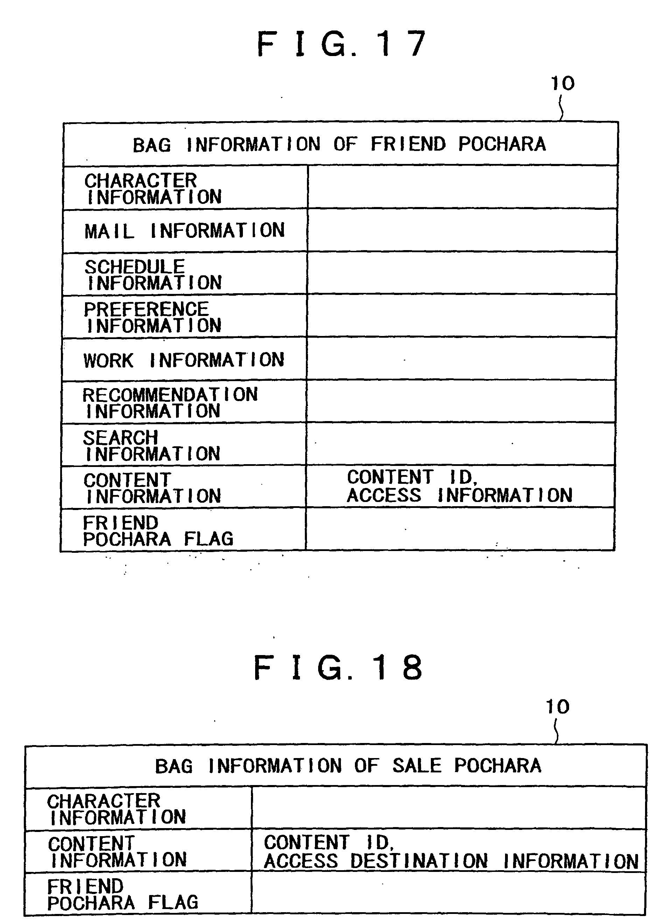

The friend Pochara bag information includes character information, mail information, schedule information, preference information, work information, recommendation information, search information, content information, and friend Pochara flag, for example, as shown in FIG. 17.

As shown in FIG. 18, the sale Pochara bag information includes character information, content information, and friend Pochara flag as shown in FIG. 18.

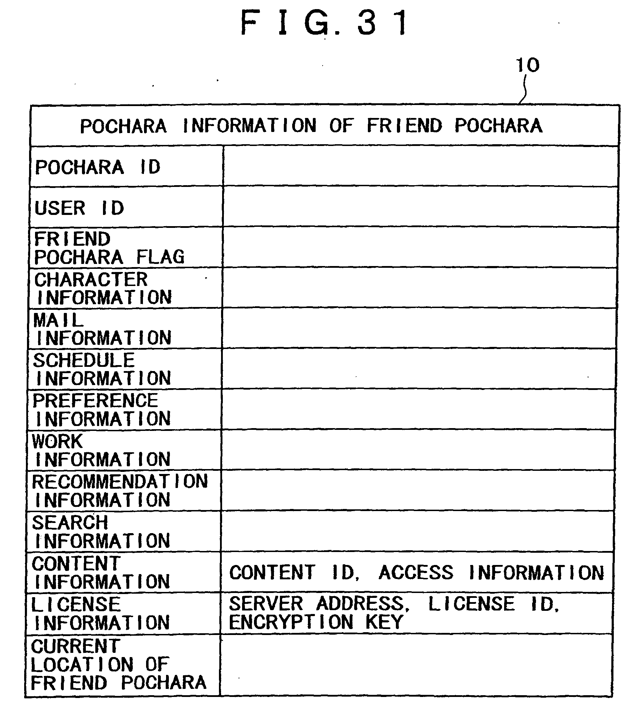

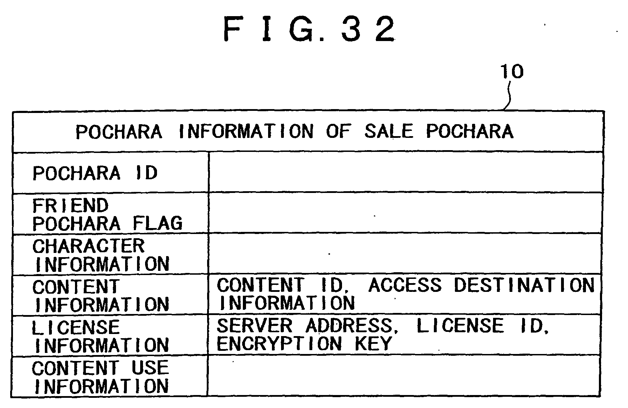

These pieces of information are sent as the bag information which are included in the Pochara information of the friend Pochara shown in FIG. 31 to be described later or the Pochara information of the sale Pochara shown in FIG. 32 to be described later. The details of these pieces of information will be described later with reference to FIGS. 31 and 32.

It should be noted that the bag information of friend Pochara or sale Pochara may also include a server address, license ID, and license information including crypto key, as required.

It is also practicable to store character information and image data of content in a terminal such as IC chip or personal computer, thereby updating these information and image data when a change occurs in them. This makes it advantageous to use lines having narrow bands or lines in which charging is made in accordance with data amount.

If the Pochara figure mounted on the platform 23 is found to be the friend Pochara figure 161, then the processing associated with the user is executed. In this case, the procedure goes to step S49, in which the CPU 221 generates Pochara image data on the basis of the bag information received in step S46, displaying the generated Pochara character on the display block of the output block 227.

Namely, the storage block 228 of the personal computer 22 stores the Pochara information received from the Pochara service server 9 in step S6 shown in FIG. 7. The CPU 221 reads the character information of friend Pochara in the Pochara information corresponding to the Pochara ID included in the bag information, sets a specific value included in the bag information to the parameter, generates the image data of friend Pochara, and outputs the generated image data to the display block of the output block 227, thereby displaying the friend Pochara (the character of the virtual friend Pochara). This character of friend Pochara has the image which corresponds to the friend Pochara figure 161 mounted on the platform 23.

In other words, the friend Pochara figure 161 has a shape which corresponds to this image (or character). Therefore, looking at the character of friend Pochara displayed on the display block of the output block 227, the user can intuitively recognize that this character corresponds to the friend Pochara figure 161 mounted on the platform 23.

Thus, the character of friend Pochara that looks the same as the figure is displayed, so that the user can easily identify the service to be used.

It should be noted that, in the above-mentioned configuration, the Pochara information for displaying the character of virtual friend Pochara is supplied from the Pochara service server 9 to the personal computer 22. Alternatively, this Pochara information may be stored in the friend Pochara figure 161. This speeds up the display of the friend Pochara character.

Also, it is practicable that the Pochara information received from the Pochara service server 9, especially the Pochara image data including parameters necessary for displaying characters such as chara polygon, texture, and motion is stored in the friend Pochara figure 161 (or the personal computer 22) when this information is received from the Pochara service server 9. In this case, every time access is made to the Pochara service server 9, it is determined whether the Pochara image data have been updated. If the Pochara image data is found not updated, then the already stored Pochara image data is used; if the Pochara image data is found updated, new Pochara image data is received from the Pochara service server 9 to be stored.

In addition, Pochara information may include the contents of the header of electronic mail (the information necessary for the selection of mail such as date of reception and a title of mail). In this case, access is made to the ISP 2 as the mail server when the user selects the electronic mail function, upon which the body of electronic mail is downloaded.

Next, in step S50, on the basis of the bag information of the friend Pochara, the CPU 221 displays a list of friend Pochara's functions as icons around friend Pochara.

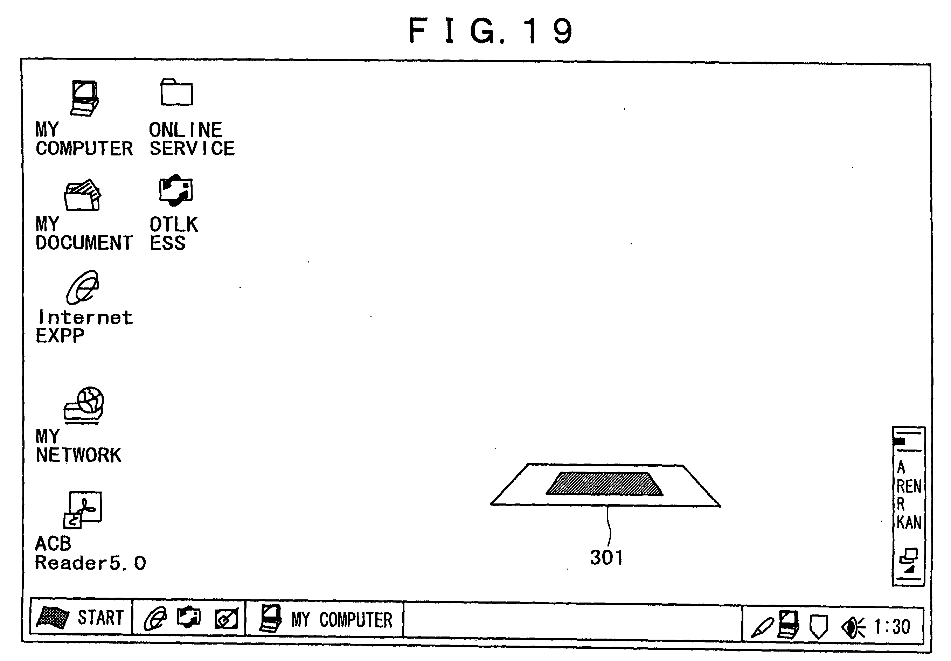

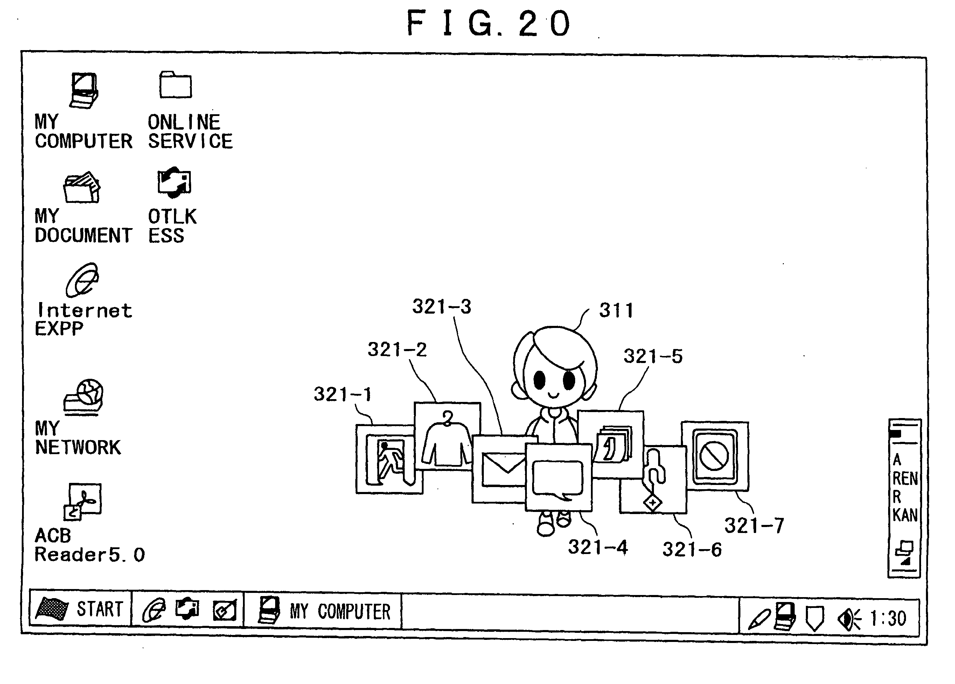

FIGS. 19 and 20 show the exemplary displays as results of the processes of steps S49 and S50.

First, as shown in FIG. 19, an appearance port 301 is displayed. Then, as shown in FIG. 20, an animation image in which a friend Pochara character 311 corresponding to the friend Pochara figure 161 appears from the appearance port 301 is displayed. As described above, this friend Pochara character 311 has an image that corresponds to the friend Pochara figure 161.

Around the friend Pochara character 311, icons 321-1 through 321-7 which correspond to the functions of the friend Pochara character 311 (or its user) are displayed. In a display example shown in FIG. 20, the number of icons is seven, but not exclusively.

It should be noted that the friend Pochara character 311 may have a bag that the user clicks to display the icons contained in that bag.

By operating the mouse for example which constitutes the input block 226, the user selects a predetermined icon from among the icons corresponding to the displayed functions.

In step S51, the CPU 221 waits until one function is selected. When one function is selected, then the procedure goes to step S52, in which the CPU 221 executes the processing corresponding to the selected function.

For example, of the seven icons, if the icon 321-3 corresponding to the mail function is selected, the CPU 221 executes the processing corresponding to the mail function. To be more specific, the CPU 221 controls the communication block 229 to request the Pochara service server 9 for reading mail information.

When the Pochara service server 9 is requested by the personal computer 22 for the retrieval of main information or at certain time intervals, the Pochara service server 9 accesses the ISP 2 (having a mail server function) to read the mail information of the user and registers the mail information on the Pochara database 10. The Pochara service server 9 reads the mail information from the Pochara database 10 and sends it to the personal computer 22 via the Internet 1, the ISP 2, and the LAN 21.

The CPU 221 displays the image corresponding to the received mail information onto the display block of the output block 227.

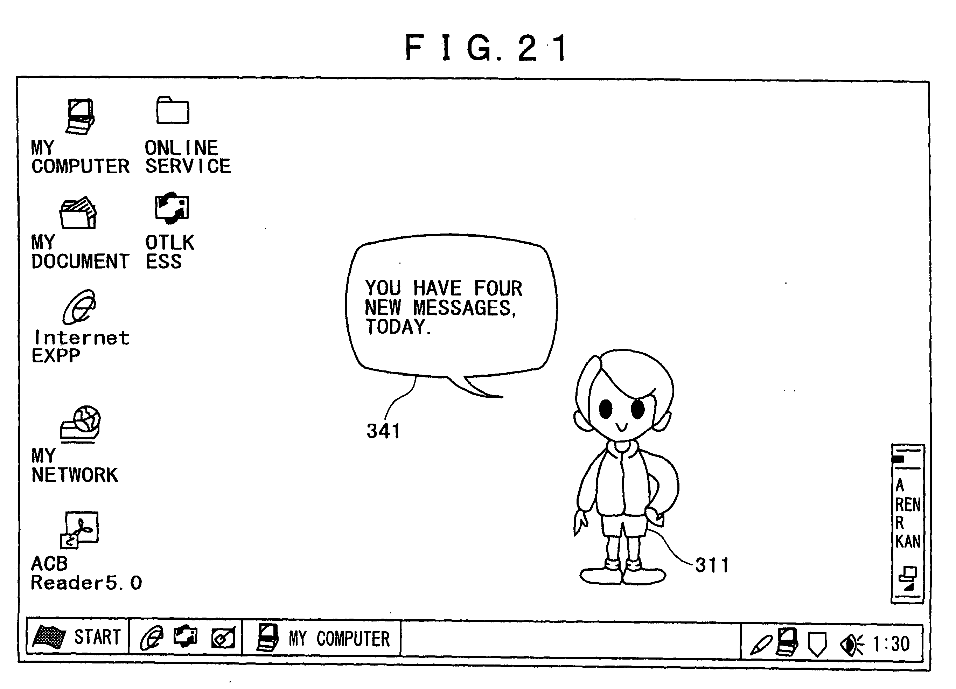

FIG. 21 shows a display example of this case. In the display example shown in FIG. 21, a balloon 341 is shown on the upper left of the friend Pochara character 311, in which a message "You have four new messages, today." is displayed. By this display, the user can know that four new messages have arrived at his in-box.

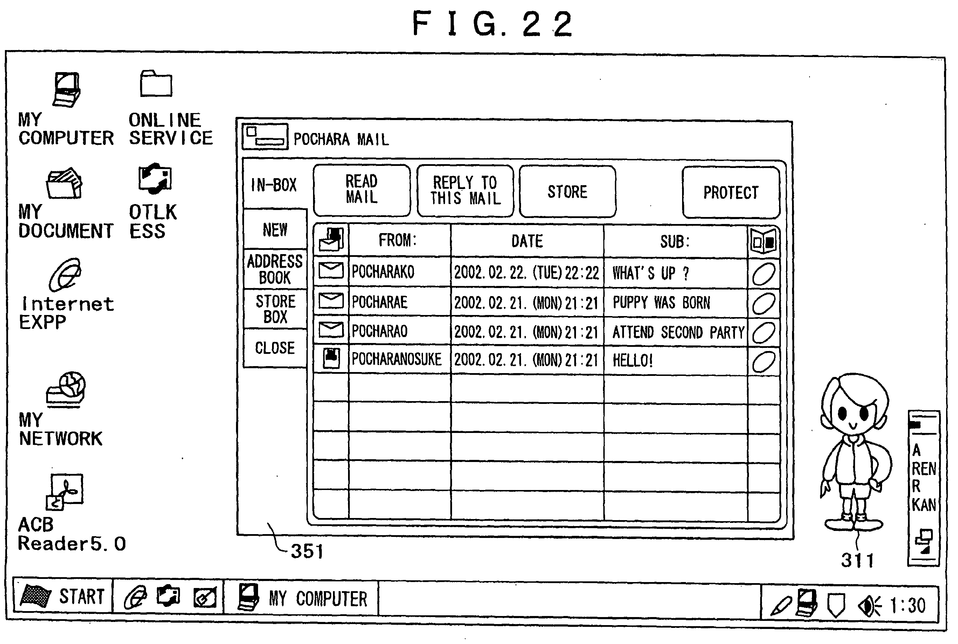

When the user gives a command to read mail by operating the mouse of the input block 226, the CPU 221 reads the mail from the ISP 2 and displays the mail title information held in the Pochara database 10 onto a window 351 as shown in FIG. 22 for example. By selecting a desired mail message from the mail messages thus displayed, the user can display the contents of the selected mail message.

When the user selects a scheduler icon 321-5 from the seven icons, then the CPU 221 accesses the Pochara service server 9 to request for reading the schedule information of the user of the friend Pochara from the Pochara database 10 and sending the schedule information to the personal computer 22.

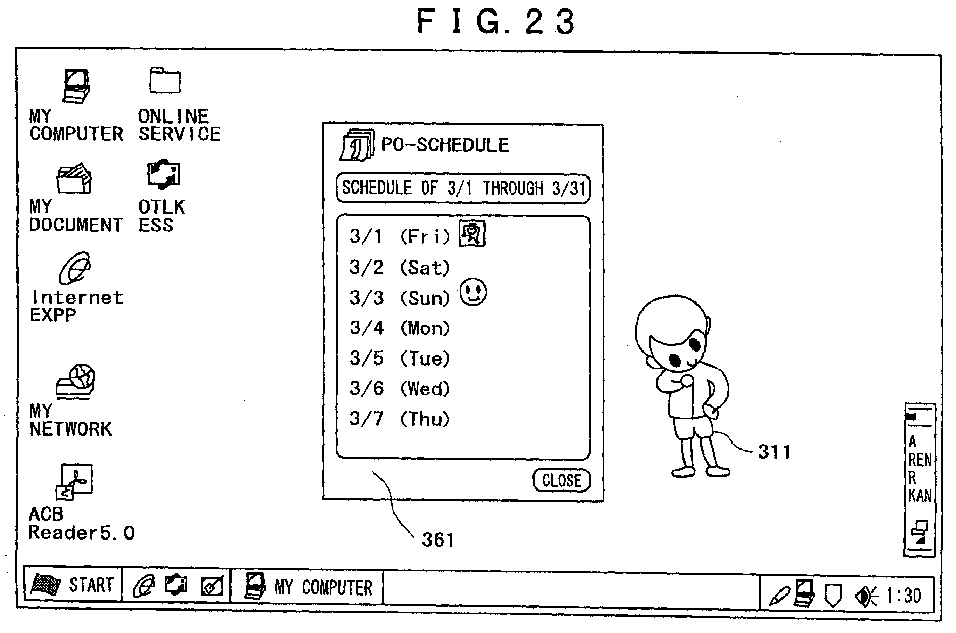

Receiving the schedule information, the CPU 221 of the personal computer 22 outputs it to the display block of the output block 227. Thus, as shown in FIG. 23 for example, the schedule of the user of the friend Pochara character 311 onto a window 361.

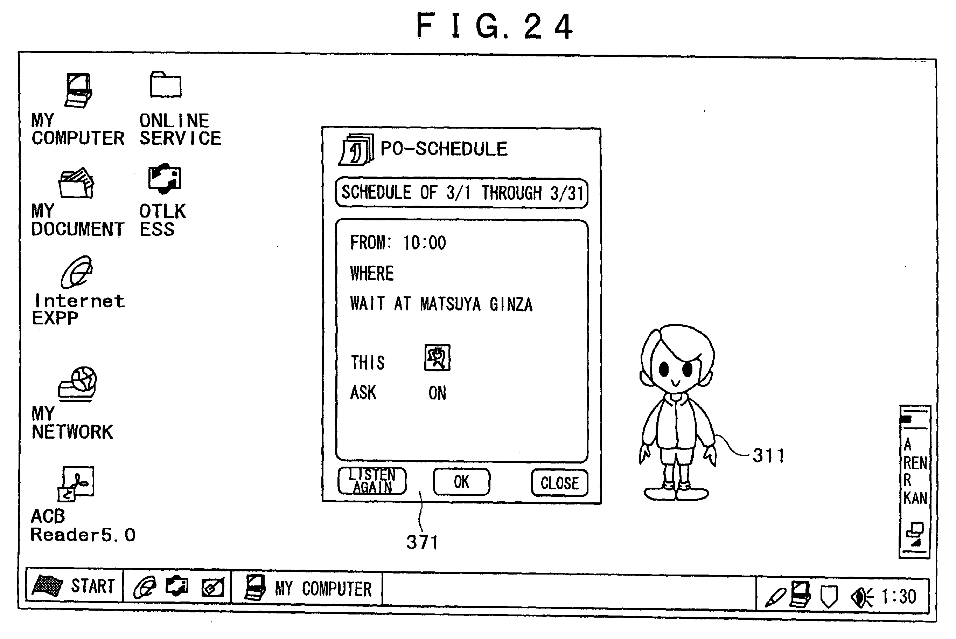

When the user clicks a desired date in the schedule shown in the window 361 by operating the mouse, the schedule of the specified date is displayed in an window 361 as shown in FIG. 24 for example.

In this display example, the schedule of the first of March is shown.

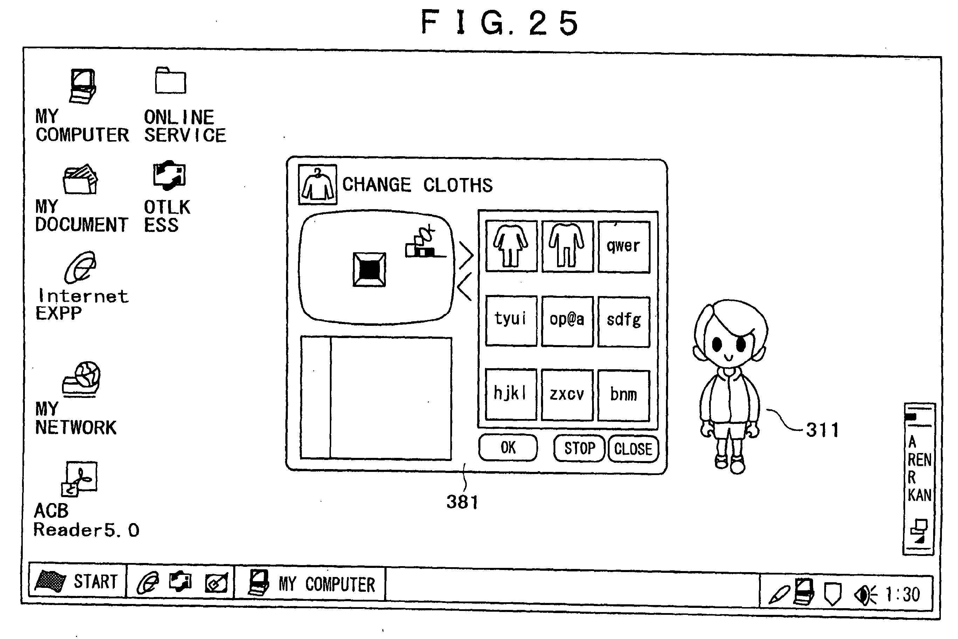

When the user selects a change-cloth icon 321-2 from the seven icons, the CPU 221 accesses the Pochara service server 9 to get the GUI necessary for cloth-change for the friend Pochara character 311 and display the GUI in a window 381 shown in FIG. 25 for example. By clicking predetermined buttons shown in the window 381, the user can change the shirt or trouser of the friend Pochara character 311 to desired one. The cloth that the friend Pochara character 311 is having is stored as a parameter. This capability can prevent the user from being bored with the friend Pochara character 311 as an avatar of the user himself.

As described above, in the processing corresponding to the selected functions shown in step S52, various processing operations are executed according to user selection. This processing will be detailed later.

Next, in step S53, the CPU 221 determines whether the friend Pochara figure 161 has been dismounted from the platform 23. If the friend Pochara figure 161 is found not dismounted, then the procedure goes to step S54, in which the CPU 221 determines whether the end of the processing associated with Pochara has been received. To end the processing associated with Pochara, the user dismounts the friend Pochara figure 161 from the platform 23 or gives a command for ending through the input block 226.

If the end of Pochara processing is found not directed in step S54, then the processing returns to step S51 to repeat the above-mentioned processing therefrom.

The CPU 221 determines that the friend Pochara figure 161 has been dismounted from the platform 23 if the data cannot be read from the IC chip 171 of the friend Pochara figure 161 mounted on the platform 23 by periodically controlling the reader/writer 241 at relatively short time intervals such as one second to give a command for data reading from the IC chip 171 of the friend Pochara figure 161.

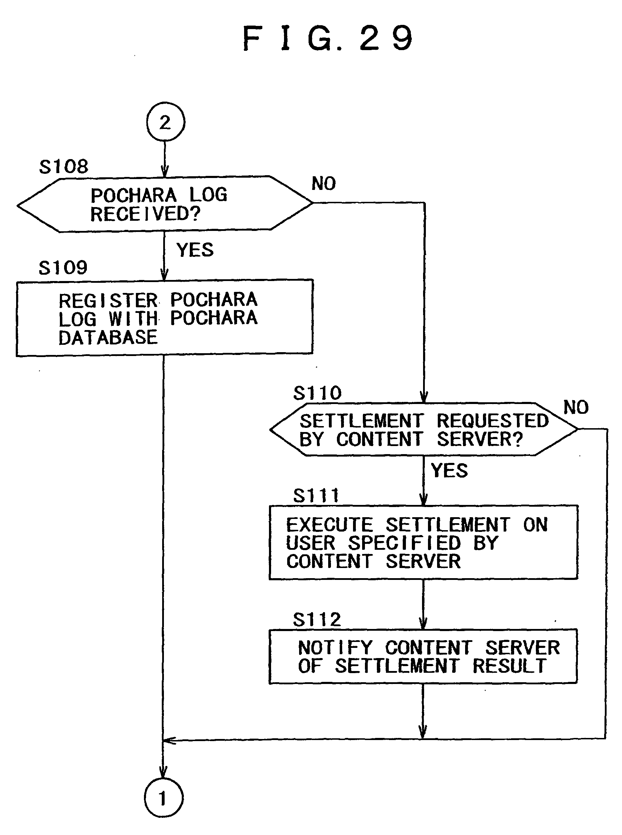

If the friend Pochara figure 161 is found dismounted from the platform 23 or if the end of Pochara processing has been directed by the user in step S54, then the CPU 221 sends a bag information change log to the Pochara service server 9 in step S55. Therefore, this log has capabilities of notifying the Pochara service server 9 of the dismounting of the friend Pochara figure 161 from the platform 23 or the command given by the user for ending Pochara processing. This log is registered in the Pochara service server 9 (step S109 shown in FIG. 29).

The above-mentioned log contains updated schedule, bookmark, character information (hair style, cloth, etc.), and user's thought information, for example. If this log is directly written to the Pochara service server 9, its update processing is executed by the Pochara service server 9 itself.

Further, in step S56, the CPU 221 displays an image in which the friend Pochara character 311 returns onto the display block of the output block 227.

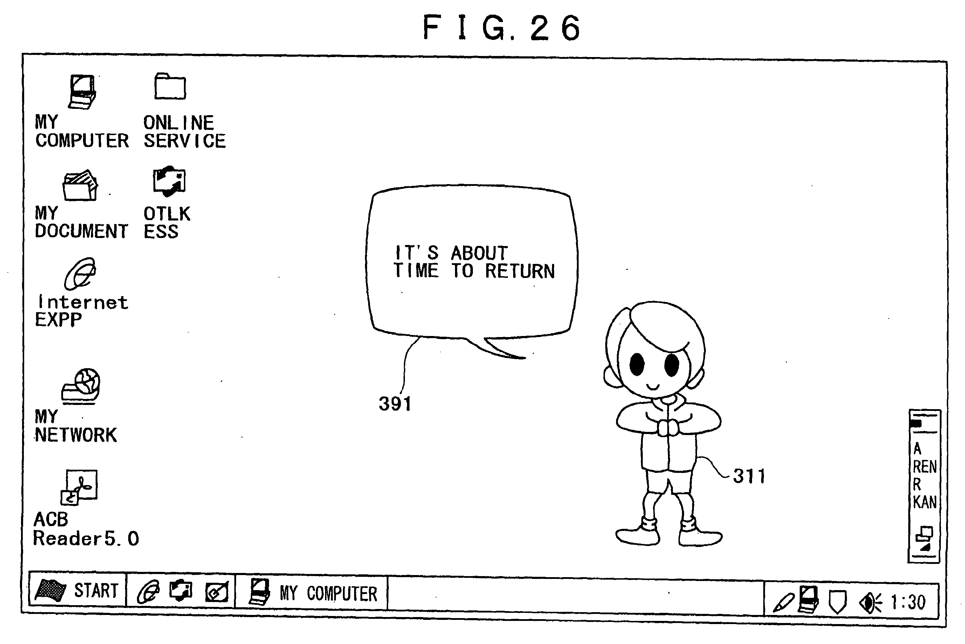

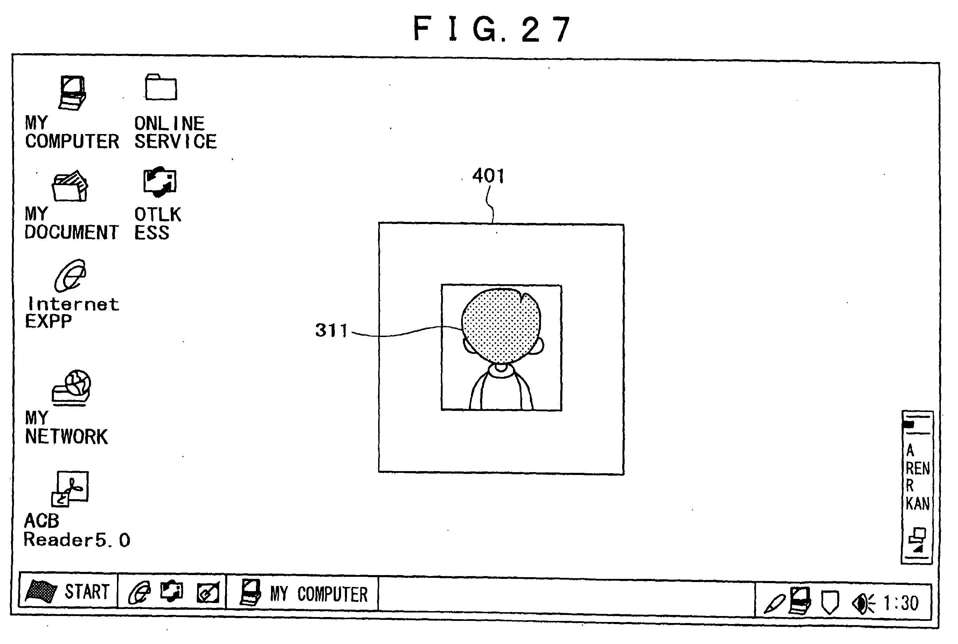

FIGS. 26 and 27 show display examples in which the friend Pochara character 311 returns.

In the display example shown in FIG. 26, a balloon 391 is shown on the upper left of the friend Pochara character 311, in which message "It's about time to return." is displayed. Then, as shown in FIG. 27, an animation image is displayed in which an exit 401 is displayed and the friend Pochara character 311 returns through this exit 401.

Through these displays, the user can intuitively recognize the end of the processing associated with friend Pochara. Namely, if the friend Pochara figure 161 is dismounted from the platform 23, then the CPU 21 executes logout processing of clearing the connection with the Pochara service server 9 in step S54.

As described above, the Pochara (character) same as a figure is displayed at the start of the Pochara service and this display is ended at the end of the service, so that the user can easily know login and logout sequences. Therefore, this configuration prevents the user from misunderstanding that the device is malfunctioning because service cannot be used owning to the untimely inputting of operations necessary for receiving the services.

Referring to FIG. 12 again, if the figure mounted on the platform 23 is found not to be the friend Pochara figure 161 (namely, the figure is found to be the sale Pochara figure 181) in step S48, then the procedure goes to step S57, in which the CPU 221 of the personal computer 22 generates Pochara image data on the basis of the Pochara information of sale Pochara included in the bag information received in step S46 and displays the generated sale Pochara character (the virtual figure of the sale Pochara figure 181) onto the display block of the output block 227. Namely, as shown in FIGS. 30 through 32 to be described later, the Pochara database 10 stores the Pochara information and content image data of the sale Pochara and these Pochara information and content image data are sent to the Pochara service server 9 as contained in the authentication information. This sale Pochara character is also an image having substantially the same shape as the sale Pochara figure 181 (namely, the image that allows the use to intuitively recognize the virtual figure corresponding to the sale Pochara figure 181).

In step S58, the CPU 221 extracts the content image data (content use information) from the bag information received in step S46, generates a content image on the basis of the extracted content image data, and displays the generated image onto the display block of the output block 227. Consequently, the content image corresponding to the content associated with the sale Pochara figure 181 purchased by the user is displayed on the output block 227. This content image includes the description of associated content and a message "To download this music, click the access button", for example.

Therefore, in order to get content, the user operates the access button in the displayed content image by operating the mouse for example of the input block 226.

In step S59, the CPU 221 waits until a command for accessing the content server is given (or until the access button is operated). When a command for accessing the content server is found given, the procedure goes to step S60, in which the CPU 221 reads the use condition (FIG. 11) from the IC chip 191. In step S61, the CPU 221 determines whether the use condition is satisfied. This use condition includes the expiration date of content, for example. The CPU 221 determines whether the use condition is satisfied by comparing the current date counted by the incorporated timer with the expiration date specified in the use condition. If a maximum number of times content can be used or a prepaid amount are specified in the use condition, the CPU 221 determines whether the value is 0.

If the use condition is found satisfied (for example, the current date is before the expiration date and the maximum number of times or the prepaid amount is not 0) in step S61, then the procedure goes to step S62, in which the CPU 221 accesses the content server on the basis of the access destination information stored in the IC chip 191, thereby requesting the content server for sending content data. Consequently, the content server 6 shown in FIG. 1 is requested for sending content data.

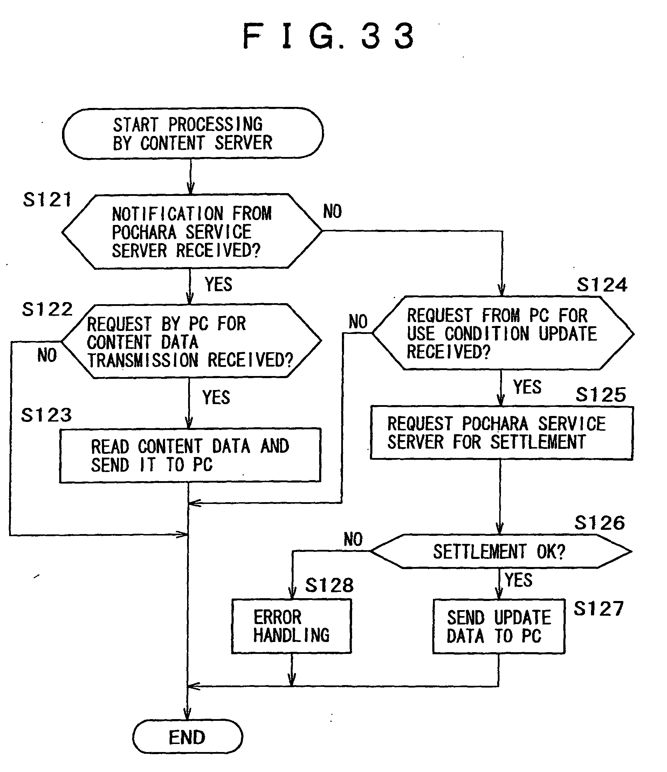

In response to this request, the content server 6 sends the content data via the Internet 1 (step S123 shown in FIG. 33 to be described later). In step S63, the CPU 221 of the personal computer 22 receives the content data from the content server 6 via the communication block 229. This content data is supplied to the storage block 228 to be stored therein.

In step S64, the CPU 221 decodes the content data received and stored in step S63 and outputs the decoded content data. Namely, the content data received from the content server 6 is encrypted and therefore the CPU 221 decodes the encrypted content data by use of crypto key included in the license information (FIG. 32) obtained from the Pochara service server 9. Then, the CPU 221 outputs the decoded content data through the output block 227.

It should be noted that, if the encrypted content and the crypto key are transmitted via the Internet 1, they may be intercepted by a third party, so that the crypto keys may be changed every time encrypted content is reproduced (or copied).

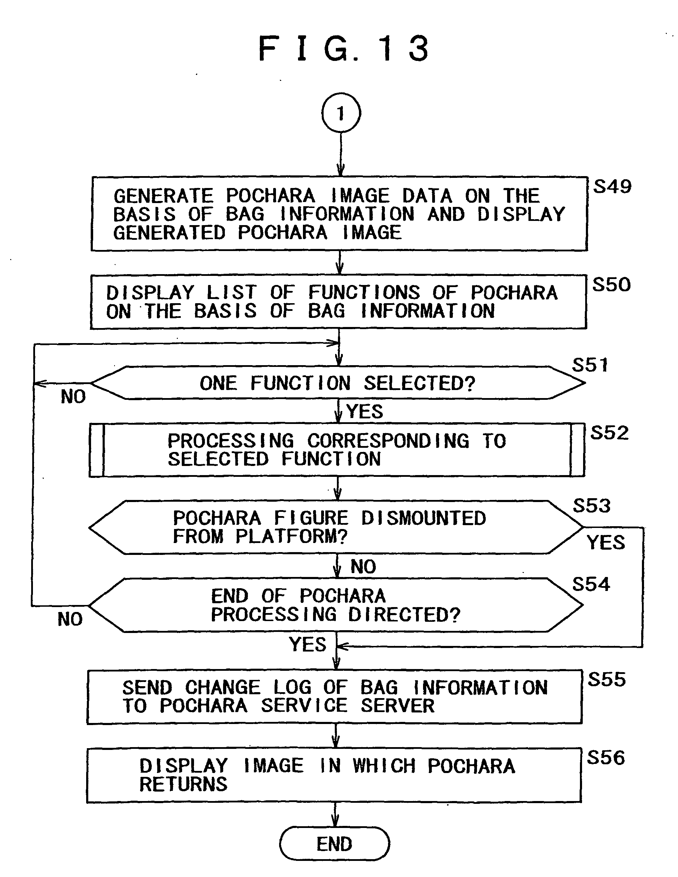

In step S65, the CPU 221 determines whether the end of content output has been entered through the input block 226 (the end of content output has been directed by the user). If the end of content output is found not directed, then the procedure goes to step S66, in which the CPU 221 determines whether the sale Pochara figure 181 has been dismounted from the platform 23. This determination processing is executed in the same manner as the processing of step S53 shown in FIG. 13.

If the sale Pochara figure 181 is found not dismounted from the platform 23 in step S66, then the procedure returns to step S65 to repeat the above-mentioned processing therefrom.

If the end of content output is found directed in step S65 or if the sale Pochara figure 181 is found dismounted from the platform 23 in step S66, then the procedure goes to step S67, in which the CPU 221 ends the content output processing.

Next, in step S68, the CPU 221 controls the reader/writer 241 to update the use condition stored in the IC chip 191 of the sale Pochara figure 181. For example, if the maximum number of times content may be used (the maximum number of times content may be reproduced) is specified, the value is decremented by one. For example, if the maximum number of times is specified to be 20, the value is decremented by one and, when the value reaches 0, the use (or reproduction) of the content is disabled.

If the prepaid amount stored in the IC chip 191 of the sale Pochara figure 181 is reduced every time content is used, the CPU 221 updates such that this prepaid amount is reduced by a predetermined amount (an amount equivalent to one reproduction of content) in step S69. Only one of the process of step S68 and the process of step S69 may be executed.

In step S70, as with the case of step S56 shown in FIG. 13, the CPU 221 displays an image in which the sale Pochara character returns onto the display block of the output block 227. Consequently, the user can dismount the sale Pochara figure 181 from the platform 23 and, after giving a command to end content output, intuitively recognize the end of content output.

If the use condition is found not satisfied (the expiration date has passed, the maximum number of times content may be used has been reached, or the prepaid amount is 0) in step S61, then the procedure goes to step S71, in which the CPU 221 generates a predetermined message and displays it onto the display block of the output block 227. Consequently, if the number of times reproduction is allowed has been reached for example, a message such as "Content has been reproduced N times. If you want to use the content more, you have to make new payment" is displayed. On the basis of this message, the user gives a command for updating the use condition through the input block 226 to use the content further.

In step S72, the CPU 221 determines whether a request for updating the use condition has been made. If the request for updating the use condition is found made, the procedure goes to step S73, in which the CPU 221 accesses the content server 6 through the Internet 1 on the basis of the access destination information (FIG. 18) included in the content information in the bag information. In step S74, the CPU 221 requests the content server 6 for updating the use condition; namely, the maximum number of times content can be used and the prepaid amount. In response to this request, the content server 6 sends the update data to the personal computer 22 when the content server 6 is notified by the Pochara service server 9 that this user can be settled in charging (step S127 shown in FIG. 33).

Therefore, in step S75, the CPU 221 determines whether the update data has sent from the content server 6. If the update data is found sent, then the procedure goes to step S76, in which the CPU 221 receives the update data from the content server 6 and supplies the received update data to the IC chip 191 via the reader/writer 241, thereby updating the maximum number of times content may be used and the prepaid amount.

As described above, by requesting the update of the maximum number of times content may be used and the prepaid amount, the user can use content any number of times by use of the sale Pochara figure 181.

It should be noted, as will be described later, that, when the prepaid amount is updated, the license server 8 executes a charging processing on the user (step S105 shown in FIG. 28) on the basis of the request by the content server 6 (step S125 shown in FIG. 33).

If the update data is found not sent in step S75, then the procedure goes to step S77, in which error handling is executed.

To be more specific, if the Pochara service server 9 determines that the user of that sale Pochara figure 181 cannot settle the prepaid amount due to the insufficient funds in user's bank account for example, the content server 6 sends an error message to the personal computer 22 (step S118 shown in FIG. 33). In this case, the CPU 221 executes error handling because no update data has been sent. To be more specific, the CPU 221 displays a message such as "You cannot use content any more" for example onto the display block of the output block 227.

If the CPU 221 determines that no request for updating the use condition is made by the user in step S72, then steps S73 through S77 are skipped.

It should be noted that a configuration may be used in which a credit card incorporating an IC chip is mounted on the platform to make the settlement of the prepaid amount from that credit card.

The following describes, with reference to the flowcharts of FIGS. 28 and 29, the processing by the Pochara service server 9 which is executed in response to the processing by the personal computer 22 indicated by the flowcharts of FIGS. 12 through 16.

In step S91, the CPU 191 of the Pochara service server 9 determines whether the Pochara ID has been received from the personal computer 22. If the Pochara ID is found not received, then the procedure goes to step S108 to determine whether a Pochara log has been received. If the Pochara log is found not received in step S108, then the procedure goes to step S110, in which the CPU 121 determines whether a settlement request has been received from the content server 6. If the settlement request is found not received, then the procedure returns to step S91 to repeat the above-mentioned processing therefrom.

If the Pochara ID is found received in step S91, then the procedure goes to step S92, in which the CPU 121 searches the Pochara database 10 for the Pochara ID (sent from the personal computer 22 in step S43 shown in FIG. 12) received from the personal computer 22.

The Pochara database 10 stores user information and Pochara information as shown in FIGS. 30 through 32 for example. The user information (FIG. 30) contains user ID for user identification, user's name, address, birthday, gender, telephone number, facsimile number, mail address, user registration date, and user's credit card number and bank account, for example.

The Pochara information is divided into the Pochara information of friend Pochara (FIG. 31) and the Pochara information of sale Pochara (FIG. 32).

The Pochara information of friend Pochara contains the Pochara ID of the friend Pochara figure of that user, user ID, the friend Pochara flag indicative whether that Pochara is friend Pochara or sale Pochara, or the Pochara character data necessary for displaying that Pochara typified by the parameter associated with the cloth of that Pochara.

For the Pochara information, the information about the functions of friend Pochara is also registered. In the example shown in FIG. 31, mail information, schedule information, preference information, work information, recommendation information, and search information are stored. The mail information contains the mail received so far by that user and the mail sent so far from that user.

The schedule information contains the current and past schedules of that user and the memos written by that user. The schedule information also contains the information about various events to be executed by the Pochara.

The preference information contains the URLs of home pages bookmarked by the user, for example.

The work information contains the information about services which can be received by registering beforehand the terminal (hardware) owned by the user. The work information also stores the data temporarily deposited by the user.

The recommendation information contains recommended content collected by the friend Pochara by analyzing user's thought.

The search information contains the information about search engines and the information about sale Pocharas of which searching was directed beforehand by the user.

The Pochara information also contains the current position indicative of the position at which the friend Pochara character is actually displayed on the network. This positional information prevents the friend Pochara character from being simultaneously displayed at more then two positions on the network (thereby realizing the exclusiveness of display). In other words, this positional information prevents other users from intercepting the information of this user by use of another friend Pochara figure which masquerades as the friend Pochara figure 161 of this user. Namely, the Pochara service server 9 executes error handling if the friend Pochara ID is transmitted from a position other than the current position. Consequently, only one friend Pochara figure is displayed on the device on the network.

In addition, the positional information prevents the loss of data integrity that is otherwise generated by accessing the Pochara service server 9 from two or more devices at the same time. In other words, moving of one Pochara between two or more devices allows the user to intuitively understand the exclusive access.

The Pochara information also contains the information about the content obtained by the user and the license information necessary for using the content. The content information includes the content ID for identifying content and the access information necessary for accessing the content. The license information includes the license ID for identifying the license, a crypto key for decoding the encrypted content, and the address of the license server which is accessed for getting the license, for example.

The Pochara information of sale Pochara contains Pochara ID, friend Pochara flag, character information, content information, license information, and content user information.

As a result of the search operation in step S92, the CPU 121 determines, in step S93, whether the Pochara ID is stored in the Pochara database 10. If the Pochara ID is found stored, then the procedure goes to step S94, in which the CPU 121 determines whether the received Pochara ID is the ID of the friend Pochara. As described above, this determination can be made by the friend Pochara flag.

If the Pochara ID is found to be the ID of the friend Pochara, then the procedure goes to step S95, in which the CPU 121 reads the Pochara information (FIG. 31) from the Pochara database 10.

In step S96, the CPU 121 determines from the current position of friend Pochara stored in the read Pochara information whether the current position of the friend Pochara is inside the Pochara service server 9. If the current position of the friend Pochara is found to be in the Pochara service server 9, then the procedure goes to step S103, in which the CPU 121 sends error information to the personal computer 22.

Namely, in this case, although the current position of the friend Pochara is inside the Pochara service server 9, the access has been made from another device on the basis of the friend Pochara figure 161, so that this access may be masquerading. Therefore, in this case, error handling is executed.

If the current position of the friend Pochara is found not to be inside the Pochara service server 9 in step S96, then the procedure goes to step S97, in which the CPU 121 reads the bag information from the Pochara database 10. Then, in step S98, the CPU 121 sends the read bag information to the personal computer 22.

In step S99, the CPU 121 determines whether Pochara arrival information has been received. As described above, when the personal computer 22 has received the bag information, the personal computer 22 sends it (step S47 shown in FIG. 12). If the Pochara arrival signal is not received although the bag information has been sent in step S98, it indicates that something abnormal has happened. Therefore, the procedure goes to step S103, in which the CPU 121 sends error information to the personal computer 22.

On the contrary, if the Pochara information is found received in step S99, then the procedure goes to step S100, in which the CPU 121 registers (or updates), on the Pochara database 10, the current position of the friend Pochara as being on the personal computer 22. Namely, because the friend Pochara has now arrived at the personal computer 22, the current position of the friend Pochara is registered as the personal computer 22.

As described above, when the user of the personal computer 22 selects one of the functions of the friend Pochara character 311, the information about the selected Pochara function is sent from the personal computer 22 (step S52 shown in FIG. 13).

In step S101, the CPU 121 of the Pochara service server 9 determines whether a function of the friend Pochara character 311 has been selected. If a function is found selected, then the procedure goes to step S102, in which the CPU 121 executes the processing corresponding to the selected function. Consequently, if the mail function has been selected for example, the information registered as the mail information is sent to the personal computer 22. If schedule function is selected for example, the registered schedule information is sent to the personal computer 22.

If no Pochara function is found selected in step S101, then the process of step S102 is skipped and the procedure returns to step S91 to repeat the above-mentioned processing therefrom.

If the obtained Pochara ID is found not to be the ID of the friend Pochara figure 161 in step S94 (or if the ID is found to be the ID of sale Pochara), then the procedure goes to step S104, in which the CPU 121 notifies the server corresponding to the sale Pochara figure (the content server 6 in the case of the ID corresponding to the sale Pochara figure 181) thereof. As will be described later, if the content server 6 receives this notification from the Pochara service server 9 and if the content server 6 receives a request for the transmission of content data from the personal computer 22, the content server 6 reads the requested content data and sends it to the personal computer 22 (steps S121 through S123 shown in FIG. 33 to be described later).

It should be noted that the Pochara service server 9 also manages the sale Pochara figures corresponding to the content provided by content providers and the services provided by service providers. Therefore, the Pochara database 10 stores Pochara IDs, content image data (content use information) necessary for displaying content images accompanying the content identified by content ID (for example, if the content is audio data of predetermined singer's songs, then music titles, lyrics, and singer's video), and content information for example, as the Pochara information necessary for displaying the characters of the virtual Pochara figures corresponding to all the sale Pochara figures 181. This content information includes an access destination (an address on the network) to which user's access is sent when the user sends that sale Pochara ID. The CPU 121 sends the notification to this access destination (the destination of notification).

Next, in step S105, the CPU 121 executes charging processing. Namely, in the present system, the user pays the price for a predetermined service every time the user mounts the sale Pochara figure 181 on the platform 23 to receive the service.

To be more specific, the CPU 121 of the Pochara service server 9 access the charging server 13 via the communication block 129 to request the charging processing on the credit card or band account of the user. In response to this request, the charging server 13 executes the charging processing of a predetermined amount.

Thus, the manager of the Pochara service server 9 can realize a profit from the use of the sale Pochara figure 181 by the user.

It should be noted that this charging processing may also be executed not on the user but on the manager who sold the sale Pochara figure 181.

Next, in step S106, the CPU 121 reads the bag information (FIG. 18) of sale Pochara from the Pochara database 10 and sends it to the personal computer 22 in step S107.

When the process of step S107 has been completed, the procedure returns to step S91 to repeat the above-mentioned processing therefrom.

It should be noted that, if the sale Pochara figure 181 is a Pochara figure associated with fortune telling for example and if the data amount of fortune telling content is not so large, then the bag information shown in FIG. 18 may also contain the fortune telling content, which is displayed at the same time the Pochara character is displayed upon its calling.

If the Pochara log is found received in step S108, then the procedure goes to step S109, in which the CPU 121 executes the processing of registering (updating) the received Pochara log on the Pochara database 10. Then, the procedure returns to step S91 to repeat the above-mentioned processing therefrom.

Thus, if the Pochara log is received from the personal computer 22 by the processing of step S55 shown in FIG. 13 for example, the Pochara database 10 is updated on the basis of the received Pochara log.

If the settlement request is found made from the content server 6 (the process of step S125 shown in FIG. 33 to be described later) in step S110, then the procedure goes to step S111, in which the CPU 121 executes the settlement processing on the user requested by the content server 6. To be more specific, the CPU 121 checks if there has been any insolvency with respect to the credit card number or bank account number of the user registered in the user information (FIG. 30) in the Pochara database 10. In step S112, the CPU 121 notifies the content server 6 of a result of the checking (a settlement result).

Then, the procedure returns to step S91 to repeat the above-mentioned processing therefrom.

The following describes, with reference to the flowchart shown in FIG. 33, the processing to be executed by the content server 6 with the sale Pochara figure 181 mounted on the platform 23 to receive the provision of content.

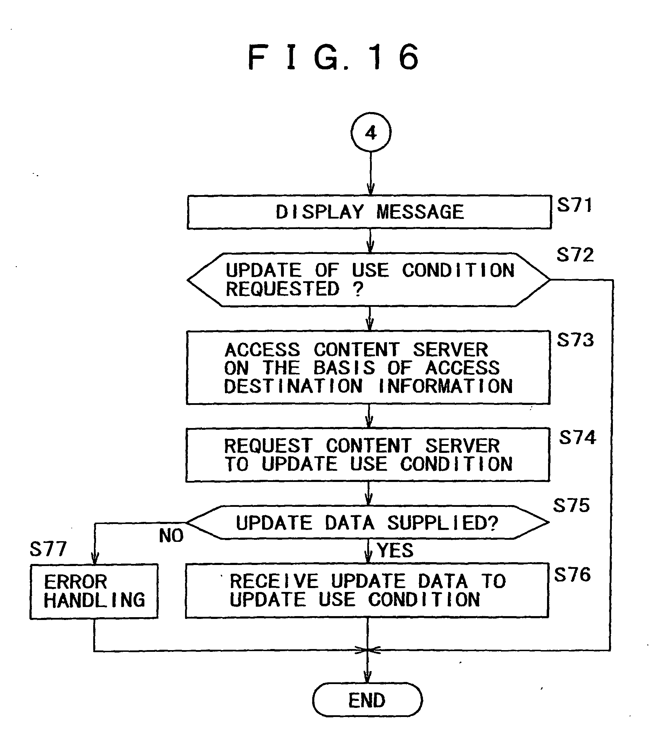

In step S121, the CPU 121 of the content server 6 determines whether a notification (a notification sent in step S104 shown in FIG. 28) of the access by the personal computer 22 has been received from the Pochara service server 9 via the communication block 129. If the notification is found not received from the Pochara service server 9, then the procedure goes to step S124, in which the 121 determines whether a prepaid amount (or maximum number of times content may be used) update request (step S74 shown in FIG. 16) from the personal computer 22 has been received. If the prepaid amount (or the maximum number of times content may be used) update request is found not received, this processing comes to an end.

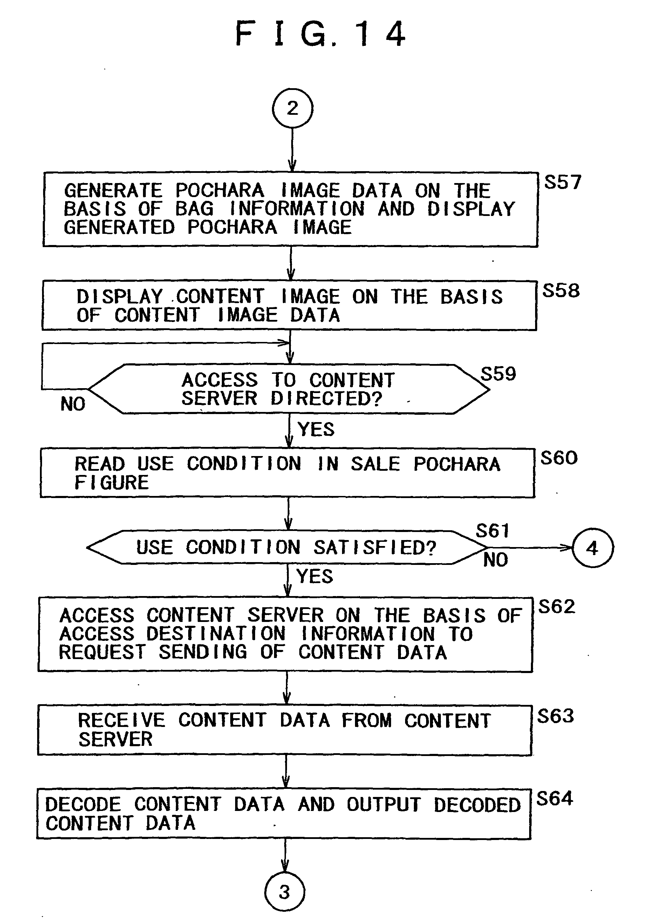

If the notification is found received from the Pochara service server 9 in step S121, then the procedure goes to step S122, in which the CPU 121 determines whether a request (step S62 shown in FIG. 14) for sending content data from the personal computer 22 described in that notification has been received. If the content data sending request from the personal computer 22 is found received, then the procedure goes to step S123, in which the CPU 121 reads the encrypted content data from the storage block 128 and sends the content data to the personal computer 22.

It should be noted that this content data may be stored in the storage block 128 as encrypted beforehand or may be encrypted every time it is sent.

The notification from the Pochara service server 9 obtained in step S121 must contain the information for identifying content. This information may be content ID or, if content and sale Pochara figure 181 correspond with each other, this information may be Pochara ID.

If the content data sending request from the personal computer 22 is found not received in step S122, then the process of step S123 is skipped.

Namely, content data is not sent if the notification is received from the Pochara service server 9 but the user of the personal computer 22 described in that notification does not request the sending of content data.

If the request for updating the prepaid amount (or the maximum number of times content may be used) from the personal computer 22 is found received in step S124, then the procedure goes to step S125, in which the CPU 121 requests the Pochara service server 9 for the settlement. In response to this request, the Pochara service server 9 executes the settlement processing on the user of the sale Pochara figure 181 and notifies the content server 6 of a result of the settlement (steps S111 and S112 shown in FIG. 29 described above).

In step S126, the CPU 121 of the content server 6 determines whether the settlement is successful on the basis of the notification received from the Pochara service server 9 on the basis of the request of step S125. If the settlement is found to be successful, then the procedure goes to step S127, in which the CPU 121 sends update data for updating the prepaid amount (or the maximum number of times content may be used) to the personal computer 22. As described above, the personal computer 22 updates the prepaid amount (or the maximum number of times content may be used) of the IC chip 191 in the sale Pochara figure 181 on the basis of the received update data (step S76 shown in FIG. 16). Consequently, the user can use the content again.

If the notification from the Pochara service server 9 indicates that the settlement is not successful in step S126, then the procedure goes to step S128, in which the CPU 121 executes error handling. Namely, at this moment, the CPU 121 outputs a message to the personal computer 22 indicative that content cannot be provided. This tells the user that the prepaid amount (or the maximum number of times content may be used) could not be updated. This message is displayed on the personal computer 22 in step S76 shown in FIG. 16.

The following describes the processing of getting the license from the license server 8 necessary for using content obtained from the content server 7 by mounting the friend Pochara figure 161 on the platform 23. This processing is executed as one of the processing operations corresponding to functions selected in step S52 shown in FIG. 13. Namely, this processing is started when the content acquisition function among the functions of the friend Pochara character 311 is selected.

In step S131, the CPU 221 of the personal computer 22 accesses the content server 7 to request the sending of content. The address to access is obtained by the user as required.

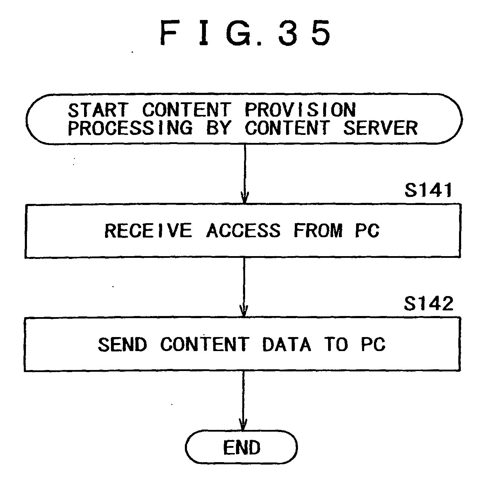

As will be described later, the content server 7 sends content data attached with content ID and license ID to the accessing personal computer 22 (step S142 shown in FIG. 35 to be described later). In step S132, the CPU 221 of the personal computer 22 receives the content data from the content server 7 via the Internet 1 and, in step S133, supplies the received content data to the storage block 228 to store it therein.

Next, in step S134, the CPU 221 sends, to the Pochara service server 9, the content ID for identifying the content obtained now, the access information for accessing the stored content data (the information necessary for reading the content data from the storage block 228), and the address on network (this address is sent from the content server 7 as attached to the content data) of the license server (the license server 8 in the case of the system shown in FIG. 1) which issues the license for the content obtained now.

In response to the access from the personal computer 22 described above, the content server 7 executes the processing indicated by the flowchart shown in FIG. 35.

To be more specific, when accessed from the personal computer 22 in step S141, the CPU 121 of the content server 7 reads the content data from the storage block 128 and sends it to the personal computer 22 in step S142. At this moment, the CPU 121 also sends the content ID and the license ID for identifying the license necessary for using that content. It should be noted that this content data is also encrypted.

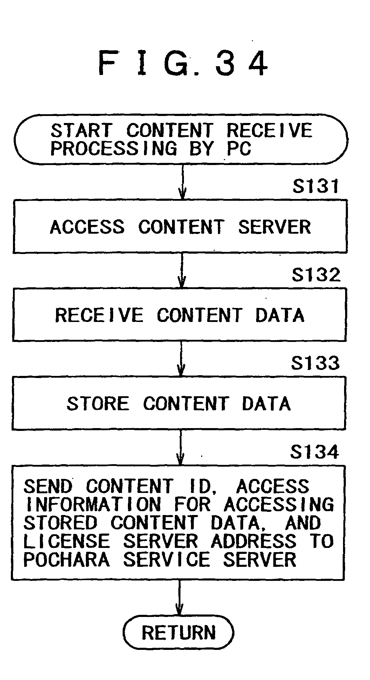

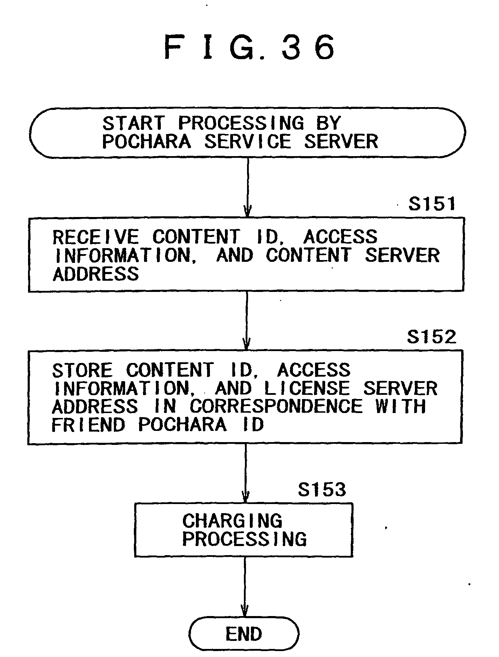

In response to the processing by the personal computer 22 of step S134 shown in FIG. 34, the Pochara service server 9 executes the processing indicated by the flowchart shown in FIG. 36.

First, in step S151, the CPU 121 of the Pochara service server 9 receives the content ID, access information, and license server address sent by the personal computer 22 in step S134. In step S152, the CPU stores the content ID, access information, and license server address received in step S151 into the Pochara database 10 in correspondence with the friend Pochara ID received together.

Next, in step S153, the CPU 121 executes the charging processing which corresponds to the processing in which the user obtained the content. Namely, the CPU 121 requests the charging server 13 for the settlement of the amount of money equivalent to the price of the content. In response to this request, the charging server 13 executes the charging processing on the user.

It should be noted that the charging processing for the provision of content may be omitted by executing the charging at the time of the provision of content. Not by executing charging for the provision of content, but by executing charging at the time of the provision of license, the user can receive and store content at any desired terminal multiple times without being concerned about the amount of money. This allows the efficient distribution of content.

Also, by storing content in reproducing devices in advance, the high quality content may be used on these devices if they are connected to the Internet 1 with narrow-band cables.

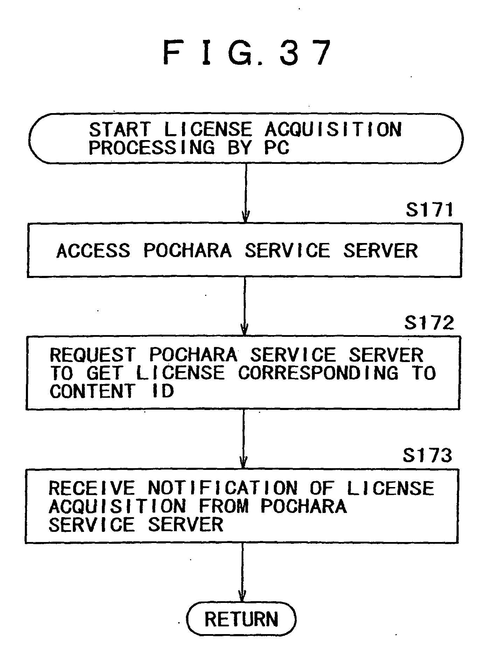

Acquisition of content as described above does not allow the user to use it. Namely, to use the acquired content, the user must get the license necessary for using the acquired content. To get this license, the personal computer 22 executes the processing indicated by the flowchart shown in FIG. 37.

This processing is also executed as one of the processing operations corresponding to the functions selected in step S52 shown in FIG. 13.

In step S171, the CPU 221 of the personal computer 22 accesses the Pochara service server 9. In step S172, the CPU 221 requests the Pochara service server 9 for getting the license corresponding to the content ID. This content ID is contained in the content data received in the process of step S132 shown in FIG. 34.

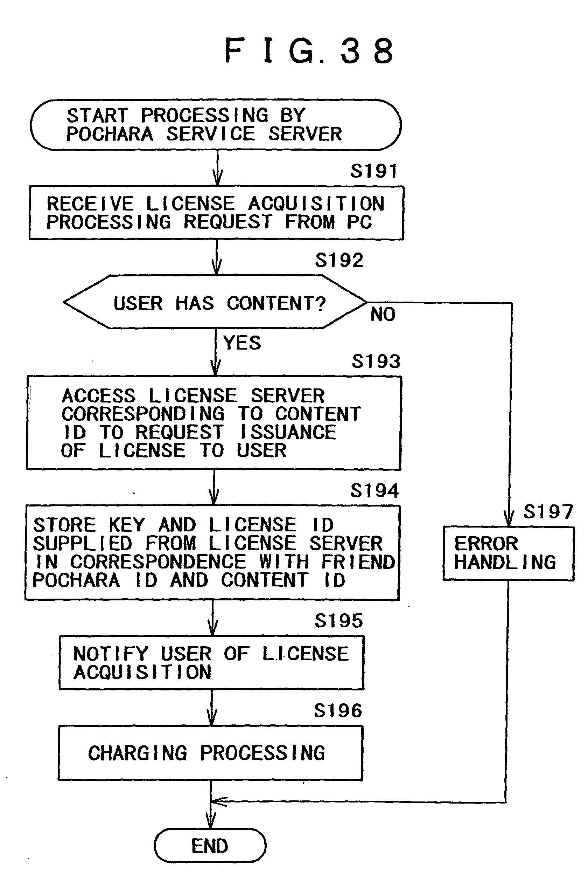

Thus, in response to the request for the license, the Pochara service server 9 accesses the license server to get the license. When the license has been acquired, the Pochara service server 9 notifies the personal computer 22 of the acquisition of the license (steps S194 and S195 shown in FIG. 38 to be described later).

In step S173, the CPU 221 receives the notification of the license acquisition from the Pochara service server 9. The CPU 221 outputs this notification onto the display block of the output block 227. Consequently, the user knows the acquisition of the license.

The following describes, with reference to the flowchart shown in FIG. 38, the processing to be executed by the Pochara service server 9 in response to the license acquisition processing executed by the personal computer 22 shown in FIG. 37.

In step S191, the CPU 121 of the Pochara service server 9 receives the request (the request outputted in step S172 shown in FIG. 37) from the personal computer 22 for license acquisition processing. In step S192, the CPU 121 determines whether the user has the content. If the user has the content, the access information for accessing this content is stored in the Pochara database 10 (step S152 shown in FIG. 36). Therefore, on the basis of this access information, the CPU 121 can determine whether the user has the content.

If the user is found having the content in step S192, then the procedure goes to step S193, in which the CPU 121 accesses the license server corresponding to the content ID to request the issuance of the license to the user. If the user is found already acquiring the content in step S152 shown in FIG. 36, the address of the license server for the use of that content is also stored in the Pochara database 10. The address of the license server for issuing the license is also registered.

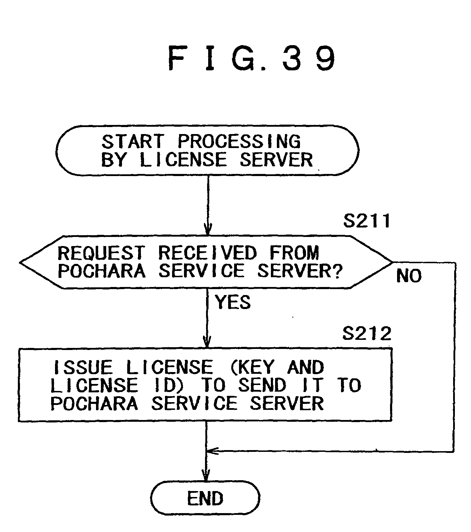

In response to the request from the Pochara service server 9 for the issuance of the license, the license server 8 issues the license and sends it to the Pochara service server 9 (step S212 shown in FIG. 39 to be described later).

In step S194, the CPU 121 stores the crypto key (the key for decoding the encrypted content) and the license ID received from the license server 8 into the Pochara database 10 in correspondence with the friend Pochara ID and the content ID.

Next, in step S195, the CPU 121 notifies the user (or the personal computer 22) of the acquisition of the license.

In step S196, the CPU 121 executes the charging processing for the license acquisition processing. Namely, the CPU 121 requests the charging server 13 for the settlement of the price of the license. In response to this request, the charging server 13 executes the settlement processing.

If the user is found not having the content in step S192, then the procedure goes to step S197, in which error handling is executed. Namely, in this case, because the user does not have the content, it is not necessary to get the license. Therefore, error handling is executed. To be more specific, the CPU 121 sends an error message to the personal computer 22. In step S173, the personal computer 22 receives the error message, not the notification of license acquisition.

In response to the access from the Pochara service server 9, the Pochara service server 9 executes the processing indicated by the flowchart shown in FIG. 39.

In step S211, the CPU 121 of the license server 8 determines whether the request for license issuance has been received from the Pochara service server 9. If the request for license issuance is found received, then the procedure goes to step S212, in which the CPU 121 reads the license (the crypto key for decoding encrypted content and the license ID) corresponding to the content ID included in the request from the storage block 128 and sends the license to the Pochara service server 9.

If the request for license issuance is found not made from the Pochara service server 9 in step S211, then the processing of step S212 is not executed.

As described above, having acquired the content and its license, the user is ready for using (or reproducing) the acquired content.

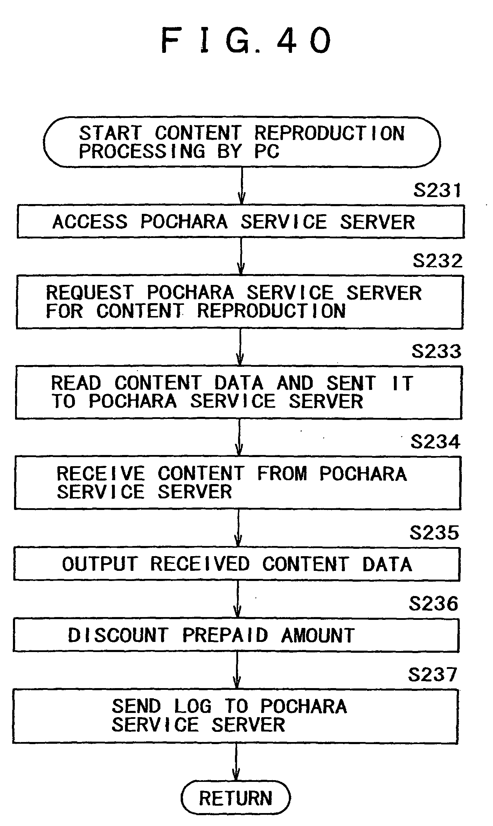

The following describes the processing of this case with reference to the flowchart shown in FIG. 40.

The processing of this case is also executed as one of the processing operations corresponding to the functions selected in step S52 shown in FIG. 13 by mounting the friend Pochara figure 161 on the platform 23.

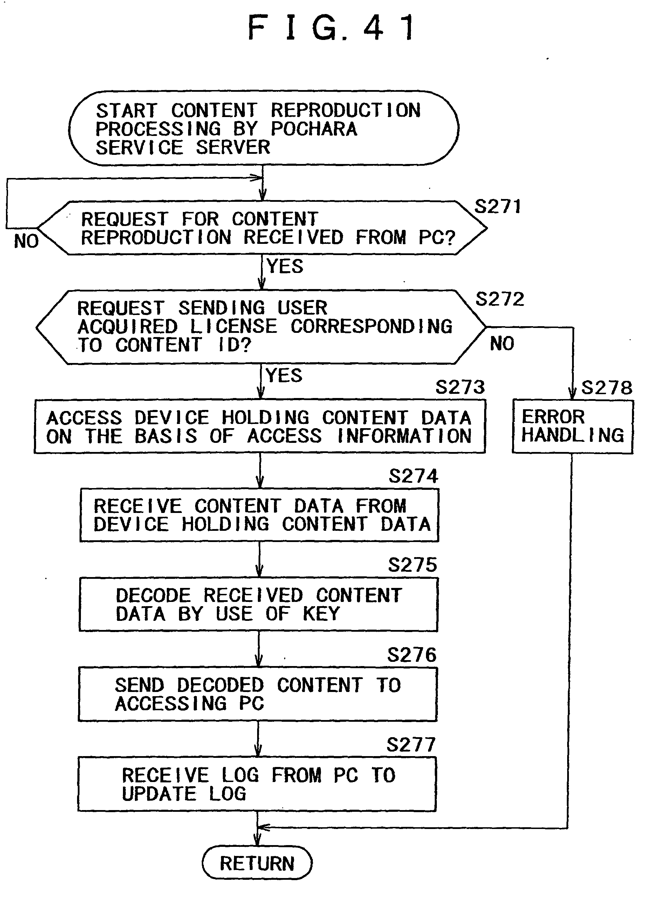

In step S231, the CPU 221 of the personal computer 22 accesses the Pochara service server 9. In step S232, the CPU 221 specifies the content ID to request the Pochara service server 9 for content reproduction. In response to this request, the Pochara service server 9 accesses the access destination holding the content data to get it if the user has the content and its license. In this example, the content data is held in the personal computer 22, so that the Pochara service server 9 requests the personal computer 22 for the transmission of the content data (step S27 shown in FIG. 41 to be described later). Receiving this request in step S233, the CPU 221 reads the content data of the specified access destination and sends the content data to the Pochara service server 9.

The Pochara service server 9 decodes the received encrypted content data by use of the crypto key and sends the decoded content data (step S275 and S276 shown in FIG. 41 to be described later).

In step S234, the CPU 221 receives the content data from the Pochara service server 9. As described above, this content data is already decoded. Therefore, the personal computer 22 need not hold the crypto key and need not execute the decode processing by use of the crypto key. As a result, the reproduction of content becomes easy with mobile devices, such as mobile phones and PDAs (Personal Digital Assistants), on which it is difficult to execute complicated processing due to the importance of mobility.

In step S235, the CPU 211 outputs the content received by the process of step S234 to the display block and speaker of the output block 227. Consequently, the user can view and listen to the content.

Next, in step S236, the CPU 221 executes the processing of reducing the prepaid amount. This processing is executed on the IC chip 171 of the friend Pochara figure 161 in the same manner as on the IC chip 191 of the sale Pochara figure 181.

If the IC chip 171 stores no prepaid amount, this processing is skipped.

In step S237, the CPU 221 sends the reduced prepaid amount and the log including the reproduction count to the Pochara service server 9. On the basis of this log, the Pochara service server 9 updates the Pochara database 10 (step S109 shown in FIG. 29 mentioned above).

In response to the processing indicated by the flowchart shown in FIG. 40 by the personal computer 22, the Pochara service server 9 executes the processing indicated by the flowchart shown in FIG. 41 as one of the processing operations corresponding to the functions selected in step S102 shown in FIG. 28.

In step S271, the CPU 121 of the Pochara service server 9 waits until the request (including the content ID) for content reproduction comes from the personal computer 22. Having receiving this request, the CPU 121 determines whether the requesting user has the license corresponding to the content ID in step S272. This determination can be made by determining whether the license ID is registered on the Pochara database 10 in correspondence with the content ID included in the request sent from the personal computer 22. Obviously, in this case, at least one of the Pochara ID and the user ID was sent from the personal computer 22 in the process of step S43 shown in FIG. 12 and has already been received by the Pochara service server 9 in step S91 of FIG. 28.

If the user has the license for the content ID, then the procedure goes to step S273, in which the CPU 121 accesses the source having the content data on the basis of the access information in step S273. As described with reference to FIG. 34, when the device (in this case, the personal computer 22) had acquired the content data by use of the friend Pochara and stored the acquired content data in its incorporated storage block, this device sent the access information for accessing the content data to the Pochara service server 9 (step S134 shown in FIG. 34) and the Pochara service server 9 registered the received access information on the Pochara database 10 (step S152 shown in FIG. 36). Therefore, the CPU 121 can get the content data on the basis of this access information. To be more specific, in this case, the CPU 121 accesses the personal computer 22 to request the reading of the content data from the storage block 228.

In response to this request, the personal computer 22 reads the content data from the position (the storage block 228 specified by the access destination information) specified by the Pochara service server 9 and sends the content data (step S233 shown in FIG. 40). In step S274, the CPU 121 receives the content data from the device having the content data. In this case, the CPU 121 receives the content data from the personal computer 22 (obviously, if the content data is held in a device other than the accessing personal computer 22, the CPU 121 accesses the device to receive the content data).

In step S275, the CPU 121 decodes the content data received from the personal computer 22 by use of the crypto key. This crypto key is obtained as a license necessary for the reproduction of the content and stored in the Pochara database 10 (step S194 shown in FIG. 38).

Next, in step S276, the CPU 121 sends the content decoded in step S275 to the accessing personal computer 22 (the device at which the friend Pochara character 311 is currently located). As described above, this content data is received by the personal computer 22 and outputted therefrom (steps S234 and S235 shown in FIG. 40).

Thus, storing the crypto key in the Pochara service server 9 prevents the crypto key from getting outside the system, so that there is a low risk for the crypto key to be stolen. As a result, it becomes difficult for the encrypted content to be decoded by the third party, thereby enhancing the security of the system.

Then, when the content reproduction ends, log information comes from the personal computer 22 (step S237 shown in FIG. 40). In step S278, the CPU 128 receives the log from the personal computer 22 to update the information in the Pochara database 10 on the basis of the received log. This log contains the number of times content may be reproduced and the prepaid amount after reduction.

If the license for the content ID is found not acquired by the user who sent the request in step S272, then the procedure goes to step S278, in which the CPU 121 executes error handling (namely, in this case, an error message is sent to the personal computer 22). The personal computer 22 receives this error message instead of the content in step S234 and outputs the received error message to the output block 227 to display it.

It should be noted that, in the above-mentioned configuration, the Pochara service server 9 decodes the encrypted content data. Alternatively, the Pochara service server 9 may send the crypto key to the personal computer 22 to make it decode the encrypted content data.

Thus, the encrypted content data can be downloaded without restriction from content servers via the friend Pochara functioning an agent of the user and the downloaded encrypted content can be copied via the friend Pochara. When content data is copied, its storage location is registered on the Pochara database 10. When the reproduction of the copy is directed, the friend Pochara references the storage location registered on the Pochara database 10 to provides the copy content to the user. Therefore, the user can view the copy content, copy it further to another device, and reproduce in a streaming manner. It should be noted that its reproduction always requires friend Pochara.

It should be noted that encryption of content with different crypto keys every time content is copied or reproduced minimizes the damage caused by a stolen crypto key. This consequently enhances the security of the system.

Logging in the Pochara service server 9 can also be made by entering the ID and password assigned to the user, rather than mounting the friend Pochara figure 161 on the platform 23. In this case, however, a third party may steal the ID and the password to masquerade as the authentic user, thereby accessing the Pochara service server 9. If this happens, when the authentic user (the user having the friend Pochara figure 161) is logging in the Pochara service server 9 from a predetermined device on the network by use of the friend Pochara figure 161, the Pochara service server 9 displays only the silhouette (the black shadow) of the friend Pochara figure 161 to the masquerading user, thereby telling him that the friend Pochara character is being used on another device. Namely, this makes the masquerading user intuitively understand that the access to the Pochara service server 9 is exclusive.

Consequently, the content reproduction by use of the friend Pochara can be executed only on one device on the network, so that the user can comply with the copyright of content without being aware of DRM (Digital Right Management).

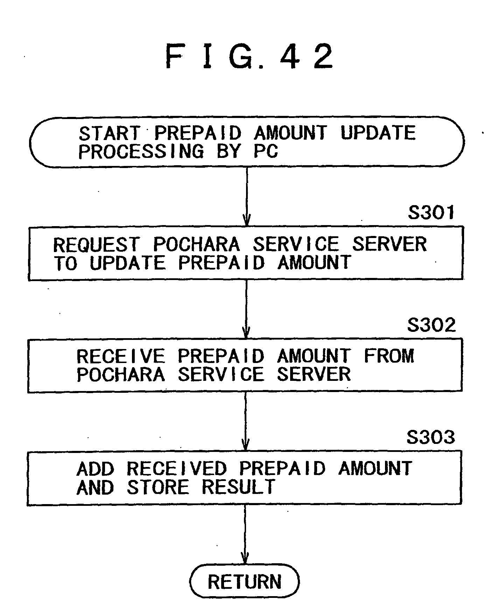

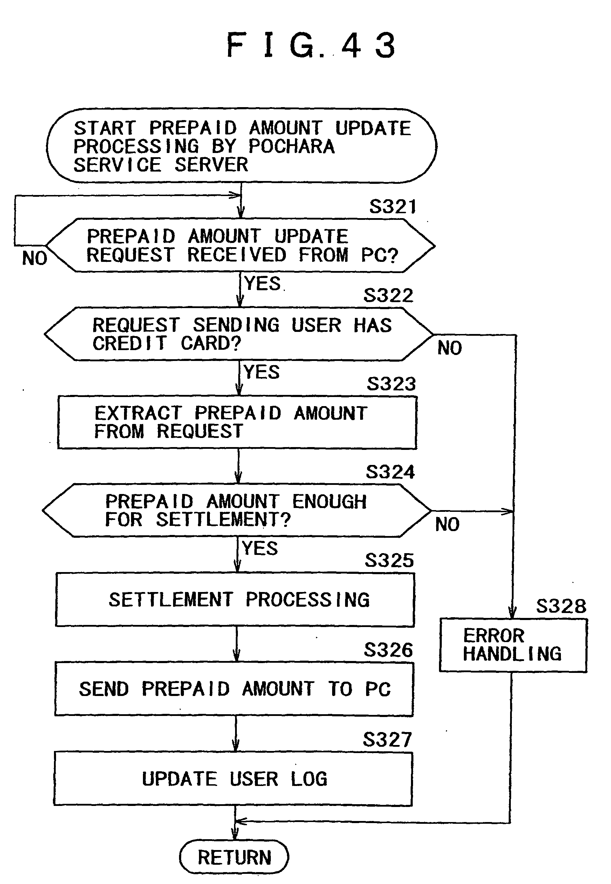

If the prepaid amount (or the reproduction count) is stored in the IC chip 171 of the friend Pochara figure 161 and the stored prepaid amount (or the reproduction count) is reduced every time content is reproduced, the user cannot reproduce (or use) content after the prepaid amount (or the reproduction count) becomes 0 next time. In this case, the user additionally can pay a predetermined amount of money to reproduce content again. The following describes the processing in this case with reference to the flowcharts shown in FIGS. 42 and 43.

The processing indicated by the flowchart shown in FIG. 42 is executed as one of the processing operations corresponding to the functions selected in step S52 shown in FIG. 13.

In step S301, the CPU 221 of personal computer 22 requests the Pochara service server 9 to update the prepaid amount (or the maximum number of times content may be used). In response to this request, the Pochara service server 9 executes the charging processing for the prepaid amount (or the maximum number of times content may be used) and then sends the resultant prepaid amount (or the resultant maximum number of times content may be used) to the personal computer 22 (steps S322 through S326 shown in FIG. 43 to be described later). In step S302, the CPU 221 receives the resultant prepaid amount (or the resultant maximum number of times content may be used). In step S303, the CPU 221 adds the received prepaid amount (or the maximum number of times content may be used) to the prepaid amount (or the maximum number of times content may be used) stored in the IC chip 171 via the reader/writer 241.

Subsequently, the user can reproduce content again within in the range of remaining prepaid amount (or the remaining maximum number of times content may be used).

The Pochara service server 9 executes the processing indicated by the flowchart shown in FIG. 43 in response to the processing by the personal computer 22 indicated by the flowchart shown in FIG. 42.

Namely, this processing is executed as one of the processing operations corresponding to Pochara functions selected in step S102 shown in FIG. 28.

In step S321, the CPU 121 of the Pochara service server 9 waits until a request comes from the personal computer 22 for updating the prepaid amount (or the maximum number of times content may be used). When this request comes, the CPU 121 determines whether the user of this request (the user corresponding to the friend Pochara character 311) uses a credit card in step S322. This determination may be made from the user information registered on the Pochara database 10.

If the user uses a credit card, then the procedure goes to step S323, in which the CPU 121 extracts the prepaid amount (or the maximum number of times content may be used). In step S325, the CPU 121 determines whether the amount of money corresponding to the prepaid amount (or the maximum number of times content may be used) extracted in step S323 is settleable. Namely, the CPU 121 determines whether the prepaid amount is settleable by the credit card. Any amount over a predetermined reference amount is determined to be unsettleable.

If the amount for the prepaid amount is found to be settleable, then the procedure. goes to step S325, in which the CPU 121 executes the settlement processing on that amount. Namely, at this moment, the CPU 121 requests the charging server 13 for the charging processing for the prepaid amount. In response to this request, the charging server 13 executes the charging the prepaid amount to the user's account on the basis of the user's credit card number.

Obviously, this processing may be executed as the processing in which the prepaid amount is charged to user's bank account instead of the credit card.

In step S326, the CPU 121 sends the prepaid amount (or the maximum number of times content may be used) to the personal computer 22. As described above, receiving the prepaid amount (or the maximum number of times content may be used), the personal computer 22 updates the prepaid amount (or the maximum number of times content may be used) of the IC chip 171 of the friend Pochara figure 161 (step S303 shown in FIG. 42).

Next, in step S327, the CPU 121 updates the user log. Namely, the prepaid amount (or the maximum number of times content may be used) owned at that moment is registered on the Pochara database 10.

If the user is found not having a credit card in step S322 or if the prepaid amount is found to be unsettleable in step S324, then, the procedure goes to step S328, in which the CPU 121 executes error handling. Namely, at this moment, the CPU 121 sends a message to the personal computer 22, telling that the prepaid amount cannot be updated.

In step S302 shown in FIG. 42, the personal computer 22 receives this message instead of the prepaid amount. Then, the received message is displayed on the display block of the output block 227. Thus, the user knows that the prepaid amount could not be updated.

It should be noted that the processing for increasing (or updating) the prepaid amount may also be executed on the prepaid amount stored in the IC chip 191 of the sale Pochara figure 181.

In the processing of updating the prepaid amount stored in the IC chip 191 of the sale Pochara figure 181, it is practicable to charge to the friend Pochara. This integrates the settlement of accounts into the friend Pochara, thereby enhancing the convenience of charging.

In this case, the user accesses the Pochara service server 9 by mounting the friend Pochara figure 161 on the platform 23, for example. Then, after displaying a menu, the Pochara service server 9 makes the user select from the displayed menu an item "Pay to the sale Pochara figure (Buy coupon)" for example. When this selection is made, the Pochara service server 9 displays message "Mount the Pochara figure to which you pay on the platform" for example onto the personal computer 22. In response to this message, the user dismounts the friend Pochara figure 161 from the platform 23 and mounts the sale Pochara figure 181 instead. It should be noted that, in this case, the Pochara service server 9 continues the access (or keeps the connection) from the corresponding device.

After updating the prepaid amount for the IC chip 191 of the sale Pochara figure 181, the Pochara service server 9 (or the content server 6) displays a message "Mount the friend Pochara figure on the platform" for example again onto the personal computer 22. When the user mounts the friend Pochara figure 161 on the platform 23 in accordance with this message, the Pochara service server 9 executes, on the basis of the friend Pochara figure 161, the charging processing corresponding to the update processing for the prepaid amount executed on the IC chip 191 of the sale Pochara figure 181.

Alternatively, if content cannot be reproduced by means of the sale Pochara figure 181, the Pochara service server 9 displays a message "Do you pay (by a coupon)?" for example onto the personal computer 22. When "OK" button is operated, the Pochara service server 9 displays a message for prompting the user to replace the sale Pochara figure 181 with the friend Pochara figure 161. When the friend Pochara figure 161 is mounted on the platform 23 instead of the sale Pochara figure 181, the Pochara service server 9 executes the charging processing. Subsequently, the Pochara service server 9 displays a message for prompting the user to mount the sale Pochara figure 181 instead of the friend Pochara figure 161. In accordance with this message, the user mounts the sale Pochara figure 181 on the platform 23. At this moment, the processing for updating the prepaid amount is executed, thereby allowing the user to reproduce content again.

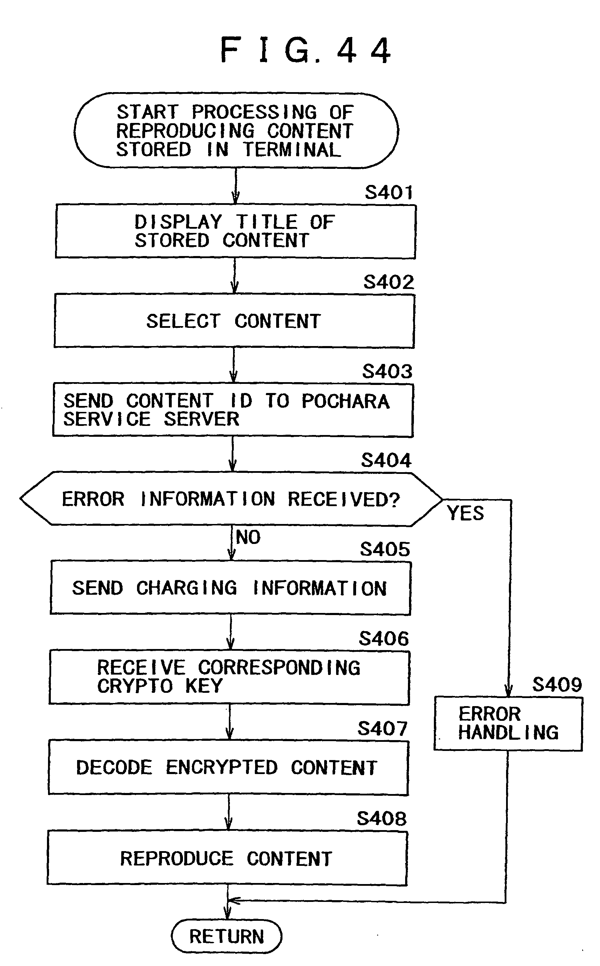

The following describes another processing example for reproducing content stored in a predetermined terminal at that terminal, with reference to the flowchart shown in FIG. 44.

It should be noted that content is assumed to have been stored in the storage block 228 of the personal computer 22 which is a terminal, by the processing indicated by the flowchart shown in FIG. 34 described above for example.

In step S401, the CPU 221 of the personal computer 22 displays the titles (or names) of the stored content onto the display block of the output block 227. Operating the input block 226, the user selects specifies, from among the displayed titles, a predetermined piece of content to be reproduced. In response, the CPU 221 selects the piece of content specified by the user on the basis of the input made through the input block 226 in step S402.

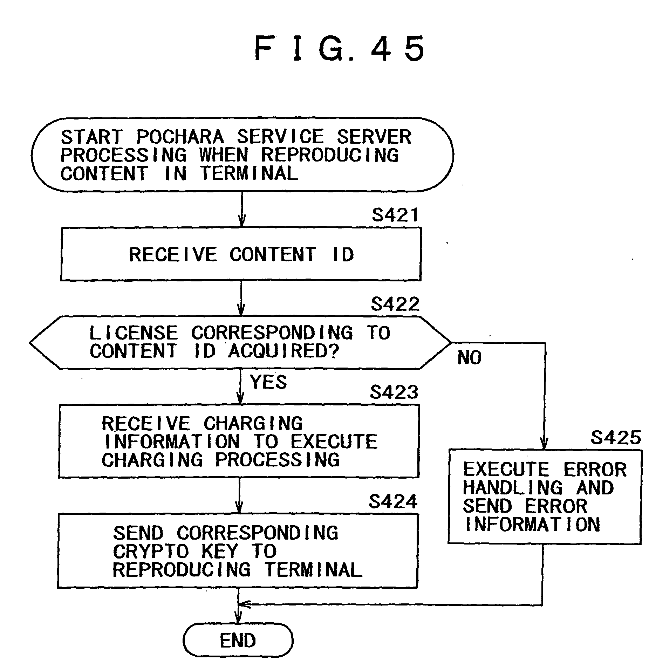

In step S403, the CPU 221 controls the communication block 229 to send the content ID of the content selected in step S402 to the Pochara service server 9. As will be described with reference to FIG. 45, the Pochara service server 9 sends error information (step S425) or a crypto key (step S424) in correspondence with this content ID.

In step S404, the CPU 221 determines whether the error information has been received. If the error information is found received, then the procedure goes to step S409, in which error handling is executed.

If the error information is found not received, then the procedure goes to step S405, in which the CPU 221 gets the charging information necessary for charging processing on the basis of the user input and sends the obtained charging information to the Pochara service server 9.

In step S406, the CPU 221 receives the crypto key (the crypto key sent in step S424) from the Pochara service server 9. In step S407, the CPU 221 decodes the content (encrypted) selected in step S402 by use of the crypto key received in step S406. In step S408, the CPU 221 outputs the content decoded in step S407 to the output block 227.

In response to the above-mentioned processing shown in FIG. 44, the Pochara service server 9 executes the processing indicated by the flowchart shown in FIG. 45.

In step S421, the CPU 121 of the Pochara service server 9 receives the content ID sent from the personal computer 22 (sent in step S403). In step S422, the CPU 121 determines whether the user has the license corresponding to the content ID received in step S421. As described with reference to FIG. 31, the content ID is registered as Pochara information of the friend Pochara and content information and the license ID is registered as license information. On the basis of the Pochara information shown in FIG. 31, the CPU 121 determines whether the license ID is registered in correspondence with the received content ID.

If the license corresponding to the content ID is found acquired in step S422, then the procedure goes to step S423, in which the CPU 121 receives the charging information sent from the personal computer 22 in step S405 to execute charging processing. In step S424, the CPU 121 reads the crypto key corresponding to the license ID and sends the crypto key to the reproducing terminal (in this case, the personal computer 22). As described above, this crypto key is received by the personal computer 22 in step S406.

If the license corresponding to the content ID is found not acquired in step S422, then the procedure goes to step S425, in which the CPU 121 executes error handling. Then, the CPU 121 sends the error information to the personal computer 22.

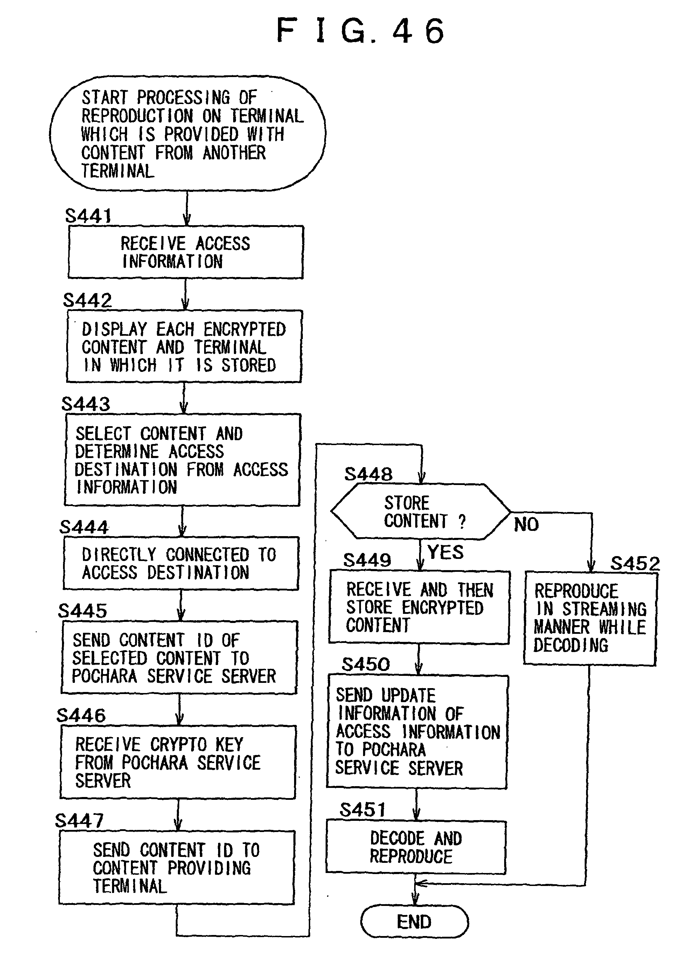

The following describes the processing in which a terminal not storing content reproduces content, with reference to the flowchart shown in FIG. 46.

It is assumed that content be stored in the personal computer 26 and the personal computer 22 reproduce this content.

In step S441, the CPU 221 of the personal computer 22 accesses the Pochara service server 9 to receive the access information of each piece of content registered on the Pochara database 10. As described above, the Pochara database 10 stores the access information as content access destinations (devices holding content). The CPU 221 receives this access information from the Pochara service server 9.

In step S442, the CPU 221 displays a list of encrypted content and terminals in which it is stored, on the basis of the received access information, onto the output block 227. Operating the input block 226, the user selects a predetermined piece of content from among the displayed content. In step S443, the CPU 221 selects the specified piece of content on the basis of the input made through the input block 226 and determines an access destination from the access information of the selected content.

In step S444, the CPU 221 executes the processing of directly connecting to the access destination determined in step S443 by controlling the communication block 229. In this case, the CPU 221 of the personal computer 22 accesses the personal computer 26 in which the content is stored.

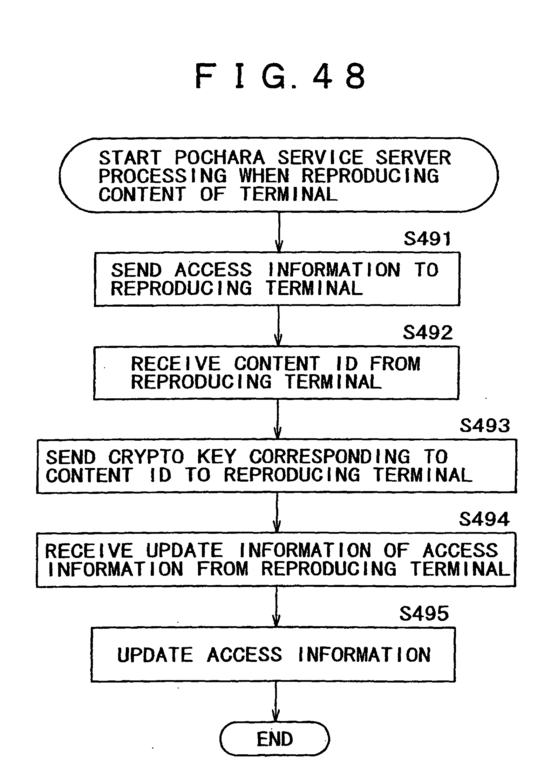

In step S445, the CPU 221 sends the content ID of the content determined (or selected) in step S443 to the Pochara service server 9. As will be described later, the Pochara service server 9 sends back the crypto key corresponding to the content ID (step S493 shown in FIG. 48 to be described later).

In step S446, the CPU 221 receives the crypto key from the Pochara service server 9. In step S447, the CPU 221 sends the content ID to the content providing terminal (in this case, the personal computer 26).

In step S448, the CPU 221 determines whether to store the content. This determination is made on the basis of user input.

If the content is to be stored, the procedure goes to step S449, in which the CPU 221, upon reception of the encrypted content from the personal computer 26, stores it in the storage block 228.

In step S450, the CPU 221 sends the update information of the access information to the Pochara service server 9. Namely, now that the content has been transferred from the personal computer 26 to the personal computer 22, so that the access destination for the content is sent to the Pochara service server 9 such that the subsequent access destination becomes the personal computer 22 (the terminal holding this content becomes the personal computer 22).

In step S451, the CPU 221 decodes the encrypted content stored in the storage block 228 by use of the crypto key received in step S446 to reproduced decoded content. The reproduction output is made through the output block 227.

If the content is not to be stored in step S448, then the CPU 221 decodes the content by use of the crypto key in step S452, reproducing the decoded content through the output block 227 in a streaming manner.

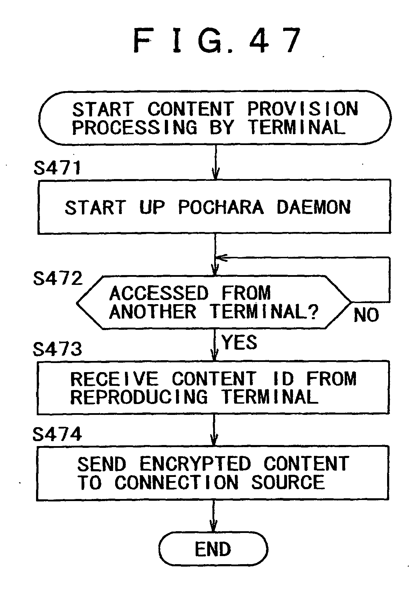

In response to the processing by the personal computer 22 indicated by the flowchart shown in FIG. 46, the personal computer 26 executes the processing indicated by the flowchart shown in FIG. 47.

First, in step S471, the CPU 221 of the personal computer 26 starts up the Pochara daemon. In step S472, the Pochara daemon waits until accessed from another terminal. When an access comes from another terminal, (in this case the access comes, from the personal computer 22), the procedure goes to step S473, in which the content ID is received from the reproducing terminal. In this case, the content ID sent by the personal computer 22 in step S447 is received. In step S474, the CPU 221 of the personal computer 26 sends the encrypted content to the connection source. In this case, the encrypted content is sent to the personal computer 22.

As described above, this encrypted content is stored in the personal computer 22 in step S449 or decoded to be reproduced in a streaming manner in step S452.

The following describes the processing by the Pochara service server 9 to be executed in response to the processing by the personal computer 22 shown in FIG. 46, with reference to FIG. 48.

In step S491, the CPU 121 of the Pochara service server 9 sends access information to a reproducing terminal. Namely, the CPU 121 reads the access information from the Pochara database 10 and sends it to the personal computer 22. As described above, the personal computer 22 receives this access information in step S441.

In step S492, the CPU 121 of the Pochara service server 9 receives the content ID from the reproducing terminal (in this case, the personal computer 22). This content ID is one that was sent from the personal computer 22 in step S445 shown in FIG. 46.

In step S493, the CPU 121 receives the update information of the access information from the reproducing terminal. This update information is one that was sent from the personal computer 22 in step S450 shown in FIG. 46.

In step S495, the CPU 121 registers (or updates) the access information received in step S494 onto the Pochara database 10. Thus, the content has been transferred, so that the access destination of the content registered as the personal computer 26 is changed to the personal computer 22.

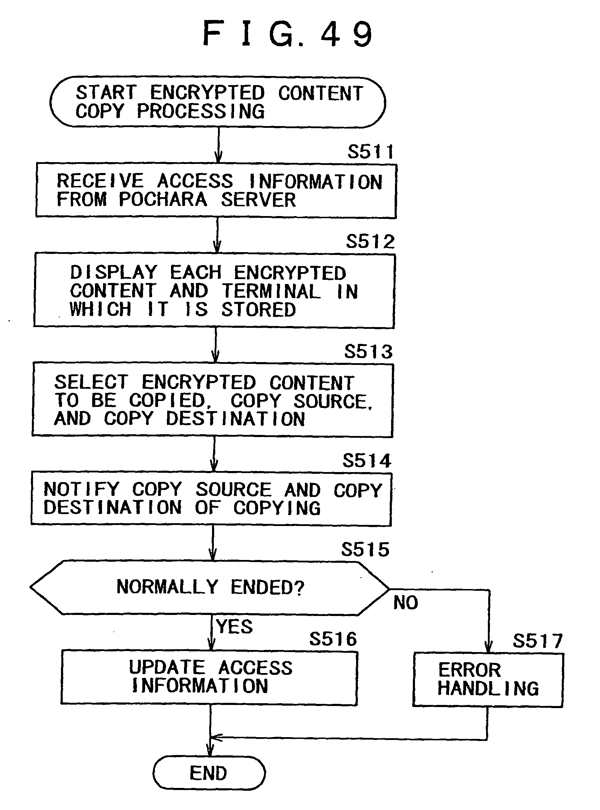

The following describes the processing of copying encrypted content to another device with reference to the flowchart shown in FIG. 49. For example, it is assumed here that the content held in the personal computer 26 be copied to the personal computer 52.

In step S511, the CPU 221 of the personal computer 22 receives access information from the Pochara service server 9. In step S512, on the basis of the access information received in step S511, the CPU 221 outputs a list of encrypted content and terminal in which it is stored onto the output block 227, displaying the list.

Checking the display list, the user specifies the copy source and the copy destination by operating the input block 226.

In step S513, on the basis of the input made through the 226, the CPU 221 selects the encrypted content to be copied and, at the same time, selects the personal computer 26 as the copy source and the personal computer 52 as the copy destination. In step S514, the CPU 221 notifies the copy source and the copy destination of a copy operation to be executed. In this case, because the copy source is the personal computer 26 and the copy destination is the personal computer 52, the notification of a copy operation is sent to both the computers.

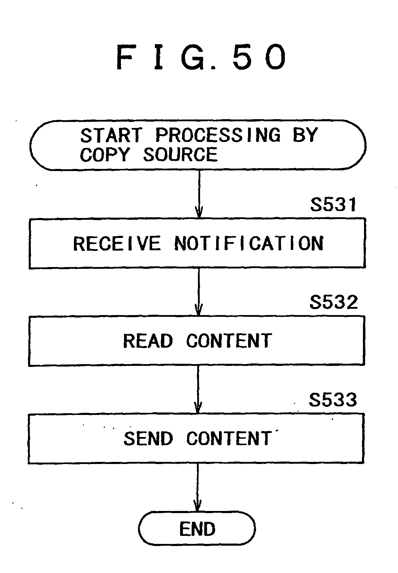

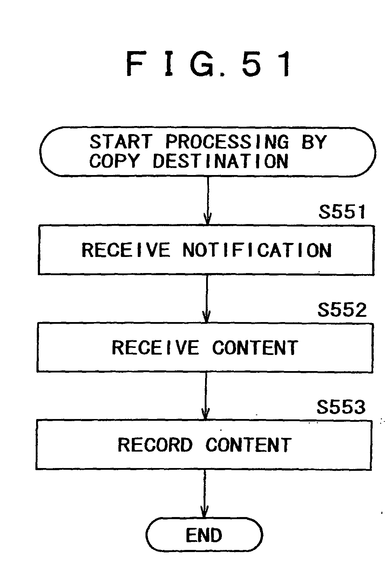

On the basis of this notification, the content is transferred from the copy source to the copy destination to be copied as will be described with reference to the flowcharts shown in FIGS. 50 and 51.

In step S515, the CPU 221 of the personal computer 22 determines whether the copy operation has been normally completed on the basis of a notification from the copy source or the copy destination. If the copy operation is found normally completed, then the procedure goes to step S516, in which the CPU 221 updates the access information. Namely, in this case, because the content has been stored in both personal computers, both the personal computer 26 and the personal computer 52 are registered as access destinations.

If the copy operation is found not normally completed in step S515, then the procedure goes to step S517, in which the CPU 221 executes error handling.

The following describes the processing by the copy source with reference to the flowchart shown in FIG. 50. This processing is executed by the personal computer 26.

In step S531, the CPU 221 of the personal computer 26 receives the notification of a copy operation (or a copy request) issued in step S514 from the personal computer 22. In response, the CPU 221 of the personal computer 26 reads the content from the storage block 228 and sends it to the personal computer 52 through the communication block 229 in step S533. When the transmission has been normally completed, the CPU 221 notifies the personal computer 22 thereof.

FIG. 51 shows the processing by the copy destination to be executed in response to the processing by the copy source. In this case, this processing of the copy destination is executed by the personal computer 52.

In step S551, the personal computer 52 receives the notification of a copy operation (or copy request) issued by the personal computer 22 in step S514. In step S552, the CPU 221 of the personal computer 52 receives the content sent from the personal computer 26 as the copy source in step S33. In step S563, the CPU 221 of the personal computer 52 records the content received in step S552 to the storage block 228. When the reception has been normally completed, the CPU 221 notifies the personal computer 22 thereof.

In the above-mentioned configuration, each processing is executed by mounting the friend Pochara figure 161 or the sale Pochara figure 181 on the platform 23 connected to the personal computer 22 in the room 31 by the user. The present invention is not restricted to this configuration. For example, the user may mount a Pochara figure on the platform connected to any device that the user wants to use. For example, if the function for controlling a television receiver is added in correspondence with the friend Pochara character 311, the user may mount the friend Pochara figure 161 on the platform 25 connected to the television receiver 24 arranged in the room 32 to control the television receiver 24.

Also, for example, it is practicable to mount the friend Pochara figure 161 on the platform 23 to use, in the room 33, the content recorded to the personal computer 22. In this case, the user mounts the friend Pochara figure 161 on the'platform 27 connected to the personal computer 26 arranged in the room 33. At this moment, the Pochara service server 9, which accessed from the personal computer 26, reads the content data from the personal computer 22, decodes the content data, and sends the decoded content data to the personal computer 26. Therefore, the user can use content at any desired locations (by mounting the friend Pochara figure 161 on the platform connected to any device that the user wants to use).

For example, if the user brings the friend Pochara figure 161 to the office 5 and mounts it on the platform 53 connected to the personal computer 52 in the office 5, the personal computer 52 connects to the Internet 1 from the LAN 51 via the ISP 4 and to the Pochara service server 9. Therefore, the user can read the mail sent to his home also at the office 5. Obviously, the user can send mail from the office 5.

Thus, by bringing the friend Pochara figure 161 and mounting it on the platform connected to a device that the user wants to use, the user can get the provision of services associated with friend Pochara functioning as his agent from that device. That device may be the cellular phone 61 for example shown in FIG. 1.

It should be noted however that no platform is connected to the cellular phone 61 and it contains a reader/writer. Therefore, by arranging the friend Pochara figure 161 in the proximity of the cellular phone 61 (or by making the friend Pochara figure 161 contact with the cellular phone 61), the user can access the Pochara service server 9.

Because no platform is connected to the cellular phone 61, the friend Pochara figure 161 cannot be mounted always on the platform. Hence, when access is made from the cellular phone 61 to the Pochara service server 9, the Pochara service server 9 is accessed (or logged in) when the friend Pochara figure 161 is arranged in the proximity of the cellular phone 61; subsequently, if the friend Pochara figure 161 is brought away from the proximity of the cellular phone 61, the access (or connection) to the Pochara service server 9 is kept on.

In a logout sequence, the user displays a menu by appropriately operating buttons of the cellular phone 61, selects an logout item from the displayed menu, and gives a logout command. When this operation is executed, the logout from the Pochara service server 9 is effected.

In the use of the sale Pochara figure 181, the user also arranges the sale Pochara figure 181 in the proximity of the cellular phone 61 (makes the sale Pochara figure 181 contact with the cellular phone 61). In this case, once access (or login) has been made, the access (or connection) is also kept on until the user gives a logout command from the menu.

The CPU incorporated in the cellular phone 61 is generally lower in performance than that used in personal computers, so that the resolution, the number of colors, the number of polygons, and the number of frames for displaying the friend Pochara and sale Pochara characters are each converted to a simple format.

Pochara data may be expressed in XML-base data for example. In addition, it is practicable to display characters by use of Java (trademark). It is still practicable to display characters by use of the i-mode.

If the user carries the friend Pochara figure 161 along with the cellular phone 61, a too large friend Pochara figure 161 hampers the mobility. To circumvent this problem, the size of the friend Pochara figure 161 may be reduced to that of a key that may be held with a key holder for example. The friend Pochara figure 161 of this size may be attached to the strap of the cellular phone 61 like an accessory.

Since the IC chip can be downsized, it is accommodated in the miniaturized friend Pochara figure 161 which can be attached to the strap of the cellular phone 61.

In addition to mobile phones, it is also practicable to access the Pochara service server 9 from PDA, digital still camera, camcorder, video tape recorder, DVD recorder, hard disk recorder, car navigator, or computer game machine, for example.

In the above-mentioned descriptions, the use of content is mainly explained. The friend Pochara which functions as the agent of the user analyzes the user's preferences to generate the recommendation information described with reference to FIG. 31, thereby getting the content preferred by the user from various servers connected to the Internet 1 without waiting for the commands by the user. Consequently, the user can get the recommendation information via the friend Pochara. When a command comes for viewing the recommendation information, the friend Pochara displays the sale Pochara which introduces the content retrieved so far by the friend Pochara. The user can get the presentation of the content retrieved so far as the recommendation information via this sale Pochara. Namely, in this case, a sale Pochara is displayed without the intermediary of the sale Pochara figure 181.

This also holds true when the user accesses the portal site of sale Pochara. In these cases, charging is executed not through the sale Pochara but through the friend Pochara.

In addition, the Pochara ID of sale Pochara may be added to a bookmark to register it as the preference information described with reference to FIG. 31 for example, thereby speeding up the access to the URL of the sale Pochara.

In the above-mentioned configuration, the friend Pochara figure 161 and sale Pochara figure 181 are dolls in appearance; alternatively, they may have a shape of animal, building, or other objects.

Further, for variations to the sale Pochara figure, cover jackets of Compact Disc (CD) and DVD (Digital Versatile Disc) may be used as objects.

In this case, an IC chip is incorporated in each cover jacket (or object). Therefore, when the cover jacket is mounted on the platform, the sale Pochara character corresponding to that cover jacket is displayed on the device connected to the platform. If the cover jacket is that of a CD, the sale Pochara in this case is the character of the singer of songs recorded to the CD as content.

This sale Pochara character has a conversation with the user or introduces the home page of the corresponding singer, for example, in a mimicry manner.

Alternatively, on the basis of a coupon recorded to the IC chip accommodated in the cover jacket, the sale Pochara character lets the user preview the latest release (content) of that singer. This IC chip also stores the explanation of the content recorded to the CD and the singer's promotion information for example, which are introduced by the sale Pochara.

Still alternatively, if the cover jacket is that of a DVD, the hero character of the movie contained in the DVD appears as the sale Pochara. The IC chip of that cover jacket stores the detail information about the production of the movie and coupons for example. On the basis of these coupons, the sale Pochara sells the goods associated with the movie.

Further, a service may be provided in which the right of acquiring content is granted to the sale Pochara and the user purchases this sale Pochara to reproduce content anywhere and anytime. In this case, the IC chip of the sale Pochara stores the service ID indicative of the type of content that the user can acquire. For example, the user who purchases the sale Pochara having the service ID that allows the user to acquire 40 pieces of music can acquire desired 40 pieces of music from among the 2500 pieces of music recorded to the content server.

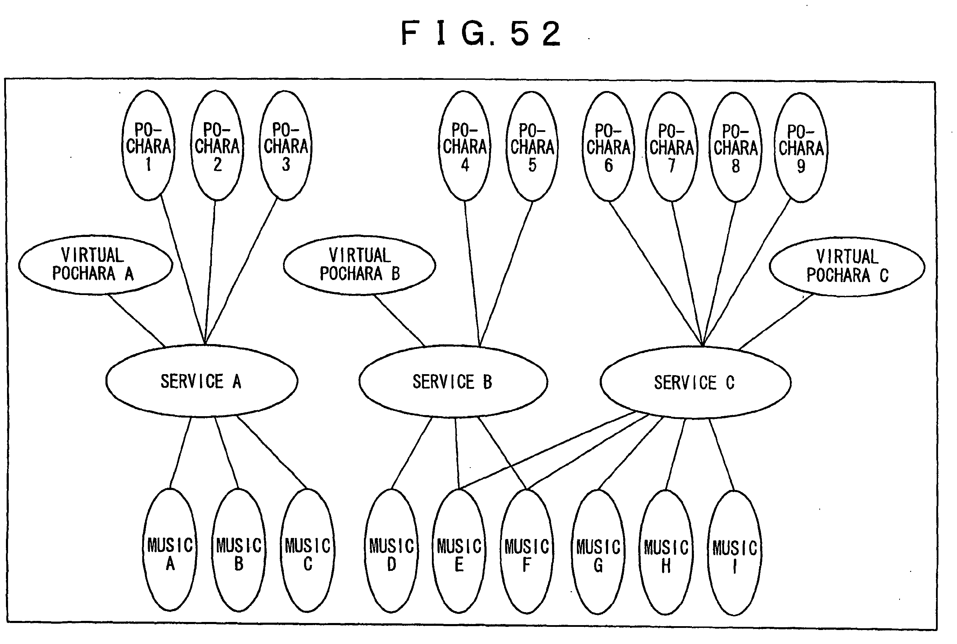

FIG. 52 shows an example of this service. Service A is a service for providing music A through music C. User can get the provision of service A by purchasing any of sale Pocharas 1 through 3. In service A, the image of Pochara which is displayed on the screen of the user's personal computer is virtual Pochara A.

Service B is a service for providing music D through music F. User can get the provision of service B by purchasing one of sale Pochara figures, Pochara 4 and Pochara 5. In service B, the image of Pochara which is displayed on the screen of the user's personal computer is virtual Pochara B.

Service C is a service for providing music E through music I. The user can get the provision of service C by purchasing any of sale Pochara figures, Pochara 6 through Pochara 9. In service C, the image if Pochara which is displayed on the screen of the user's personal computer is virtual Pochara C.

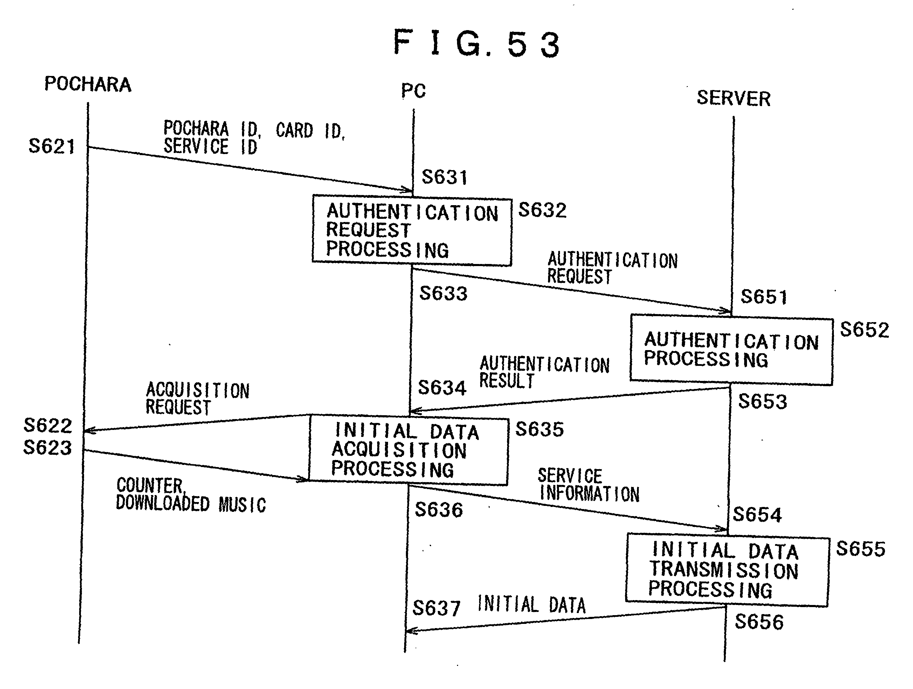

FIG. 53 shows the flow of the processing for acquiring content by use of a sale Pochara figure. In step S611, the user mounts the sale Pochara figure 181 on a platform of the device to be used. For example, if the personal computer 22 is used, the user mounts the sale Pochara figure 181 on the platform 23 connected to the personal computer 22. Then, the Pochara ID, the card ID, and the service ID are transmitted from the IC chip of the sale Pochara figure 181 to the personal computer 22.

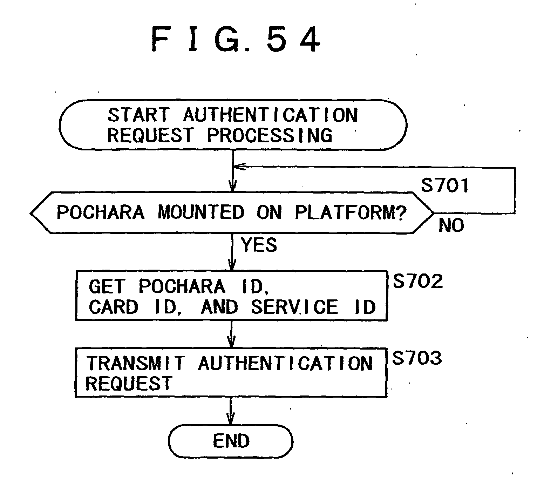

In step S631, the personal computer 22 receives the Pochara ID, the card ID, and the service ID. In step S632, the personal computer 632 executes the authentication request processing to be described later with reference to FIG. 54.

In step S633, the personal computer 22 transmits an authentication request to the content server 6. In step S651, this request is received by the content server 6.

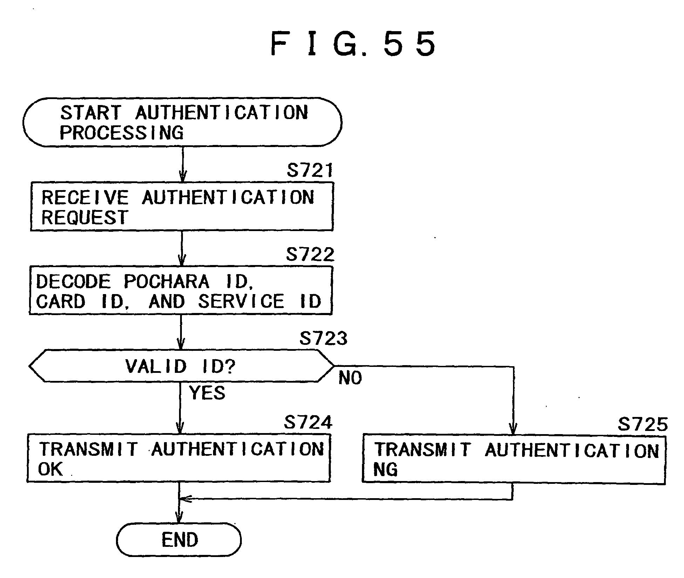

In step S652, the content server 6 executes the authentication processing to be described later with reference to FIG. 55. Consequently, the Pochara is authenticated. In step S653, an authentication result is transmitted to the personal computer 22. In step S634, the authenticating result is received.

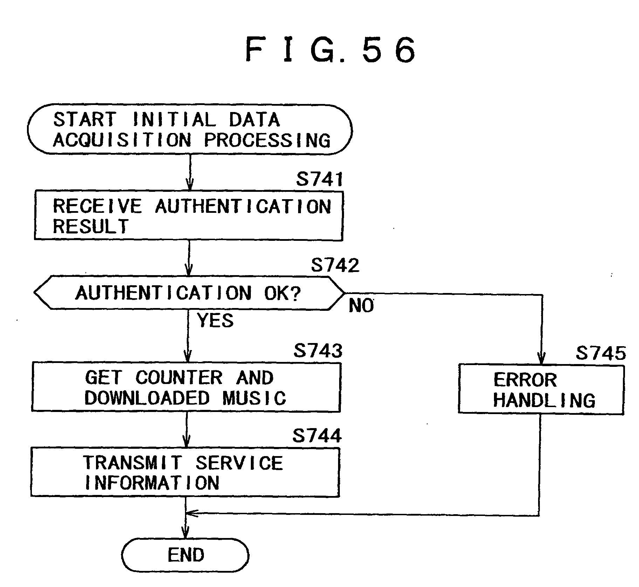

In step S635, the personal computer 22 executes the initial data acquisition processing to be described later with reference to FIG. 56. At this moment, a list of music (content) acquired by use of the sale Pochara figure 181 and a counter value indicative of the number of times download can be made are acquired from the sale Pochara figure 181 (steps S622 and S623). The data acquired here are encrypted. These data can be decoded by the crypto key stored in the content server 6 but cannot decoded on the personal computer 22.

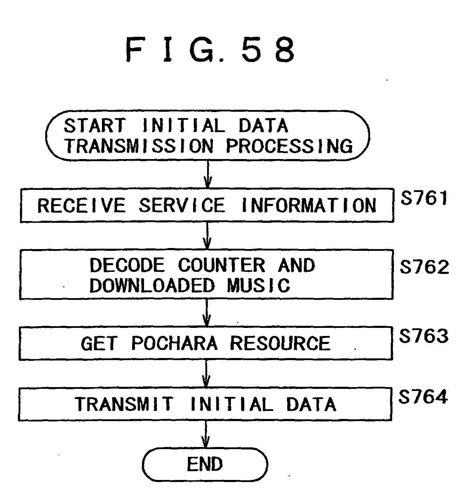

In step S636, the personal computer 22 transmits the data received in step S623 to the content server 6 as service information. In step S654, this service information is received by the content server 6. In step S655, the content server 6 executes the initial data transmission processing to be described later with reference to FIG. 58. Consequently, the list of the music (content) acquired by use of the sale Pochara figure 181 and the counter value indicative of downloadable count are decoded to be stored in the personal computer 22 as the initial data. In step S656, the content server 6 transmits the initial data to the personal computer 22. In step S637, the initial data is received by the personal computer 22.

It should be noted that, if the sale Pochara figure 181 is dismounted from the platform 23, then the connection with the content server 6 is cleared, upon which logout processing is executed.

The following describes the authentication processing of step S631 shown in FIG. 53 with reference to the flowchart shown in FIG. 54. In step S701, the CPU 221 of the personal computer 22 determines whether the sale Pochara figure 181 has been mounted on the platform 23 and waits until it is mounted.

In step S701, if the sale Pochara figure 181 is found mounted on the platform 23, then the procedure goes to step S702, in which the CPU 221 gets the Pochara ID and the service ID of the sale Pochara figure 181. The IC chip of the sale Pochara figure 181 stores the service ID indicative of the type of service (for example, service A) and the card ID for identifying this IC chip, in addition to the above-mentioned Pochara ID. These data are encrypted. In step S702, these data are received as encrypted.

In step S703, the CPU 221 generates an authentication request on the basis of the data acquired in step S702 and transmits the generated request to the content server 6.

Thus, the request for authenticating the sale Pochara figure 181 is transmitted to the content server 6.

The following describes the authentication processing of step S652 of FIG. 53 with reference to the flowchart shown in FIG. 55. In step S721, the CPU 121 of the content server 6 receives the authentication request. In step S722, the CPU 121 decodes the Pochara ID, the card ID, and the service ID by use of the decryption key. This decryption key for decoding the Pochara ID, the card ID, and the service ID is stored in the storage block 128 of the content server 6 in advance.

In step S723, the CPU 121 determines whether the IDs decoded in step S722 are valid or not. This determination is executed as follows. The storage block 128 of the content server 6 stores a database in which the card ID corresponding to the service ID is described. It is determined whether the card ID is the card ID corresponding to this service ID. In addition, the validity of the Pochara ID is checked on the basis of a database having a list of the Pochara IDs of the sold Pochara figures, this database also stored in the storage block 128.

If the Pochara ID is found to be valid in step S723, then the procedure goes to step S724, in which the CPU 121 transmits authentication OK to the personal computer 22 as a result of the authentication. If the Pochara ID is found not to be valid in step S723, then the procedure goes to step S725, in which the CPU 121 transmits authentication NG to the personal computer 22 as a result of the authentication.

The authentication of the sale Pochara figure 181 is executed as described above.

The following describes the initial data acquisition processing of step S635 shown in FIG. 53 with reference to the flowchart shown FIG. 56. In step S741 the CPU 221 of the personal computer 22 receives the authentication result. In step S742, the CPU 221 determines whether the received authentication result is OK or NG. If the authentication result is found to be OK in step S742, then the procedure goes to step S743, in which the CPU 221 gets the counter and the downloaded music.

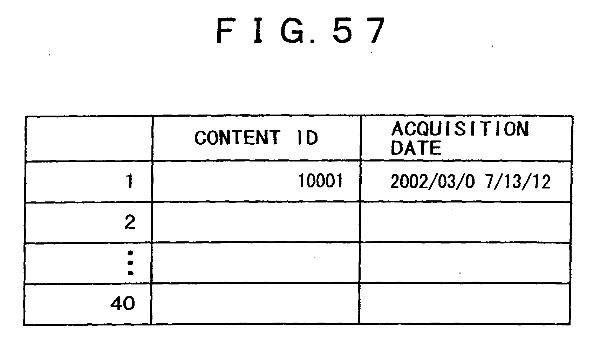

The IC chip of the sale Pochara figure 181 stores the information shown in FIG. 57. The sale Pochara figure 181 is assigned with the service ID having the right for acquiring 40 pieces of music for example. When the content has been acquired, the content ID and the date of acquisition are stored. In this example, the content corresponding to content ID "10001" has been acquired on 13:12, March 7, 2002 and the downloaded music is described as content ID "10001". When one piece of content is acquired (or loaded), the value of the counter indicative of the number of times content may be downloaded is decremented by one. The initial value of the downloadable count is 40. In this example, because one piece of content and its license have already been downloaded, the initial counter value is 39.

It should be noted that the information shown in FIG. 57 is stored in an encrypted state. In step S743, this information is acquired as encrypted.

In step S744, the CPU 221 generates service information by adding predetermined headers to the counter and the downloaded music and transmits the generated information to the content server 6.

On the other hand, if the authentication is found to be not OK, namely, to be NG, in step S742, then the procedure goes to step S745, in which error handling is executed.

Thus, the content ID indicative of the downloaded music and the counter value indicative of the downloadable count stored in the IC chip of the sale Pochara figure 181 are transmitted to the content server 6 as encrypted.

The following describes the initial data transmission processing of step S655 shown in FIG. 53 with reference to the flowchart shown in FIG. 58. In step S761, the CPU 121 of the content server 6 receives service information. In step S762, the CPU 121 decodes the counter and the downloaded music. It should be noted that the decryption key for decoding the counter and the downloaded music is stored in the storage block 128 of the content server 6 in advance.

In step S763, the CPU 221 gets a Pochara resource. The Pochara resource is the data composed of the information about the three-dimensional image of a character to be displayed on the output block of a personal computer, the conversation data of that character, and the information about the name of that character, for example. This data is stored in the storage block 128 of the content server 6 in advance. The Pochara resource exists for each service and is identified in correspondence with each service ID.

In step S764, the CPU 121 attaches predetermined headers to the counter, the downloaded music, and the Pochara resource and transmits these data to the personal computer 22 as the initial data. The transmitted initial data is stored in the storage block 228 of the personal computer 22.

Consequently, the personal computer 22 recognizes the list of acquired (or downloaded) music by use the sale Pochara figure 181 and the downloadable count. Since the information stored in the IC chip of the sale Pochara figure 181 is encrypted, which can be decoded only by the content server 6, the tampering of the information can be prevented more effectively.

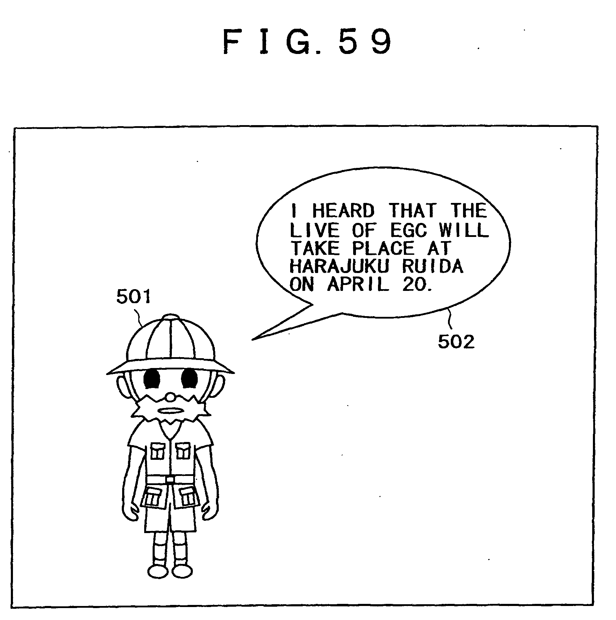

In step S764, an image shown in FIG. 59 is displayed on the display block of the output block 227 of the personal computer 22 on the basis of the received Pochara resource. FIG. 59 shows a virtual Pochara 501 which is used in this service and a balloon 502 as a remark made thereby. Character strings "I heard that the live of EGC will take place at Harajuku Ruida on April 20." are shown in the balloon 502.

By updating the Pochara resource, the service provider can always provide up-to-date information to the user. This allows the user who bought the sale Pochara figure 181 to get the up-to-date information about artists of interest for example. Further, the provision of information can be executed in a manner familiar to the user.

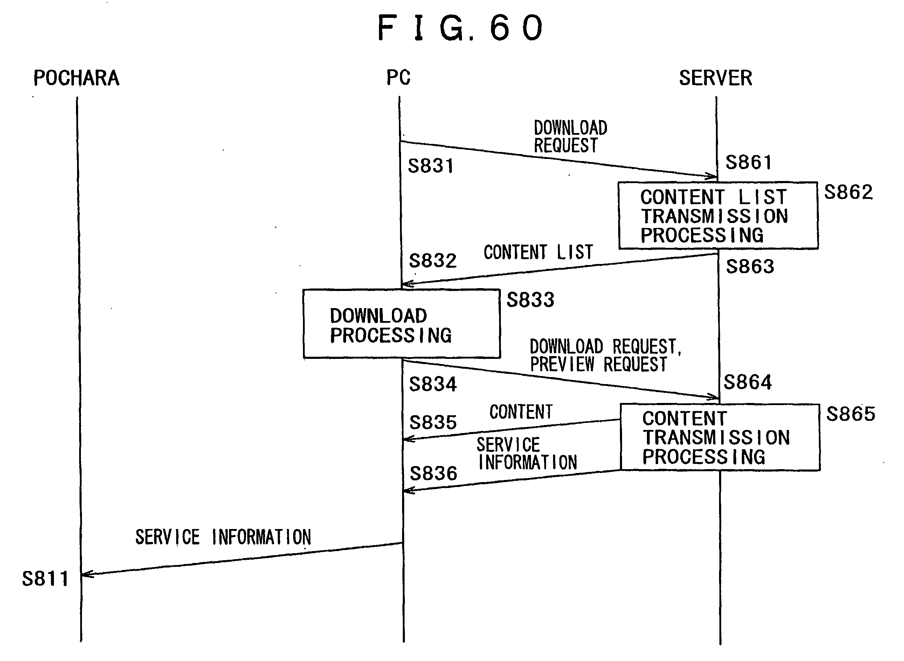

The following describes the flow of the processing for downloading content by use of the sale Pochara figure 181 with reference to FIG. 60. This processing is executed after the above-mentioned processing described with reference to FIG. 53. In step S831, the personal computer 22 transmits a download request to the content server 6. In step S861, this request is received. The transmission of a download request is executed by the user through the input block 226 of the personal computer 22 to enter a predetermined command.

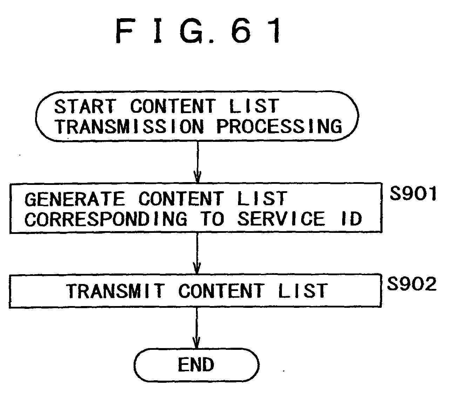

In step S862, the content server 6 executes the content list transmission processing which will be described later with reference to FIG. 61. In step S863, the content server 6 transmits a content list to the personal computer 22. In step S832, this content list is received.

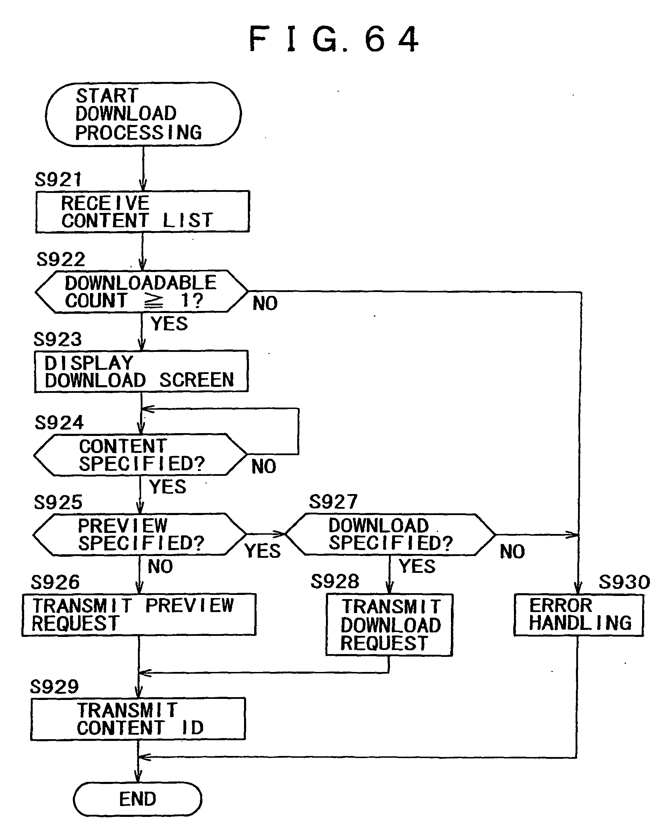

In step S833, the personal computer 22 executes the download processing which will be described later with reference to FIG. 64. Consequently, the content to be downloaded or previewed is specified, which is transmitted to the content server 6. In step S834, the personal computer 22 transmits a download request or a preview request to the content server 6. In step S864, this request is received.

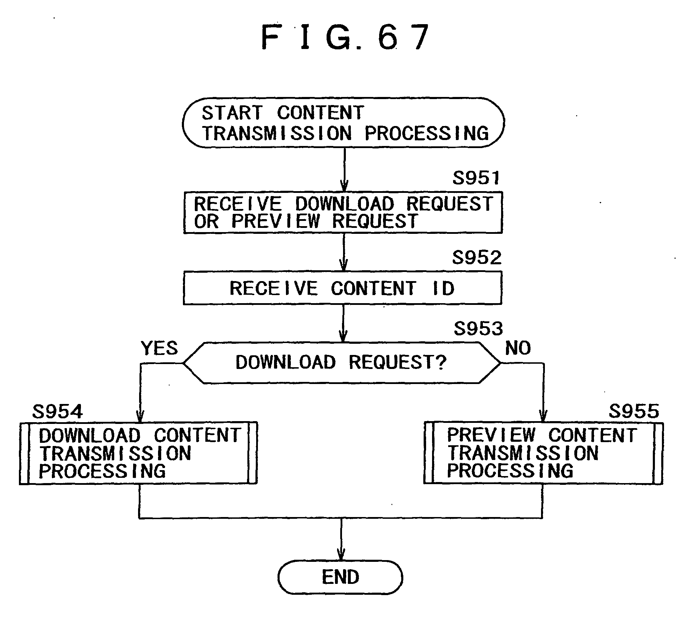

In step S865, the content server 6 executes the content transmission processing which will be described later with reference to FIG. 67. Consequently, the content is transmitted to the personal computer 22. In step S835, the content is received. Also, the service information is transmitted. In step S836, the service information is received by the personal computer 22. In step S811, the service information is received by the sale Pochara figure 181.

The following describes the content list transmission processing of step S862 shown in FIG. 60. In step S901, the CPU 121 of the content server 6 generates a content list corresponding to the service ID.

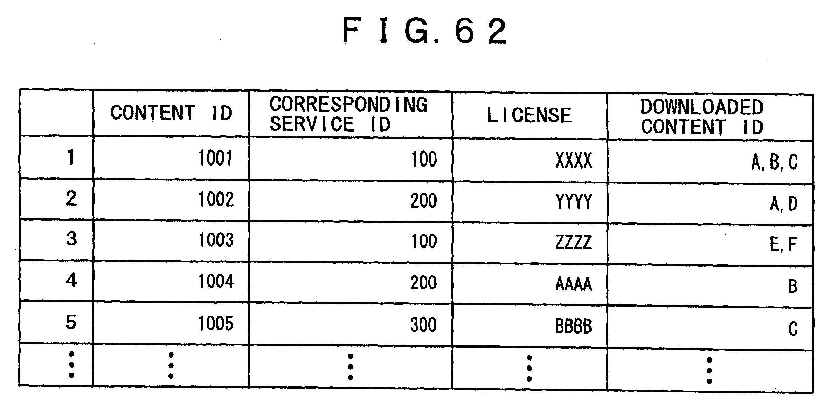

The storage block 128 of the content server stores database as shown in FIG. 62 for example. In this example, the service ID corresponding to the content ID, the license, and the downloaded content are stored. For example, line 1 describes "100" as the service ID corresponding to content ID "1001", which denotes that the sale Pochara having service ID "100" can get the content corresponding to content ID "1001". Line 1 also describes "XXXX" as license, which denotes that the content corresponding to content ID "1001" can be decoded by use of license "XXXX".

For downloaded (Pochara) ID, "A", "B", and "C" are described, which denotes that the sale Pocharas having Pochara IDs "A", "B", and "C" have already downloaded the content corresponding to content ID "1001".

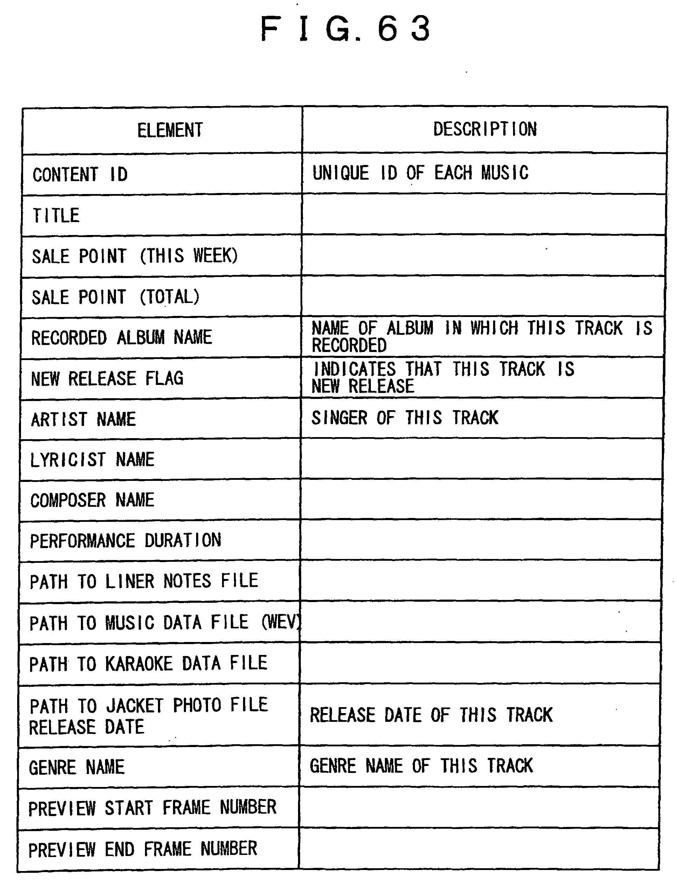

Further, the storage block 128 of the content server stores a database as shown in FIG. 63. This database stores the music title corresponding to the content ID, this week's sale point, the total sale point, the recording album name, and the new release flag indicative whether this music is a new release or not. Also, this database stores the artist name, lyric writer's name, composer's name, and performance duration of this music.

In addition, this database stores the path to the liner notes which introduces this music, the path to the music file (for example, WAV file) of this music, the path to the karaoke data file, and the path to the jacket photograph file. Further, this database stores the release date, genre name, preview start frame number, and preview end frame number of this music.

For example, if the service ID received in step S631 (FIG. 53) is "100", then a content list of the pieces of content corresponding to content ID "1001" and content ID "1003" is generated in step S901. This content lists includes the music names, artist names, recording album names, and sale points of these pieces of content.

In step S902, the CPU 121 transmits the content list to the personal computer 22.

Thus, the list of downloadable music is transmitted to the personal computer 22.

The following describes the download processing of step S833 shown in FIG. 60 with reference to the flowchart shown in FIG. 64. In step S921, the CPU 221 of the personal computer 22 receives a content list. In step S922, the CPU 221 determines whether the downloadable count is not less than 1. The downloadable count is sent from the content server 6 in step S637 (FIG. 53) and acquired by referencing the counter value in the initial data stored in the personal computer 22.

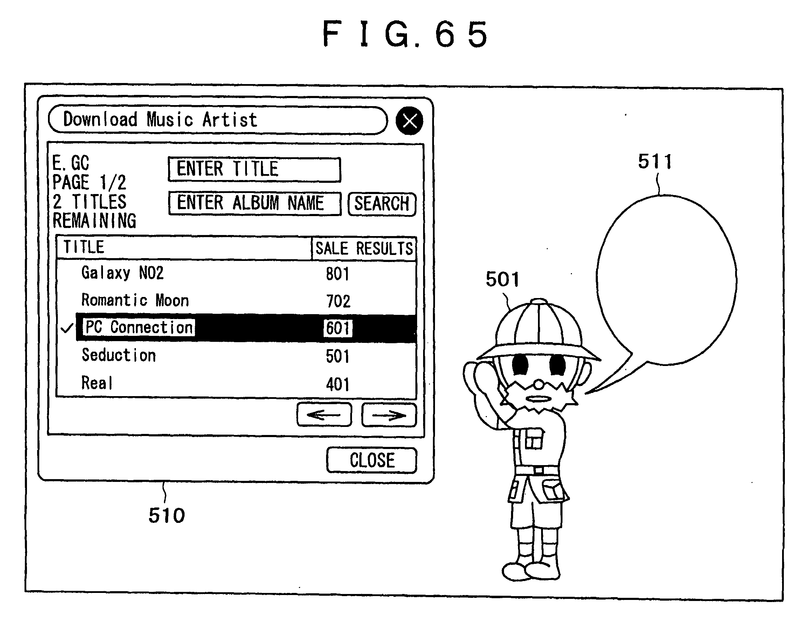

If the downloadable count is found to be not less than 1 in step S922, then the procedure goes to step S923, in which the CPU 221 displays a download screen. At this moment, a screen as shown in FIG. 65 is displayed on the display block of the output block 227. The FIG. 65 shows the virtual Pochara 501 and a balloon 511, a download list screen 510 being shown in the upper left of FIG. 65.

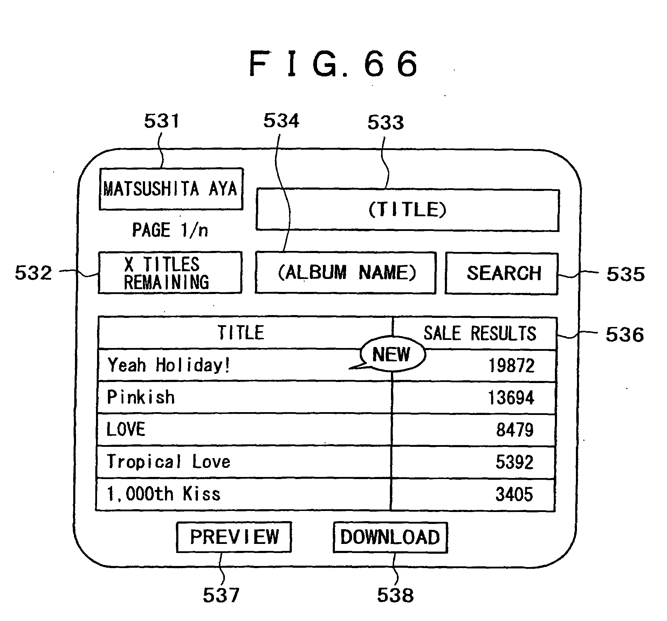

FIG. 66 shows a display example of the download list screen 510. A field 531 shows the artist name of the content to be displayed. The user can enter the name of a desired artist in the field 531 to display in a field 536 the titles and sale results of the content corresponding to the entered artist. In this example, the content associated with "Matsushita Aya" is displayed as a list of titles and sale results.

In this example, the artist name of the content to be displayed is entered in the field 531; it is also practicable that, by entering a genre name in this field, the titles and sale results of the content corresponding to the entered genre are displayed in a field 536.

A field 532 shows a downloadable count (the number of titles of music). In this example, "X Titles" Remaining is shown.

It should be noted that, in this screen, the user can search for desired content (or music titles) by entering a title in a field 533 or an album name in a field 534 and clicking a Search button 535.

Referring to FIG. 64 again, in step S924, the CPU 221 determines whether content has been specified and waits until content is specified. The specification of content is executed by clicking a desired title in the field 536 shown in FIG. 66.

If content is found specified in step S924, then the procedure goes to step S925, in which the CPU 22 determines whether preview has been specified. Preview is specified by clicking a Preview button 537 shown in FIG. 66 for example. If preview is found specified in step S925, then the procedure goes to step S926, in which the CPU 221 transmits a preview request to the content server 6.

If preview is found not specified in step S925, then the procedure goes to step S927, in which the CPU 221 determines whether download has been specified. Download specification is executed by clicking a Download button 538 in FIG. 66, for example. If download is found specified in step S927, then the procedure goes to step S928, in which the CPU 221 transmits a download request to the content server 6.

After the processing of step S926 or S928, the CPU 221 transmits the content ID corresponding to the content specified in step S924 to the content server 6 in step S929.

If the downloadable count is found not equal to or more than 1, namely no more download is permitted in step S922 or download is found not specified in step S927, then the procedure goes to step S930, in which the CPU 221 executes error handling.

Thus, the desired content is downloaded.

The following describes the content transmission processing of step S865 shown in FIG. 60 with reference to FIG. 67. In step S951, the CPU 121 of the content server 6 receives a download request or a preview request. In step S952, the CPU 121 receives a content ID.

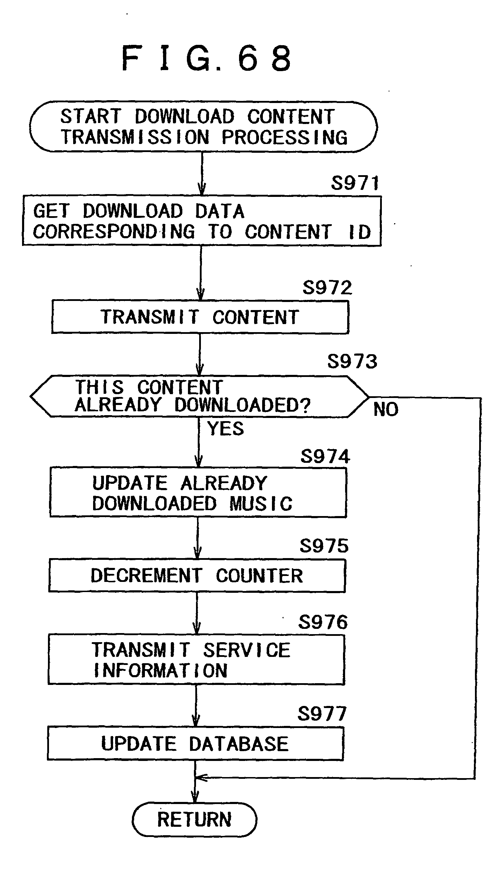

In step S953, the CPU 121 determines whether the data received in step S951 is a download request. If the received data is found to be a download request, then the procedure goes to step S954, in which the CPU 121 executes the downloaded content transmission processing which will be described later with reference to FIG. 68.

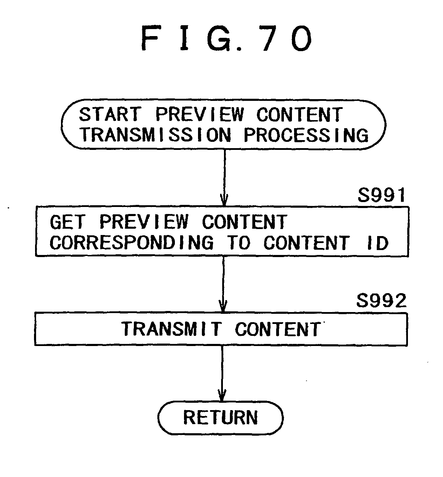

On the other hand, if the received data is found to be not a download request (but a preview request) in step S953, then the procedure goes to step S955, in which the CPU 121 executes the preview content transmission processing which will be described later with reference to FIG. 70.

The following describes the downloaded content transmission processing of step S954 shown in FIG. 67 with reference to FIG. 68. In step S971, the CPU 121 acquires the download data corresponding to the content ID.

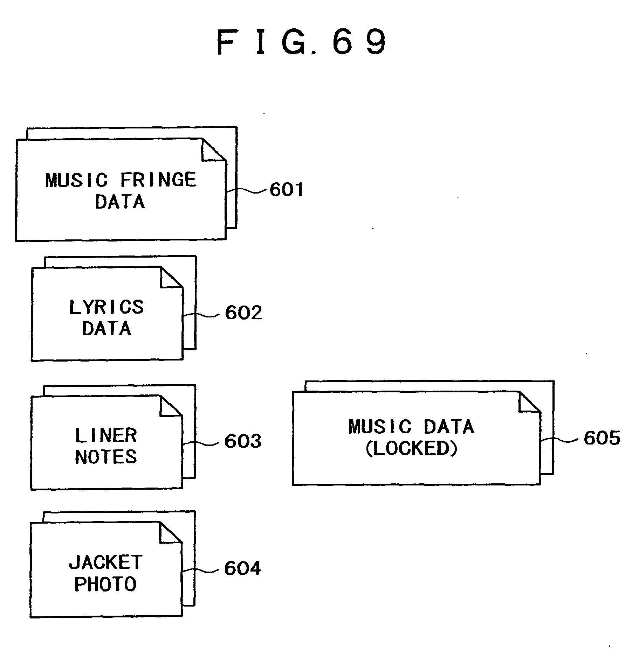

The storage block 128 of the content server stores the data shown in FIG. 69. Music fringe data 601 is a file group in which the lyrics of the music is described. A liner notes 603 is a file group in which comments for introducing the contents of the music are described. A jacket photo 604 is a computer-readable file group (for example, JPEG files) created on the basis of the cover jacket photos of CDs of that music, and music data 605 is a file group (for example, WAV files) of the music. Each of the music fringe data 601 through the music data 605 is configured by a plurality of files, each file being identified in correspondence with each content ID.

As described above, the storage block 128 of the content server stores the database described in FIG. 63. When a content ID is identified, the path of the liner notes file, the path of the music data file, the path of karaoke data (music fringe data and lyrics data), and the path to the jacket photo file, to the identified content ID are identified. In step S971, the CPU 121 identifies the file corresponding to the content ID from among the music fringe data 601 through the music data 605, merges the identified files, and acquires merged files as download data.

In step S972, the CPU 121 transmits the download data acquired in step S971 to the personal computer 22 as the content. The transmitted content is received by the personal computer 22 in step S835 (FIG. 60) to be stored in the storage block 228. It should be noted that the content transmitted at this time is encrypted and stored in the storage block 228 in the encrypted state. The reproduction of the encrypted content requires a key for decoding (or a license), which will be described later.

Also, a download status (for example, "X% downloaded") is displayed in the balloon 511 in the display screen shown in FIG. 65 on the display block of the output block 227 of the personal computer 22 which has received the download data.

In step S973, the CPU 121 determines whether this content has already been downloaded. At this moment, this determination is made on the basis of the downloaded music in the service information acquired in step S654 (FIG. 53).

If this content is found not already downloaded in step S973, then the procedure goes to step S974, in which the CPU 121 updates the downloaded music in the service information acquired in step S654 (FIG. 53). For example, if the content corresponding to content ID "1002" has been transmitted, "1002" is added to the downloaded music.

In step S975, the CPU 121 decrements the counter value in the service information acquired in step S654 (FIG. 53).

I step S976, the CPU 121 transmits the service information updated in steps S974 and S975 to the personal computer 22. The transmitted service information is received by the personal computer 22 in step S836 (FIG. 60). In step S811, the transmitted service information is stored in the IC chip of the sale Pochara figure 181.

In step S977, the CPU 121 updates the database. At this moment, in the database shown in FIG. 62, the downloaded ID is updated. For example, if the content corresponding to content ID "1003" is to be downloaded by use of the sale Pochara of Pochara ID "A", "A" is added to the downloaded ID on line 3.

On the other hand, if this content is found already downloaded, then the processing of steps S974 through S977 is skipped.

Thus, the content to be downloaded is transmitted, with which the information in the IC chip of the sale Pochara figure 181 is also updated.

The following describes the preview content transmission processing of step S955 shown in FIG. 67 with reference to FIG. 70. In step S991, the CPU 121 gets the preview data corresponding to the content ID. At this moment, a file corresponding to the content ID is identified from among the music fringe data 601 through the music data 605 shown in FIG. 69. Predetermined parts of data are extracted from the file on the basis of the preview start frame number and the preview end frame number in the database shown in FIG. 63 and the extracted data are merged as preview data.

It is also practicable to prepare the music fringe data 601 through the music data 605 for the purpose of preview which are relatively low in picture quality or sound quality, from which the file corresponding to the content ID is identified to be merged as preview data.

In step S992, the CPU 121 transmits the preview data acquired in step S991 to the personal computer 22 as content.

Thus, content preview is executed. In preview, the downloadable count (or the counter value) stored in the IC chip of each sale Pochara figure is not decremented, so that the user can preview content any number of times. Also, in the personal computer 22 which has received preview data, data reproduction is executed. At this moment, the contents of the liner notes are displayed in the balloon 511 in the display screen shown in FIG. 65, for example.

The user can reproduce the acquired (or downloaded) content by use of the sale Pochara figure 181. The device for reproduction may be either the device on which the content has been downloaded or another device.

For example, if the personal computer 22 on which content has already been downloaded is to be used, the user mounts the sale Pochara figure 181 on the platform 23 connected to the personal computer 22. If the personal computer 26 on which content has not yet been downloaded is to be used, the user mounts the sale Pochara figure 181 on the platform 27 connected to the personal computer 26. Then, the same processing as described above with reference to FIG. 53 is executed to store the initial data into the personal computer 22 or the personal computer 26.

It should be noted that, in the above-mentioned example, the personal computer 22 or the personal computer 26 is used; but the device to be used is not restricted to those computers.

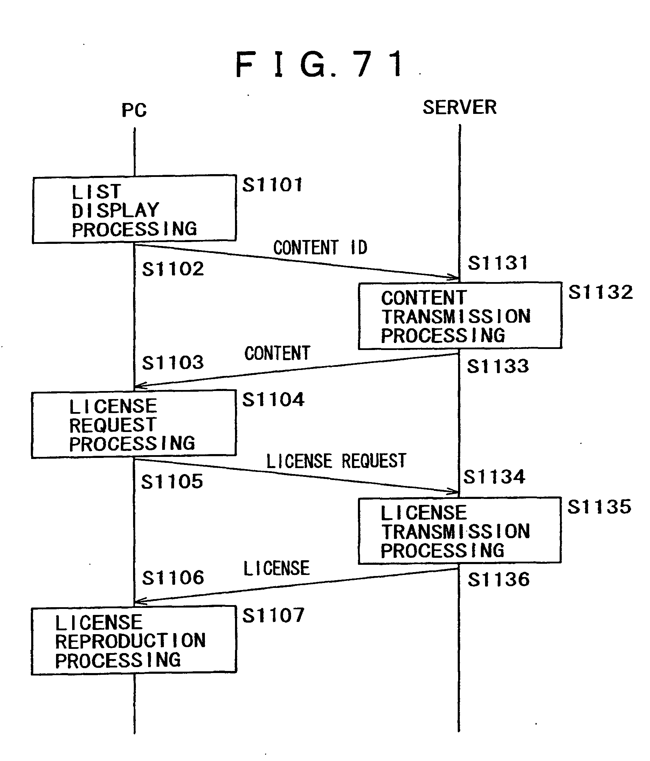

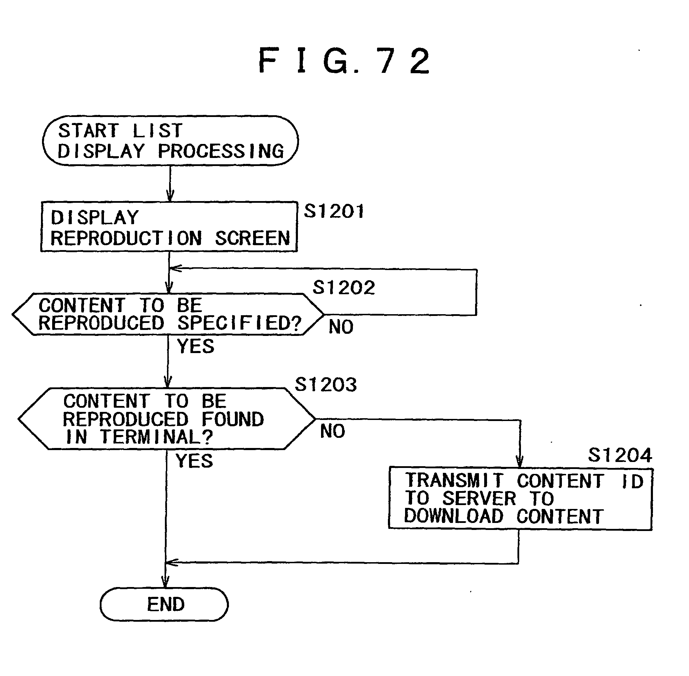

The following describes the flow of the processing of content reproduction with reference to FIG. 71. In step S1101, the personal computer 22 or personal computer 26 executes the list display processing which will be described later with reference to FIG. 72. Consequently, a list of content is displayed and the user specifies desired content to be reproduced. At this moment, the storage block 228 of the personal computer 22 or personal computer 26 is searched for the specified content.

For example, if the personal computer 22 is used, the content is already stored (or downloaded) in the storage block 228; however, if the personal computer 26 is used, its storage block 228 does not store the content.

If the content is not stored in the storage block 228, then the content ID is transmitted from the personal computer 26 to the content server 6 in step S1102. In step S1131, this content is received. In step S1132, the content server 6 executes the content transmission processing corresponding to the content ID. This processing is the same as the content transmission processing described above with reference to FIG. 67, so that its description is skipped. In step S1133, the content server 6 transmits the content to the personal computer 26. In step S1103, the content is received.

On the other hand, if the personal computer 22 is used for example, the content is already stored (or downloaded) in the storage block 228, so that the processing of steps S1102, S1131, S1132, S1133, and S1103 is skipped.

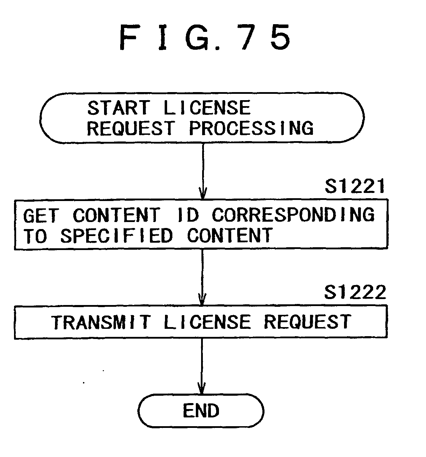

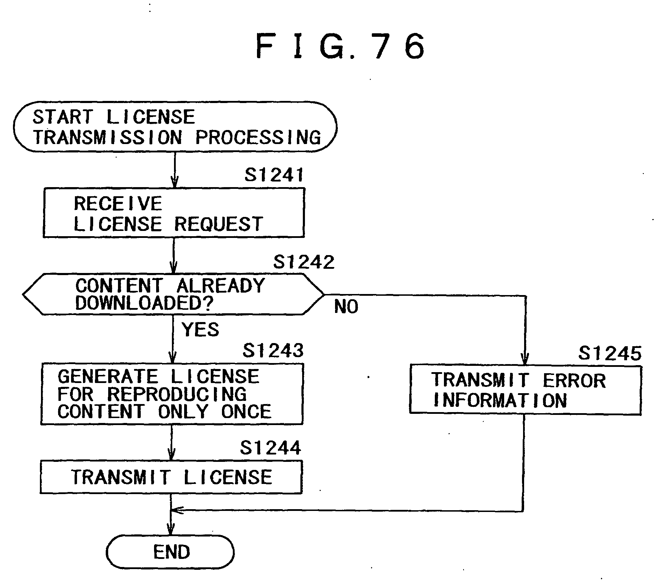

In step S1104, the personal computer 22 or the personal computer 26 executes the license request processing which will be described later with reference to FIG. 75. In step S1105, the personal computer 22 or the personal computer 26 transmits a license request to the content server 6. In step S1134, this license request is received. In step S1135, the content server 6 executes the license transmission processing which will be described later with reference to FIG. 76. Consequently, the license which is a crypto key for decoding the encrypted content is transmitted.

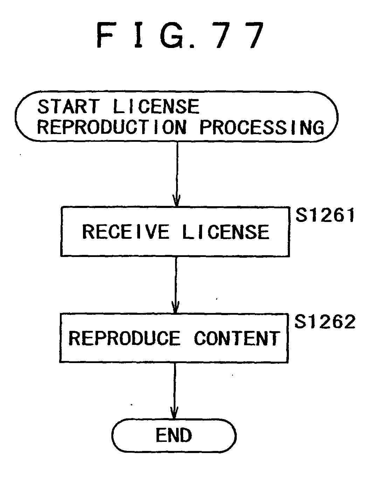

In step S1106, the content server 6 transmits the license to the personal computer 22 or the personal computer 26. In step S1106, this license is received. In step S1107, the personal computer 22 or the personal computer 26 executes the license reproduction processing which will be described later with reference to FIG. 77. Consequently, the content is reproduced.

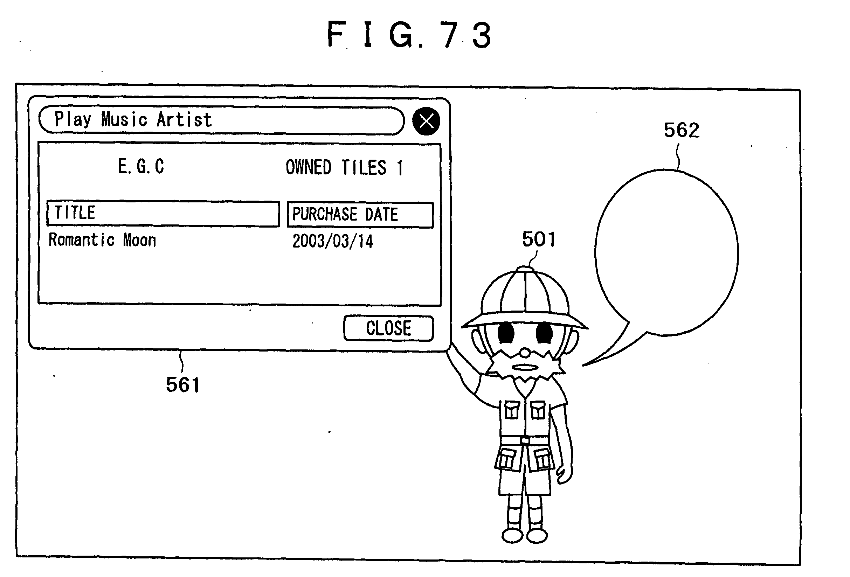

The following describes the list display processing of step S1101 shown in FIG. 71 with reference to the flowchart shown in FIG. 72. In step S1201, the CPU 221 of the personal computer 22 or the personal computer 26 displays the reproduction screen. At this moment, an image as shown in FIG. 73 is displayed on the display block of the output block 227.

FIG. 73 shows the virtual Pochara 501 and a balloon 562 and a reproduction list screen 561 in the upper left.

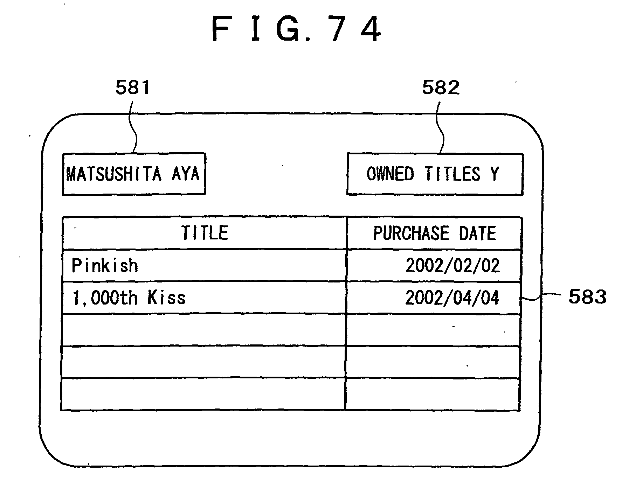

FIG. 74 shows a display example of the reproduction list screen 561. A field 581 shows the artist name of the content to be displayed. By entering a desired artist name in the field 581, the user can display the title and date of purchase (or acquisition) of the content corresponding to that artist in a field 583. In this example, the content associated with artist "Matsushita Aya" is listed in title and date of purchase.

Of the content displayed in the field 538, the title and date of purchase of the content already stored in the storage block 228 are displayed in a highlighted manner and those of the content not stored in the storage block 228 are displayed in an unhighlighted manner.

Title "Pinkish" and the date of purchase "2002/02/02" on line 1 in the field 538 are displayed in an unhighlighted manner, denoting that this content was acquired by the use of the sale Pochara figure 181 but is not stored in the storage block 228 of the currently used personal computer. Namely, this content was downloaded onto another device. Title "1000th Kiss" and the date of purchase "2002/04/04" on line 2 in the field 538 are displayed in a highlighted manner, denoting that this content was acquired by use of the sale Pochara figure 181 and is stored in the storage block 228 of the currently used personal computer.

In this example, the artist name of the content to be displayed is entered in the field 581. It is also practicable to enter a genre, thereby displaying the title and date of purchase of the content corresponding to the entered genre.

A field 582 shows the number of titles owned by the user. The number of titles denotes the number of pieces of content downloaded (or acquired) by use of the sale Pochara figure 181. In this example, the number of titles is "Y".

Referring to FIG. 72 again, in step S1202, the CPU 221 determines whether the content to be reproduced has been specified and waits until the specification is made. The specification of the content to be reproduced is executed by double-clicking a desired title in the reproduction list shown in FIG. 74 by use of the input block 226, for example. If the content to be reproduced is found specified in step S1202, then the procedure goes to step S1203.

In step S1203, the CPU 221 determines whether the content to be reproduced is stored in the terminal (or the device in use). For example, if the content (title "Pinkish") on line 1 in the field 583 shown in FIG. 74 is specified as the content to be reproduced, it is determined that that content to be reproduced is not in the terminal. Then, the procedure goes to step S1204, in which the CPU 221 transmits the content ID corresponding to the specified content to the content server, thereby downloading the content.

At this moment, the content is transmitted from the content server 6 to the personal computer 22 or the personal computer 26. This content transmission processing (step S1132 shown in FIG. 71) is generally the same as the content transmission processing described above with reference to FIGS. 67 and 68; in the present case, however, steps S974 through S977 are skipped because the content is found already downloaded.

On the other hand, if the content (title "1000th Kiss" on line 2 in the field 583 is specified as the content to be reproduced for example, it is determined that the content to be reproduced is in the terminal; therefore the process of step S1204 is skipped.

Thus, the content to be reproduced is specified and, if the specified content is not found in the terminal, the content is downloaded.

The following describes the license request processing of step S1104 shown in FIG. 71 with reference to the flowchart shown in FIG. 75. In step S1221, the CPU 221 of the personal computer 22 or the personal computer 26 gets the content ID corresponding to the specified content. In step S1222, the CPU 221 attaches a predetermined header to the content ID acquired in step S1221 to the license request and transmits it to the content server 6.

Thus, the request for the license for reproducing content is executed.

The following describes the license transmission processing of step S1135 shown in FIG. 71 with reference to FIG. 76. In step S1241, the CPU 121 of the content server 6 receives the license request. In step S1242, the CPU 121 determines whether the content has already been loaded. At this moment, the determination is made by referencing the database shown in FIG. 62.

In step S1243, the CPU 121 generates a license for reproducing the content only once. This license generating processing is executed by use of a technology such as OpenMGX, Windows, or DRM (Digital Rights Management) for example. In step S1244, the CPU 121 transmits the license to the personal computer 22 or the personal computer 26.

Thus, the license which is the key for decoding the encrypted content is transmitted.

The following describes the license reproduction processing of step S1107 shown in FIG. 71 with reference to the flowchart shown in FIG. 76. In step S1261, the CPU 221 of the personal computer 22 or the personal computer 26 receives the license. In step S1262, the CPU 221 decodes the content and reproduces it by use of the acquired license.

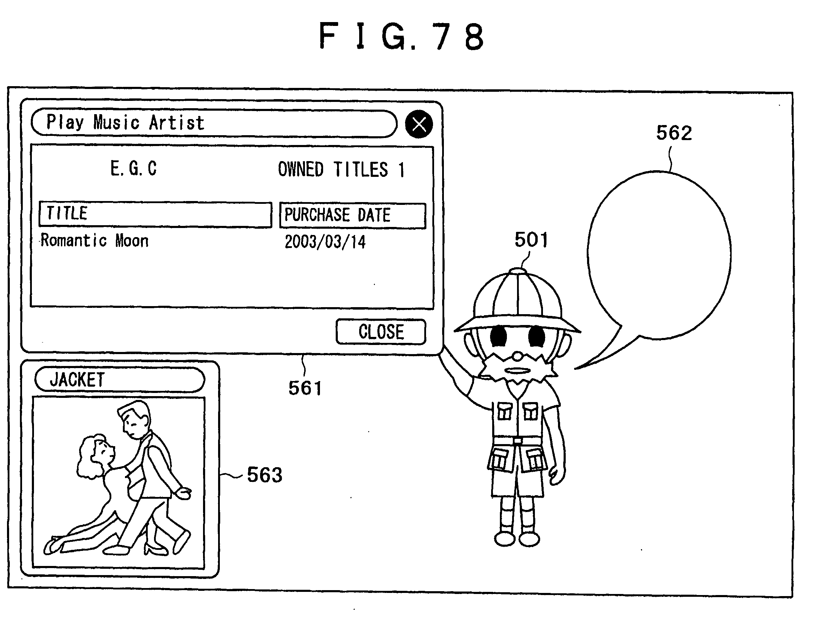

At this moment, the image as shown in FIG. 78 is displayed on the display block of the output block 227 of the personal computer 22 or the personal computer 26. FIG. 78 shows the virtual Pochara 501 and a balloon 562. In the upper left to the virtual Pochara 501, the reproduction list screen 561 is displayed. In the lower left to the virtual Pochara 501, a jacket photograph 563 of this content is displayed. In the balloon 562 in the display screen, the lyric of the content being reproduced is displayed, in synchronization with which the virtual Pochara 501 performs a predetermined action.

Thus, the content is reproduced.

The above-mentioned novel configuration allows the management of the license for content reproduction by the content server 6. Besides, the content is encrypted and therefore its reproduction requires the acquisition of the license by use of the sale Pochara figure 181, so that the unauthorized copy of the content cannot be reproduced, thereby protecting its copyright. On the other hand, the user who purchased the sale Pochara figure 181 can easily reproduce the content only by mounting the sale Pochara figure 181 on the platform. In content reproduction, the ID of the sale Pochara figure 181 is always checked for its validity, so that the copyright of content can be protected more securely.

In the above above-mentioned novel configuration, the license of the acquired content is managed by the content server 6; it is also practicable to store the license in the IC chip of the sale Pochara figure 181 and the license is acquired from the sale Pochara figure 181 for content reproduction. In this case, the user can freely get the content corresponding to the service ID of the sale Pochara figure 181 for content reproduction.

If the use of content is permitted in correspondence with the identification information transmitted from the first information processing device to the second information processing device, the information for enabling the use of content is transmitted from the second information processing device to the first information processing device via a network, thereby realizing a system in which the user can use the content on any first information processing device while protecting the copyright of content.

If the user identification information read from an object is received along with the content identification information from any of other information processing devices and, if the use of content is permitted in accordance with the user identification information, transmitting the information for enabling the use of content to any of other information processing devices over the network allows the user who uses any of other information processing devices to use content while protecting its copyright.

Acquiring user identification information from an object, transmitting the acquired user identification information to other information processing devices, transmitting content identification information to other information processing devices to request for the use of content, and receiving the content transmitted from any of the other information processing device over a network allow the use of content on any device while protecting the copyright of content.

On the basis of agent information stored in the first information processing device, the use of content on the second information processing device is controlled. An access determination result transmitted from the first information processing device is received by the second information processing device. If the determination result indicates that the content cannot be used because no agent exists, the character indicative of the agent is hidden from the display or the agent's non-existence is displayed, thereby allowing the use of content only on one device to realize a system in which the copyright of content can be protected.

Storing agent information associated with the existence of an agent and, on the basis of this agent information, controlling the use of content on any of other information processing devices allow the use of content only on one of other information processing devices, thereby allowing the user to use content while protecting its copyright.

Further, if an access determination result is received from any of other information processing devices and the received determination result indicates that content cannot be used because no agent exists, the character indicative of the agent is hidden from the display or the agent's non-existence is displayed, thereby allowing the use of content with ease and reliability while protecting its copyright without specially considering the management of copyright.

The above-mentioned sequence of processing operations may be executed by software as well as hardware.

When the above-mentioned sequence of processing operations is executed by software, the programs constituting the software are installed in a computer which is built in dedicated hardware equipment or installed, from a network or recording media, into a general-purpose personal computer for example in which various programs may be installed for the execution of various functions.

As shown in FIG. 2 or FIG. 3, these recording media are constituted by not only a package media made up of the magnetic disk 141 or 251 (including flexible disks), the optical disk 142 or 252 (including CD-ROM (Compact Disk Read Only Memory) and DVD (Digital Versatile Disk)), the magneto-optical disk 143 or 253 (including MD (Mini Disk)), or the semiconductor memory 144 or 254 which is distributed separately from the apparatus itself, but also the ROM 122 or 222 or a hard disk included in the storage block 128 or 228 which stores programs and is provided to users as incorporated in the apparatus itself.

It should be noted herein that the steps for describing each program recorded in recording media include not only the processing operations which are sequentially executed in a time-dependent manner but also the processing operations which are executed concurrently or discretely.

It should also be noted that term "system" as used herein denotes an entire apparatus configured by a plurality of component units.

### Industrial Applicability

As described and according to a first invention, a system capable of protecting copyright protection can be realized. Also, the first invention realizes a system in which content can be used on any desired devices.

According to a second invention, content can be used by any other information processing devices while protecting the copyright of content. Further, the second invention allows any other information processing devices to use content.

According to a third invention, content can be used while protecting its copyright. Also, the third invention allows the use of content on any desired devices.

According to a fourth invention, a system capable of protecting the copyright of content can be realized. Also, the fourth invention realizes a system in which content can be used only on one device.

According to a fifth invention, content can be used by other information processing devices. Also, the fifth invention allows the use of content on other information processing devices while protecting the copyright of content.

According to a sixth invention, content can be used while protecting its copyright. Also, the sixth invention allows the user to use content without specially being aware of the protection of copyright.

According to a seventh invention, the user can enjoy content more deeply.

## Claims

1. An information processing system comprising:
an object for holding preset identification information;
a first information processing device which uses content; and
a reading device which, arranged in correspondence with said first information processing device, reads said identification information from said object;
wherein, when said object is mounted on said reading device, said content becomes available on said first information processing device.

2. The information processing system according to claim 1, further comprising:
a second information processing device which, connected with said first information processing device via a network, manages the use of said content in correspondence with said identification information;
wherein said first information processing device transmits said identification information of said object read by said reading device to said second information processing device via said network, and
said second information processing device determines on the basis of said identification information transmitted from the first information processing device whether the use of said content is permitted in correspondence with said identification information and, if the use of said content is found permitted, transmits information for permitting the use of said content to said first information processing device via said network.

3. The information processing system according to claim 1, wherein said object is a figure.

4. An information processing method for an information processing system comprising:
an object for holding preset identification information;
a first information processing device which uses content; and
a reading device which, arranged in correspondence with said first information processing device, reads said identification information from said object;
wherein, when said object is mounted on said reading device, said content becomes available on said first information processing device.

5. An information processing device connected to another information processing device via a network, comprising:
reception means for receiving, from said another information processing device, user identification information for identifying a user read from an object and content identification information for identifying content;
determination means for determining, on the basis of said user identification information and said content identification information received by said reception means whether the use of said content is permitted in correspondence with said user identification information; and
transmission means for transmitting information for permitting the use of said content to said information processing device via said network if the use of said content is found permitted by said determination means.

6. The information processing method according to claim 5, wherein said object is a figure.

7. The information processing device according to claim 5, further comprising:
acquisition means for acquiring access information of accessing said content and, on the basis of said access information, accessing said content to acquire said content;
wherein said transmission means transmits said content acquired by said acquisition means to said another information processing device as information for permitting the use of said content.

8. An information processing method for an information processing device connected to another information processing device via a network, comprising the steps of:
receiving, from said another information processing device, user identification information for identifying a user read from an object and content identification information for identifying content;
determining, on the basis of said user identification information and said content identification information received by said reception step whether the use of said content is permitted in correspondence with said user identification information; and
transmitting information for permitting the use of said content to said information processing device via said network if the use of said content is found permitted by said determination step.

9. A program storage medium storing a computer-readable program for an information processing device connected to another information processing device via a network, said computer-readable program comprising the steps of:
receiving, from said another information processing device, user identification information for identifying a user read from an object and content identification information for identifying content;
determining, on the basis of said user identification information and said content identification information received by said reception step whether the use of said content is permitted in correspondence with said user identification information; and
transmitting information for permitting the use of said content to said information processing device via said network if the use of said content is found permitted by said determination step.

10. A program for making a computer for controlling an information processing device connected to another information processing device via a network, execute the steps of:
receiving, from said another information processing device, user identification information for identifying a user read from an object and content identification information for identifying content;
determining, on the basis of said user identification information and said content identification information received by said reception step whether the use of said content is permitted in correspondence with said user identification information; and
transmitting information for permitting the use of said content to said information processing device via said network if the use of said content is found permitted by said determination step.

11. An information processing device connected to another information processing device via a network, comprising:
acquisition means for acquiring, from an object, user identification information for identifying a user;
transmission means for transmitting said user identification information acquired by said acquisition means to said another information processing device via said network to make said another information processing device authenticate said user;
request means for making a request to said another information processing device for the use of content via said network by attaching content identification information for identifying said content; and
reception means for receiving said content from said another information processing device via said network if said user is authenticated by said another information processing device on the basis of said user identification information transmitted by said transmission means and if said user is found, by said another information processing device, having a license for the use of said content on the basis of said content identification information included in said request made by said request means.

12. The information processing device according to claim 11, wherein said license is stored in said object.

13. The information processing device according to claim 11, wherein said license is stored in said another information processing device.

14. The information processing device according to claim 11, further comprising display means for displaying an image corresponding to said user identification information.

15. The information processing device according to claim 14, wherein said image corresponding to said user identification information is an image corresponding to a shape of said object.

16. The information processing device according to claim 11, wherein said object is a figure.

17. The information processing device according to claim 11, wherein said object is a figure corresponding to said content.

18. The information processing device according to claim 11, wherein said object stores information about content which is usable by said user.

19. The information processing device according to claim 11, further comprising:
read means for reading said user identification information from said object when said object is mounted on said read means;
wherein said acquisition means acquires said user identification information read by said read means.

20. The information processing device according to claim 19, wherein said read means is arranged independently of said information processing device.

21. The information processing device according to claim 20, further comprising:
detection means for detecting the removal of said object from said read means;
wherein, when the removal of said object from said read means is detected by said detection means, said transmission means transmits a signal indicative of said removal to said another information processing device via said network.

22. An information processing method for an information processing device connected to another information processing device via a network, comprising the steps of:
acquiring, from an object, user identification information for identifying a user;
transmitting said user identification information acquired by said acquisition step to said another information processing device via said network to make said another information processing device authenticate said user;
making a request to said another information processing device for the use of content via said network by attaching content identification information for identifying said content; and
receiving said content from said another information processing device via said network if said user is authenticated by said another information processing device on the basis of said user identification information transmitted by said transmission step and if said user is found, by said another information processing device, having a license for the use of said content on the basis of said content identification information included in said request made by said request step.

23. A program storage medium storing a computer-readable program for an information processing device connected to another information processing device via a network, said computer-readable program comprising the steps of:
acquiring, from an object, user identification information for identifying a user;
transmitting said user identification information acquired by said acquisition step to said another information processing device via said network to make said another information processing device authenticate said user;
making a request to said another information processing device for the use of content via said network by attaching content identification information for identifying said content; and
receiving said content from said another information processing device via said network if said user is authenticated by said another information processing device on the basis of said user identification information transmitted by said transmission step and if said user is found, by said another information processing device, having a license for the use of said content on the basis of said content identification information included in said request made by said request step.

24. A program for making a computer for controlling an information processing device connected to another information processing device via a network, execute the steps of:
acquiring, from an object, user identification information for identifying a user;
transmitting said user identification information acquired by said acquisition step to said another information processing device via said network to make said another information processing device authenticate said user;
making a request to said another information processing device for the use of content via said network by attaching content identification information for identifying said content; and
receiving said content from said another information processing device via said network if said user is authenticated by said another information processing device on the basis of said user identification information transmitted by said transmission step and if said user is found, by said another information processing device, having a license for the use of said content on the basis of said content identification information included in said request made by said request step.

25. An information processing system having a first information processing device connected to a network and a second information processing device which is connected to said first information processing device via said network and uses content,
said first information processing device comprising:
storage means for storing agent information including information about the existence of an agent; and
control means for controlling the use of said content in said second information processing device on the basis of said agent information stored in said storage means;
said second information processing device comprising:
access means for accessing said first information processing device via said network;
reception means for receiving a determination result for accessing by said access means made on the basis of said agent information; and
display control means for not displaying a character representative of said agent or displaying absence of said character if said determination result received by said reception means indicates that said content cannot be used because of absence of said agent.

26. An information processing method for an information processing system having a first information processing device connected to a network and a second information processing device which is connected to said first information processing device via said network and uses content, said first information processing device storing agent information including information about the existence of an agent, said second information processing device accessing said first information processing device via said network,
wherein said first information processing device determines on the basis of said stored agent information whether said content can be used by said second information processing device and transmits a determination result to said second information processing device;
said second information processing device receives from said first information processing device said determination result for said access made on the basis of said agent information; and
said second information processing device does not display a character representative of said agent or displays absence of said character if said determination result received by said reception means indicates that said content cannot be used because of absence of said agent.

27. An information processing device connected via a network to another information processing device which uses content, comprising:
storage means for storing agent information including information about existence of an agent; and
control means for controlling the use of said content in said another information processing device on the basis of said agent information stored in said storage means.

28. The information processing device according to claim 27, wherein said storage means further stores key information for encrypted content which is obtained by encrypting said content,
wherein, if said agent information stored in said storage means indicates absence of said agent, said control means disables the transmission of said key information to said another information processing device.

29. The information processing device according to claim 27, further comprising:
acquisition means for acquiring access information for accessing said content and accessing said content on the basis of said access information to acquire said content;
wherein said control means transmits said content acquired by said acquisition means to said another information processing device.

30. The information processing device according to claim 27, wherein said storage means further stores access information for accessing said content stored in said another information processing device and said control means transmits said access information to said another information processing device.

31. The information processing device according to claim 27, wherein said storage means further stores key information for encrypted content obtained by encrypting said content and said control means disables the decoding of said encrypted content on the basis of said key information if said agent information stored in said storage means indicates the absence of said agent.

32. The information processing device according to claim 27, wherein said control means disables the transmission of said content to said another information processing device if said agent information stored in said storage means indicates the absence of said agent.

33. The information processing device according to claim 7, further comprising:
reception means for receiving identification information for identifying a user from said another information processing device; and
determination means for determining on the basis of said identification information whether the use of said content in said another information processing device is permitted;
wherein said control means disables the use of said key information if the use of said content is found not permitted by said determination means.

34. An information processing method for an information processing device connected via a network to another information processing device which uses content, comprising the steps of:
storing agent information including information about the existence of a agent; and
controlling the use of said content in said another information processing device on the basis of said stored agent information.

35. A program storage medium storing a computer-readable program for an information processing device connected via a network to another information processing device which uses content, said computer-readable program comprising the steps of:
storing agent information including information about the existence of a agent; and
controlling the use of said content in said another information processing device on the basis of said agent information stored by processing of said storage step.

36. A program for making a computer for controlling an information processing device connected via a network to another information processing device which uses content execute the steps of:
storing agent information including information about the existence of a agent; and
controlling the use of said content in said another information processing device on the basis of said agent information stored by processing of said storage step.

37. An information processing device connected to other information processing devices via a network, comprising:
access means for accessing any of said other information processing devices via said network;
reception means for receiving, from any of said other information processing devices, a determination result for access by said access means on the basis of said agent information; and
display control means for not displaying a character representative of said agent or displaying the absence thereof if said determination result received by said reception means indicates that said content cannot be used because of the absence of said agent.

38. The information processing device according to claim 37, wherein said display control means displays a character representative of said agent if said determination result received by said reception means indicates that said content can be used because said agent exists;
said information processing device further comprising:
transmission means for transmitting update information to any of said other information processing devices to update information about the existence of said agent in any of said other information processing devices if said determination result received by said reception means indicates that said content can be used because said agent exists.

39. The information processing device according to claim 37, wherein said reception means further receives key information for encrypted content obtained by encrypting said content;
said information processing device further comprising:
storage means for storing said encrypted content; and
decryption means for decoding said encrypted content by use of said key information.

40. The information processing device according to claim 37, wherein said reception means receives key information for encrypted content obtained by encrypting said content from first another information processing device of said other information processing devices and receives said encrypted content from second another information processing device of said other information processing devices;
said information processing device further comprising:
decryption means for decoding said encrypted content by use of said key information.

41. An information processing method for an information processing device connected to another information processing device via a network, comprising the steps of:
accessing said another information processing device via said network;
receiving, from said another information processing device, a determination result for access by said access step on the basis of said agent information; and
not displaying a character representative of said agent or displaying the absence thereof if said determination result received by said reception step indicates that said content cannot be used because of the absence of said agent.

42. A program storage medium storing a computer-readable program for an information processing method for an information processing device connected to another information processing device via a network, said computer-readable program comprising the steps of:
accessing said another information processing device via said network;
receiving, from said another information processing device, a determination result for access by said access step on the basis of said agent information; and
not displaying a character representative of said agent or displaying the absence thereof if said determination result received by said reception step indicates that said content cannot be used because of the absence of said agent.

43. A program for making a computer for controlling an information processing method for an information processing device connected to another information processing device via a network execute the steps of:
accessing said another information processing device via said network;
receiving, from said another information processing device, a determination result for access by said access step on the basis of said agent information; and
not displaying a character representative of said agent or displaying the absence thereof if said determination result received by said reception step indicates that said content cannot be used because of the absence of said agent.

44. An object for use in using content by an information processing device, having:
a memory for storing information necessary for enabling the use of said content; and
a shape associated with said content.

45. The object according to claim 44, wherein said object is a figure associated with said content and said memory stores the number of pieces of content which can be acquired by said object.

46. The object according to claim 44 wherein said information necessary for enabling the use of said content includes a license for reproducing said content.

47. The object according to claim 44, wherein, if said information necessary for enabling the use of said content is read by a reading device arranged in correspondence with said information processing device, said content can be used by said information processing device.
